# EUROPEAN PATENT SPECIFICATION

(11) **EP 3 770 208 B1**
(45) Date of publication and mention of the grant of the patent: **07.02.2024**
(21) Application number: 19188098.8
(22) Date of filing: 24.07.2019
(51) Int. Cl.: C08J 11/08

(54) **METHOD FOR DECOLORIZING A COLORED SYNTHETIC OR NON-SYNTHETIC POLAR-POLYMER MATERIAL**
VERFAHREN ZUM ENTFÄRBEN EINES FARBIGEN SYNTHETISCHEN ODER NICHT-SYNTHETISCHEN POLAREN POLYMEREN MATERIALS
PROCÉDÉ DE DÉCOLORATION D'UN MATÉRIAU POLYMÈRE POLAIRE SYNTHÉTIQUE OU NON SYNTHÉTIQUE COLORÉ

(43) Date of publication of application: 27.01.2021
(73) Proprietor: Smart Coloring GmbH, 52074 Aachen (DE)
(72) Inventor: VOS, Hendre, 52074 Aachen (DE); ROBERTZ, Bernd, 52074 Aachen (DE)
(74) Representative: Michalski Hüttermann & Partner Patentanwälte mbB

(56) References cited:
- EP-A1- 1 085 042
- CA-A1- 2 261 304
- DE-A1- 4 333 221
- US-A- 6 036 726

## Description

The present invention relates to a method for decolorizing a colored synthetic or not-synthetic polar-polymer material.

### BACKGROUND OF THE INVENTION

Plastic articles are useful for a wide variety of applications. Furthermore, the recycling of colored plastic articles is even more important than ever before, as the volume of plastics discarded has proliferated in the last few decades. There is a great demand for more and more complex materials to satisfy the different aspects of the packaging industry.

Plastics are for example used extensively for beverage bottles, including bottles for carbonated soft drinks and other liquids. Many of the articles used in this way are colored by various types of pigments or colorants to enhance their appearance or to protect the contents of the bottle from ultraviolet radiation.

There is a great need in the recycling industry for better methods and technologies for removing colorants from plastics. A plastic material that is to be recycled typically is washed, flaked or pelletized, and then supplied to a solid-state reactor in the process of converting waste plastic into various articles. The recycling of colored plastic material leads to dark grey or black, and the one main bottleneck of said recycled granules today is that they must be compounded with virgin material in order to be able to be "recolorized" in their next life. "Recoloring" of such materials often leads to color differences. Recyclers counter this with the addition of other colorants such as titanium dioxide. However, this impairs the physical properties and processability of the plastics, which further restricts their range of application. In particular, further recycling is made much more difficult because additional colorants are added with each cycle, further impairing the physical properties of the polymer. Therefore, there exists a strong need to remove the coloration from many types of plastics.

Several attempts have been made to remove the color from colored plastics. Some methods solubilize the polymer and use additives to improve liquid solid separations after solubilization of the polymer.

Other methods rely on oxidizing or reducing agents to chemically alter the colorant or chromophore in the plastic. For example US 2006/0148914 A1 describes a method for substantially decolorizing a colored thermoplastic, wherein the color is destroyed by an oxidizing the color or reducing the color.

The document US 6 036 726 A describes a process for recycling colored polyamide material comprises the steps of (a) contacting solid colored polyamide material with an organic solvent composition at a temperature effective to dissolve the polyamide, thereby forming a solution containing colorant and dissolved polyamide; and (b) separating colorant from the polyamide. The process can optionally further comprise the step of recovering the colorant, recovering the polyamide, or recovering both the polymer and colorant. The organic solvent composition preferably is selected from the group consisting of aliphatic and aromatic ketones, aliphatic and aromatic alcohols, diols, water, and combinations thereof. Solvent compositions comprising at least one alcohol selected from the group consisting of butanediol, butanol, ethanol, and benzyl alcohol are preferred, such as aqueous solutions of 1-butanol or ethanol.

The document CA 2 261 304 A1 also describes a process for recycling colored polyamide material comprises the steps of (a) contacting solid colored polyamide material with an organic solvent composition at a temperature effective to dissolve the polyamide, thereby forming a solution containing colorant and dissolved polyamide; and (b) separating colorant from the polyamide. The process can optionally further comprise the step of recovering the colorant, recovering the polyamide, or recovering bath the polymer and colorant. The organic solvent composition preferably is selected from the group consisting of aliphatic and aromatic ketones, aliphatic and aromatic alcohols, diols, water, and combinations thereof. Solvent compositions comprising at least one alcohol selected from the group consisting of butanediol, butanol, ethanol, and benzyl alcohol are preferred, such as aqueous solutions of 1-butanol or ethanol.

Due to solubilization of a polymer the polymer material may not have the same structure, doesn't contain the additives that gives polymer the physical properties that means the polymer doesn't have the same physical characteristics as before. Furthermore, by chemical alteration of the colorant or chromophore in the polymer material, the polymer material itself may also change its structure and/or its physical features. In addition the colorant or chromophore still remains in the polymer material but in a decolorized form.

### SUMMARY OF THE INVENTION

It is an object of the invention to provide a method for decolorizing a colored synthetic and/or not-synthetic polar-polymer material, that does not alter the chemical structure and physical features of the synthetic and/or not-synthetic polar-polymer material.

A synthetic and not-synthetic material is a material that comprises a mixture of synthetic and not-synthetic material.

The object is solved by the features of the independent claim. Preferred embodiments are described by the features of the dependent claims.

Thus, the object is solved by a method for decolorizing a colored synthetic and/or not-synthetic polar-polymer material, comprising the steps:
exposing the colored synthetic and/or not-synthetic polar-polymer material to a polar solvent at a temperature of ≥ 30°C to ≤ 200 °C,
wherein the colored synthetic and/or not-synthetic polar-polymer material is solid while being exposed to the polar solvent,
wherein the polar solvent comprises and/or is exposed to at least one polar decoloring agent for absorbing and/or adsorbing the color from the colored synthetic and/or not-synthetic polar-polymer material;

wherein the colored synthetic and/or not-synthetic polar-polymer material to be decolorized comprises:
   - at least one organic aromatic coloring agent having a molecular weight Mw in the range of ≥ 250 g/mol to ≤ 550 g/mol, wherein the organic aromatic coloring agent is not a chemical reactive organic aromatic coloring agent that forms a chemical covalently bound;
   - i) at least one synthetic and/or not-synthetic polar-polymer having a Mw of ≥ 1000 g/mol, or
   - ii) at least one synthetic and/or not-synthetic non-polar-polymer having a Mw of ≥ 1000 g/mol;
      wherein the synthetic and/or not-synthetic non-polar-polymer comprises in addition:
      - at least one synthetic and/or not-synthetic polar-polymer having a Mw of ≥ 1000 g/mol, and/or
      - at least one synthetic and/or not-synthetic polar-oligomer having a Mw of ≥ 600 g/mol and < 1000 g/mol, and/or
      - at least one synthetic and/or not-synthetic polar-additive having a Mw of ≥ 70 and < 600 g/mol;
wherein the polar-additive is selected different to the organic aromatic coloring agent having a molecular weight Mw in the range of ≥ 250 g/mol to ≤ 550 g/mol;
wherein the polar decoloring agent is selected from the group comprising:
   - at least one synthetic and/or not-synthetic polar-polymer having a Mw of ≥ 1000 g/mol, and/or
   - at least one synthetic and/or not-synthetic polar-oligomer having a Mw of ≥ 600 g/mol and < 1000 g/mol, and/or
   - at least one synthetic and/or not-synthetic polar-additive having a Mw of ≥ 70 and < 600 g/mol, wherein the synthetic and/or not-synthetic polar-additive is solid at 23 °C and selected different to the organic aromatic coloring agent having a molecular weight Mw in the range of ≥ 250 g/mol to ≤ 550 g/mol; and
wherein the polar decoloring agent before used in the decolorization process is preferably free of a dye; and
wherein the polar decoloring agent has a higher concentration of synthetic and/or not synthetic polar-polymer, synthetic and/or not-synthetic polar-oligomer, and/or synthetic and/or not-synthetic polar-additive than the colored synthetic and/or not-synthetic polar-polymer material.

The organic aromatic coloring agent having a molecular weight Mw in the range of about ≥ 250 g/mol to about ≤ 550 g/mol, if not otherwise defined, is a non-chemical reactive organic aromatic coloring agent that forms no chemical covalent bond. Forming no chemical covalent bond means according to the present invention that the organic aromatic coloring agent having a molecular weight Mw in the range of about ≥ 250 g/mol to about ≤ 550 g/mol doesn't form a covalent sigma bond, covalent double, covalent triple or any other chemical covalent bond with the colored synthetic and/or not-synthetic polar-polymer material.

The method for decolorizing a colored synthetic and/or not-synthetic polar-polymer material, is based on the use of a polar decoloring agent for absorbing and/or adsorbing the color from the colored synthetic and/or not-synthetic polar-polymer material. The organic aromatic coloring agent, having a molecular weight Mw in the range of about ≥ 250 g/mol to about ≤ 550 g/mol, is not a chemical reactive organic aromatic coloring agent that forms a chemical covalent bond, so that the organic aromatic coloring agent may migrate out of the colored polar polymer material into the polar solvent and is then absorbed and/or adsorbed by the polar decoloring agent.

According to one embodiment the method for decolorizing a colored synthetic and/or not-synthetic polar-polymer material, comprising the steps:
exposing the colored synthetic and/or not-synthetic polar-polymer material to a polar solvent at a temperature of about ≥ 30 °C to about ≤ 200 °C,
wherein the polar solvent comprises and/or is exposed to at least one polar decoloring agent for absorbing and/or adsorbing the color from the colored synthetic and/or not-synthetic polar-polymer material, wherein the polar decoloring agent has an outer shape that differs from the outer shape of the colored synthetic and/or not-synthetic polar-polymer material that is to be decolorized, and the polar decoloring agent is selected from the group comprising:
   - at least one synthetic and/or not-synthetic polar-polymer having a Mw of about ≥ 1000 g/mol, and/or
   - at least one synthetic and/or not-synthetic polar-oligomer having a Mw of about ≥ 600 g/mol and about < 1000 g/mol, and/or
   - at least one synthetic and/or not-synthetic polar-additive having a Mw of about ≥ 70 and about < 600 g/mol, wherein the synthetic and/or not-synthetic polar-additive is solid at 23 °C and selected different to the organic aromatic coloring agent having a molecular weight Mw in the range of about ≥ 250 g/mol to about ≤ 550 g/mol; and
wherein the colored synthetic and/or not-synthetic polar-polymer material to be decolorized comprises:
   - at least one organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalent bond;
   - i) at least one synthetic and/or not-synthetic polar-polymer having a Mw of about ≥ 1000 g/mol, or
   - ii) at least one synthetic and/or not-synthetic non-polar-polymer having a Mw of about ≥ 1000 g/mol;
      wherein the synthetic and/or not-synthetic non-polar-polymer comprises in addition:
      - at least one synthetic and/or not-synthetic polar-polymer having a Mw of about ≥ 1000 g/mol, and/or
      - at least one synthetic and/or not-synthetic polar-oligomer having a Mw of about ≥ 600 g/mol and < 1000 g/mol, and/or
      - at least one synthetic and/or not-synthetic polar-additive having a Mw of about ≥ 70 and < 600 g/mol;
wherein the polar-additive is selected different to the organic aromatic coloring agent having a molecular weight Mw in the range of about ≥ 250 g/mol to about ≤ 550 g/mol.

The polar decoloring agent may have an outer shape that differs from the outer shape of the colored synthetic and/or not-synthetic polar-polymer material that is to be decolorized means. The ratio of the outer surface to the inner volume of the individual polar decoloring agent may be greater than the ratio of the outer surface to the inner volume of the colored synthetic and/or not-synthetic polar-polymer material that is decolorized; and/or the mass (g) of the individual polar decoloring agent is may be less than the mass (g) of the individual colored synthetic and/or not-synthetic polar-polymer material that is decolorized.

According to one embodiment the method for decolorizing a colored synthetic and/or not-synthetic polar-polymer material, comprising the steps:
exposing the colored synthetic and/or not-synthetic polar-polymer material to a polar solvent at a temperature of about ≥ 30 °C to about ≤ 200 °C,
wherein the polar solvent comprises and/or is exposed to at least one polar decoloring agent for absorbing and/or adsorbing the color from the colored synthetic and/or not-synthetic polar-polymer material, wherein the polar decoloring agent has the form of:
   - thin foils, flakes, particles, granulates, preferably the particles, granulates of the polar decoloring agent may have a mean particle size diameter of 0.1 mm to 100 mm, further preferred 1 mm to 50 mm and also preferred 2 mm to 10 mm, more preferred the particles, granulates of the polar decoloring agent may have a round shape, and most preferred the shape of a thin foil, and/or
   - thin foils, flakes, particles, granulates, preferably the particles, granulates of the polar decoloring agent may have a mean particle size diameter of 0.01 mm to 10 mm, further preferred 1 mm to 8 mm and also preferred 2 mm to 5 mm, and more preferred the particles, granulates of the polar decoloring agent may have a round shape, are arranged on or in the surface of a solid substrate, and/or
   - nano-particles having a mean particle size diameter of about ≥ 1 nm to about ≤ 100 nm, preferably the nano-particles are arranged on the surface of a solid substrate; and
the polar decoloring agent is selected from the group comprising:
   - at least one synthetic and/or not-synthetic polar-polymer having a Mw of about ≥ 1000 g/mol, and/or
   - at least one synthetic and/or not-synthetic polar-oligomer having a Mw of about ≥ 600 g/mol and about < 1000 g/mol, and/or
   - at least one synthetic and/or not-synthetic polar-additive having a Mw of about ≥ 70 and about < 600 g/mol, wherein the synthetic and/or not-synthetic polar-additive is solid at 23 °C and selected different to the organic aromatic coloring agent having a molecular weight Mw in the range of about ≥ 250 g/mol to about ≤ 550 g/mol; and
wherein the colored synthetic and/or not-synthetic polar-polymer material has the form of an article that differs from flakes, particles and granulates, preferably the colored synthetic and/or not-synthetic polar-polymer material has the form of an article that is obtained by molding, blow-forming and/or injection-molding, and the colored synthetic and/or not-synthetic polar-polymer material to be decolorized comprises:
   - at least one organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound;
   - i) at least one synthetic and/or not-synthetic polar-polymer having a Mw of about ≥ 1000 g/mol, or
   - ii) at least one synthetic and/or not-synthetic non-polar-polymer having a Mw of about ≥ 1000 g/mol;
      wherein the synthetic and/or not-synthetic non-polar-polymer comprises in addition:
      - at least one synthetic and/or not-synthetic polar-polymer having a Mw of about ≥ 1000 g/mol, and/or
      - at least one synthetic and/or not-synthetic polar-oligomer having a Mw of about ≥ 600 g/mol and < 1000 g/mol, and/or
      - at least one synthetic and/or not-synthetic polar-additive having a Mw of about ≥ 70 and < 600 g/mol;
wherein the polar-additive is selected different to the organic aromatic coloring agent having a molecular weight Mw in the range of about ≥ 250 g/mol to about ≤ 550 g/mol.

In general discoloration of the colored synthetic and/or not-synthetic polar-polymer material in the shredded state may be faster and by a higher grade of decolorization due to the enlargement of the surface. The entire article, such as an original fabricated colored part, may be decolored by using the method of the present invention, if it is desired that the article should be received in its original form. Articles in its original form may be decolorized by a process according to invention, if these parts lost for example color by UV-light and/or other environmental impact.

According to one embodiment the polar decoloring agent described may have a density > 1.0, and the synthetic and/or not-synthetic colored polar-polymer material may have a density ≤ 1.0. This may allow separation by means of swim-sink separation in water.

The design of thin foils, such as thin stretched films may be most suitable for the polar decoloring agent due to the larger surface.

According to one embodiment the method for decolorizing a colored synthetic and/or not-synthetic polar-polymer material, comprising the steps:
exposing the colored synthetic and/or not-synthetic polar-polymer material to a polar solvent at a temperature of about ≥ 30 °C to about ≤ 200 °C,
wherein the polar solvent comprises and/or is exposed to at least one polar decoloring agent for absorbing and/or adsorbing the color from the colored synthetic and/or not-synthetic polar-polymer material, wherein the polar decoloring agent have the form of:
   - have the form of thin foils, flakes, particles, granulates, preferably the particles, granulates of the polar decoloring agent may have a mean particle size diameter of 0.1 mm to 10 mm, further preferred 1 mm to 8 mm and also preferred 2 mm to 5 mm, and most preferred the particles, granulates of the polar decoloring agent may have a round shape, and/or
   - thin foils, flakes, particles, granulates, preferably the particles, granulates of the polar decoloring agent may have a mean particle size diameter of 0.01 mm to 10 mm, further preferred 1 mm to 8 mm and also preferred 2 mm to 5 mm, and more preferred the particles, granulates of the polar decoloring agent may have a round shape, are arranged on or in the surface of a solid substrate, and/or
   - nano-particles having a mean particle size diameter of about ≥ 1 nm to about ≤ 100 nm, preferably the nano-particles are arranged on the surface of a solid substrate; and
the polar decoloring agent is selected from the group comprising:
   - at least one synthetic and/or not-synthetic polar-polymer having a Mw of about ≥ 1000 g/mol, and/or
   - at least one synthetic and/or not-synthetic polar-oligomer having a Mw of about ≥ 600 g/mol and about < 1000 g/mol, and/or
   - at least one synthetic and/or not-synthetic polar-additive having a Mw of about ≥ 70 and about < 600 g/mol, wherein the synthetic and/or not-synthetic polar-additive is solid at 23 °C and selected different to the organic aromatic coloring agent having a molecular weight Mw in the range of about ≥ 250 g/mol to about ≤ 550 g/mol; and
wherein the colored synthetic and/or not-synthetic polar-polymer material has the form of an article that is a container or plastic part, preferably the colored synthetic and/or not-synthetic polar-polymer material has the form of an article that is obtained by molding, blow-forming and/or injection-molding, and the colored synthetic and/or not-synthetic polar-polymer material to be decolorized comprises:
   - at least one organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound;
   - i) at least one synthetic and/or not-synthetic polar-polymer having a Mw of about ≥ 1000 g/mol, or
   - ii) at least one synthetic and/or not-synthetic non-polar-polymer having a Mw of about ≥ 1000 g/mol;
      wherein the synthetic and/or not-synthetic non-polar-polymer comprises in addition:
      - at least one synthetic and/or not-synthetic polar-polymer having a Mw of about ≥ 1000 g/mol, and/or
      - at least one synthetic and/or not-synthetic polar-oligomer having a Mw of about ≥ 600 g/mol and < 1000 g/mol, and/or
      - at least one synthetic and/or not-synthetic polar-additive having a Mw of about ≥ 70 and < 600 g/mol;
wherein the polar-additive is selected different to the organic aromatic coloring agent having a molecular weight Mw in the range of about ≥ 250 g/mol to about ≤ 550 g/mol.

The benefit of the process of the present invention is that the colored synthetic and/or not-synthetic polar-polymer material that has the form of a container or plastic part, can be decolorized by the process of the present invention, without any need to destroy and/or shredding said article. Therefore, a reuse of the article is easily possible. Furthermore also a recoloring and/or a color enhancement of said article may be possible.

For example bottles, wherein the bottles or at least the outer surface layer thereof, are of a colored synthetic and/or not-synthetic polar-polymer material, wherein the colored synthetic and/or not-synthetic polar-polymer material is colored with the organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound, can be decolorized by the process of the present invention by maintain the form of the bottle.

For example auto plastic parts, wherein the auto plastic parts or at least the outer surface layer thereof, are of a colored synthetic and/or not-synthetic polar-polymer material, wherein the colored synthetic and/or not-synthetic polar-polymer material is colored with the organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound, can be decolorized by the process of the present invention by maintain the form of the auto plastic parts.

For example plastic tableware, wherein the plastic tableware or at least the outer surface layer thereof, are of a colored synthetic and/or not-synthetic polar-polymer material, wherein the colored synthetic and/or not-synthetic polar-polymer material is colored with the organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound, can be decolorized by the process of the present invention by maintain the form of the plastic tableware.

For example all kinds of plastic items, wherein the plastic items or at least the outer surface layer thereof, are of a colored synthetic and/or not-synthetic polar-polymer material, wherein the colored synthetic and/or not-synthetic polar-polymer material is colored with the organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound, can be decolorized by the process of the present invention by maintain the form of the plastic items.

According to one embodiment the colored synthetic and/or not-synthetic polar-polymer material may not have the form of flakes, particles, granulates. According to one embodiment the colored synthetic and/or not-synthetic polar-polymer material may not have the form of nano-particles.

According to one embodiment the method for decolorizing a colored synthetic and/or not-synthetic polar-polymer material, comprising the steps:
exposing the colored synthetic and/or not-synthetic polar-polymer material to a polar solvent at a temperature of about ≥ 30 °C to about ≤ 200 °C,
wherein the polar solvent comprises and/or is exposed to at least one polar decoloring agent for absorbing and/or adsorbing the color from the colored synthetic and/or not-synthetic polar-polymer material, wherein the polar decoloring agent is free of an organic aromatic coloring agent having a molecular weight Mw in the range of about ≥ 250 g/mol to about ≤ 550 g/mol, and preferably free of a dye, and is selected from the group comprising:
   - at least one synthetic and/or not-synthetic polar-polymer having a Mw of about ≥ 1000 g/mol, and/or
   - at least one synthetic and/or not-synthetic polar-oligomer having a Mw of about ≥ 600 g/mol and about < 1000 g/mol, and/or
   - at least one synthetic and/or not-synthetic polar-additive having a Mw of about ≥ 70 and about < 600 g/mol, wherein the synthetic and/or not-synthetic polar-additive is solid at 23 °C and selected different to the organic aromatic coloring agent having a molecular weight Mw in the range of about ≥ 250 g/mol to about ≤ 550 g/mol; and
wherein the colored synthetic and/or not-synthetic polar-polymer material to be decolorized comprises:
   - at least one organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound;
   - i) at least one synthetic and/or not-synthetic polar-polymer having a Mw of about ≥ 1000 g/mol, or
   - ii) at least one synthetic and/or not-synthetic non-polar-polymer having a Mw of about ≥ 1000 g/mol;
      wherein the synthetic and/or not-synthetic non-polar-polymer comprises in addition:
         - at least one synthetic and/or not-synthetic polar-polymer having a Mw of about ≥ 1000 g/mol, and/or
         - at least one synthetic and/or not-synthetic polar-oligomer having a Mw of about ≥ 600 g/mol and < 1000 g/mol, and/or
         - at least one synthetic and/or not-synthetic polar-additive having a Mw of about ≥ 70 and < 600 g/mol;
      wherein the polar-additive is selected different to the organic aromatic coloring agent having a molecular weight Mw in the range of about ≥ 250 g/mol to about ≤ 550 g/mol.

A polar decoloring agent that is free of a dye means, that the polar decoloring agent added to the solvent or is exposed to the solvent, before absorbing/adsorbing the organic aromatic coloring agent of the colored synthetic and/or not-synthetic polar-polymer material, may be colorless, may have a natural color, may be free of an additional added dye, may be white or may be transparent. Some polar decoloring agent that can be suitable used in the process of the present invention, may have a natural color, such as yellow, orange or beige.

According to one embodiment the method for decolorizing a colored synthetic and/or not-synthetic polar-polymer material, comprising the steps:
exposing the colored synthetic and/or not-synthetic polar-polymer material to a polar solvent at a temperature of about ≥ 30 °C to about ≤ 200 °C,
wherein the polar solvent comprises and/or is exposed to at least one polar decoloring agent for absorbing and/or adsorbing the color from the colored synthetic and/or not-synthetic polar-polymer material, wherein the polar decoloring agent is at the time of adding to the polar solvent free of or comprises traces of an organic aromatic coloring agent having a molecular weight Mw in the range of about ≥ 250 g/mol to about ≤ 550 g/mol, and preferably free of a dye, and the polar decoloring agent has optional an outer shape that differs from the outer shape of the colored synthetic and/or not-synthetic polar-polymer material that is to be decolorized, and the polar decoloring agent is selected from the group comprising:
   - at least one synthetic and/or not-synthetic polar-polymer having a Mw of about ≥ 1000 g/mol, and/or
   - at least one synthetic and/or not-synthetic polar-oligomer having a Mw of about ≥ 600 g/mol and about < 1000 g/mol, and/or
   - at least one synthetic and/or not-synthetic polar-additive having a Mw of about ≥ 70 and about < 600 g/mol, wherein the synthetic and/or not-synthetic polar-additive is solid at 23 °C and selected different to the organic aromatic coloring agent having a molecular weight Mw in the range of about ≥ 250 g/mol to about ≤ 550 g/mol; and
wherein the colored synthetic and/or not-synthetic polar-polymer material to be decolorized comprises:
- at least one organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound;
- i) at least one synthetic and/or not-synthetic polar-polymer having a Mw of about ≥ 1000 g/mol, or
- ii) at least one synthetic and/or not-synthetic non-polar-polymer having a Mw of about ≥ 1000 g/mol;
   wherein the synthetic and/or not-synthetic non-polar-polymer comprises in addition:
      - at least one synthetic and/or not-synthetic polar-polymer having a Mw of about ≥ 1000 g/mol, and/or
      - at least one synthetic and/or not-synthetic polar-oligomer having a Mw of about ≥ 600 g/mol and < 1000 g/mol, and/or
      - at least one synthetic and/or not-synthetic polar-additive having a Mw of about ≥ 70 and < 600 g/mol;
   wherein the polar-additive is selected different to the organic aromatic coloring agent having a molecular weight Mw in the range of about ≥ 250 g/mol to about ≤ 550 g/mol.

Without being bond to a specific theory the inventors assume that the organic aromatic coloring agent may have the ability to migrate out of the colored synthetic and/or not-synthetic polar-polymer material and therefore a decolorization of the colored synthetic and/or not-synthetic polar-polymer material occurs.

In order to enable a migration as unhindered as possible, the organic aromatic coloring agent preferably has a rather planar structure and preferably comprises at least one free rotation center outside the planar structure. Further in case of ligands and/or remnants which may be spatially or sterically demanding, the ligands and/or remnants may be as freely movable as possible around a center of rotation. This may give the organic aromatic coloring agent the ability to adapt its shape to the environment given by the matrix of the synthetic and/or not-synthetic polar-polymer material. Preferably the organic aromatic coloring agent may not comprise a spiro-center and/or the organic aromatic coloring agent may not comprise a large moiety that is rotation-impaired. In this context a large moiety that is rotation impaired may mean that the molecular weight of this rotation impaired moiety is about 350 g/mol +/-10%.

Preferably the organic aromatic coloring agent is not covalently bond to the synthetic and/or not-synthetic polar-polymer material. Therefore, the organic aromatic coloring agent may not be a reactive dye.

More preferably the organic aromatic coloring agent may be essentially homogenously distributed in the colored part or layer of the synthetic and/or not-synthetic polar-polymer material.

The wording "organic aromatic coloring agent" may be essentially homogenously distributed in the colored part or layer of the synthetic and/or not-synthetic polar-polymer material" means that for the eye of a human being the colored outer surface or the colored part or the colored layer of the synthetic and/or not-synthetic polar-polymer material appear uniformly colored without color variations.

### Polar decoloring agent

To assist the decolorization and/or migration process the polar solvent comprises and/or is exposed to the at least one polar decoloring agent. The organic aromatic coloring agent may have an enhanced interaction with the polar decoloring agent compared to the synthetic and/or not-synthetic polar-polymer material and therefore is likely to migrate out of the synthetic and/or not-synthetic polar-polymer material. Preferably the polar decoloring agent used for decolorization is free or only comprises traces of a dye.

The polar decoloring agent may be in a solid or in a liquid state.

The colored synthetic and/or not-synthetic polar-polymer material not only comprises the organic aromatic coloring agent but also comprises i) at least one synthetic and/or not-synthetic polar-polymer having a Mw of about ≥ 1000 g/mol, or ii) at least one synthetic and/or not-synthetic non-polar-polymer having a Mw of about ≥ 1000 g/mol. Further, the synthetic and/or not-synthetic non-polar-polymer comprises in addition:
- at least one synthetic and/or not-synthetic polar-polymer having a Mw of about ≥ 1000 g/mol, and/or
- at least one synthetic and/or not-synthetic polar-oligomer having a Mw of about ≥ 600 g/mol and < 1000 g/mol, and/or
- at least one synthetic and/or not-synthetic polar-additive having a Mw of about ≥ 70 and < 600 g/mol.

As already mentioned the decolorization process may be based on the migration of the organic aromatic coloring agent out of the colored synthetic and/or not-synthetic polar-polymer material, and based on the absorption and/or adsorption of the organic aromatic coloring agent to the polar decoloring agent. The polar decoloring agent may be liquid or solid. With respect to the polar decoloring agent it may be advantageous to select the polar decoloring agent selected from the group comprising:
- at least one synthetic and/or not-synthetic polar-polymer having a Mw of about ≥ 1000 g/mol, and/or
- at least one synthetic and/or not-synthetic polar-oligomer having a Mw of about ≥ 600 g/mol and about < 1000 g/mol, and/or
- at least one synthetic and/or not-synthetic polar-additive having a Mw of about ≥ 70 and about < 600 g/mol, wherein the synthetic and/or not-synthetic polar-additive is solid at 23 °C and selected different to the organic aromatic coloring agent having a molecular weight Mw in the range of about ≥ 250 g/mol to about ≤ 550 g/mol; and
- wherein the polar decoloring agent before used in the decolorization process is preferably free of a dye.

In other words the polar decoloring agent may comprise the same substances as the colored synthetic and/or not-synthetic polar-polymer material, i.e. the synthetic and/or not-synthetic polar-polymer, the synthetic and/or not-synthetic polar-oligomer, and/or synthetic and/or not-synthetic polar-additive. The decolorization of the colored synthetic and/or not-synthetic polar-polymer material may be based on a shift of the dynamic equilibrium, due to a higher concentration of synthetic and/or not-synthetic polar-polymer, synthetic and/or not-synthetic polar-oligomer, and/or synthetic and/or not-synthetic polar-additive in the polar decoloring agent than in the colored synthetic and/or not-synthetic polar-polymer material.

The adsorption and/or absorption of the organic aromatic coloring agent to the polar decoloring agent may be enforced by increasing the amount of electrostatic interaction between the organic aromatic coloring agent and the polar decoloring agent. According to a preferred embodiment the polar decoloring agent may comprise polar, acidic, and/or basic groups, wherein polar groups for electrostatic interaction are preferred. More preferred the polar decoloring agent may comprise polar groups selected from the group comprising sulfonyl group, such as tosyl-, brosyl-, nosyl-, mesyl-, trifyl-, tresyl-, and dansyl-, hydroxyl group, amine groups including primary-, secondary-, and tertiary amines, carboxylic groups, imine and enamine groups, ketone groups, carbonyl groups, aldehyde groups, organic amide groups such as sulfone amides and phosphor amides, organic halide groups, and/or carbamate groups.

Preferably the polar decoloring agent is solid at the temperature of the decolorizing process. According to a preferred embodiment the polar decoloring agent may have the form of flakes, particles, granulates, preferably the particles, granulates of the polar decoloring agent may have a mean particle size diameter of 0.01 mm to 100 mm, further preferred 1 mm to 8 mm and also preferred 2 mm to 5 mm, and most preferred the particles, granulates of the polar decoloring agent may have a round shape; and/or is arranged on or in the surface of a solid substrate, preferably the polar decoloring agent are nano-particles may have a mean particle size of about ≥ 1 nm to about ≤ 100 nm are arranged on the surface of a solid substrate. However, the design of the polar decoloring agent may have cylindrical form or any other design. It seems to be important that the shape should be selected such that the ratio surface : volume may be as large as possible.

Having a solid polar decoloring agent in the form of flakes, particles, granulates may have the advantage that it may be possible to filter off the polar decoloring agent. Referring to a filtration process it may be preferable that the granulates of the polar decoloring agent may have a mean particle size diameter of 0.1 mm to 100 mm, 0.5 mm to 10 mm, further preferred 1 mm to 8 mm and also preferred 2 mm to 5 mm. Nano particles may have a mean particle size diameter of 1 nm to 100 nm. In general the polar decoloring agent may have any shape but it is preferred that he ratio surface: volume may be as large as possible. For example the polar decoloring agent may have a round shape. Furthermore, it may be advantages when the polar decoloring agent has a shape that has a high surface to volume ratio. Having a high surface to volume ratio may increase the rate of adsorption and/or absorption of the organic aromatic coloring agent by the solid polar decoloring agent.

However separation of the polar decoloring agent may also be possible by arranging the polar decoloring agent on or in the surface of a solid substrate. In order to exploit a high surface to volume rate it may be preferred to have the polar decoloring agent as nano-particles arranged on the surface of a solid substrate.

In the context of separating the polar decoloring agent from the polar solvent and according to a preferred embodiment the colored polar decoloring agent due to absorption and/or adsorption of the organic aromatic coloring agent, having a molecular weight Mw in the range of about ≥ 250 g/mol to about ≤ 550 g/mol, wherein the organic aromatic coloring agent is not a chemical reactive organic aromatic coloring agent that forms a chemical covalently bound, may be separated from the polar solvent. It may be possible that the density of the polar decoloring agent changes by absorbing and/or adsorbing of the organic aromatic coloring agent. The density of the polar decoloring agent may increase above the density of the polar solvent. Therefore, due to absorption and/or adsorption of the organic aromatic coloring agent the polar decoloring agent may sink onto the bottom of the reaction vessel and may be easily separated from the polar solvent.

### Polar

Polar in this context may mean that the compounds show an enhanced polarity compared to a compound that exclusively consist of C-atoms and H-atoms. Preferably the synthetic and/or not-synthetic polar-polymer having a Mw ≥ 1000 g/mol, the synthetic and/or not-synthetic polar-oligomer having a Mw ≥ 600 g/mol and < 1000 g/mol, and the polar-additive having a Mw ≥ 70 and < 600 g/mol may each comprise at least ≥ 5 wt.-% of heteroatoms, wherein the weight % is calculated based on the individual weights of the synthetic and/or not-synthetic polar-polymer, the synthetic and/or not-synthetic polar-oligomer, and the synthetic and/or not-synthetic polar-additive. In this context a heteroatom may be any atom excluding C-atoms and H-atoms. Preferably, the heteroatom may be selected from the group comprising: N, O, F, Cl, Br, I, S, and P. Furthermore, preferably the synthetic and/or not-synthetic polar-polymer having a Mw ≥ 1000 g/mol, the synthetic and/or not-synthetic polar-oligomer having a Mw ≥ 600 g/mol and < 1000 g/mol, and the polar-additive having a Mw ≥ 70 and < 600 g/mol may each comprise at least ≥ 5 wt.-% and preferably < 70 wt.-% of O-atoms.

According to the above, the at least one synthetic and/or not-synthetic non-polar-polymer having a Mw of about ≥ 1000 g/mol may preferably comprise < 5 wt.-% of heteroatoms, wherein the weight % is calculated based on the weight of the synthetic and/or not-synthetic non-polar-polymer.

### Temperature

During the decoloring process the colored synthetic and/or not-synthetic polar-polymer material is exposed to the polar solvent, wherein at a temperature in the range of ≥ 30 °C to ≤ 200 °C. As a result of this process the colored synthetic and/or not-synthetic polar-polymer material is decolorized.

According to a preferred embodiment the colored synthetic and/or not-synthetic polar-polymer material may be decolorized by exposing the colored synthetic and/or not-synthetic polar-polymer material to the polar solvent at a temperature of about ≥ 30 °C to about ≤ 200 °C, wherein the temperature of the polar solvent is selected ≥ the glass-transition temperature T_{g} and below the decomposition temperature of the colored synthetic and/or not-synthetic polar-polymer material, preferably the temperature of the polar solvent is selected > T_{g} and ≤ the melting temperature Tₘ of the colored synthetic and/or not-synthetic polar-polymer material.

The decolorization process may be assisted by elevated temperature. However, preferably the temperature may be lower than the decomposition temperature of the colored synthetic and/or not-synthetic polar-polymer material and more preferably lower than or equal to the melting temperature of the colored synthetic and/or not-synthetic polar-polymer material, if the colored synthetic and/or not-synthetic polar-polymer material has a melting temperature. By meeting these upper temperature requirements the decolorization process may not have an influence on the physical properties of the synthetic and/or not-synthetic polar-polymer material. Furthermore, to enhance and/or accelerate the decolorization process, preferably the temperature may be equal to or higher than the glass transition temperature or the colored synthetic and/or not-synthetic polar-polymer material. Most preferably the temperature is selected in the range of the melting temperature of the colored synthetic and/or not-synthetic polar-polymer material, if the colored synthetic and/or not-synthetic polar-polymer material has a melting temperature. In this context in the range of the melting temperature may mean the temperature range Tₘ +/- 20 °C.

The glass transition may be the gradual and reversible transition in amorphous regions of the colored synthetic and/or not-synthetic polar-polymer material from a hard and relatively brittle state into a viscous or rubbery state as the temperature is increased. The glass transition temperature T_{g} of the colored synthetic and/or not-synthetic polar-polymer material may be determined by differential scanning calorimetry (DSC), which is a thermoanalytical technique in which the difference in the amount of heat required to increase the temperature of a sample and reference is measured as a function of temperature.

In polymers having semi-crystalline or crystalline phases, at the melting temperature Tₘ, the crystalline phases may become amorphous. The colored synthetic and/or not-synthetic polar polymer material may change from a thermoelastic to a thermoplastic state. This transition may be associated with a loss of mechanical properties.

The glass transition temperature Tg and the melting temperature Tm of the colored synthetic and/or not-synthetic polar-polymer material may be determined according to the following standards: DIN 51007(Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3(Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature Tg and/or the melting temperature Tm of the colored synthetic and/or not-synthetic polar-polymer material may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

### Time

According to a preferred embodiment the colored synthetic and/or not-synthetic polar-polymer material may be decolorized by exposing the colored synthetic and/or not-synthetic polar-polymer material to the polar solvent for about ≥ 15 seconds to about ≤ 240 minutes, preferably about ≥ 1 minute to about ≤ 180 minutes, further preferred for about ≥ 5 minutes to about ≤ 60 minutes, and also preferred for about ≥ 10 minutes to about ≤ 20 minutes. The decolorization process may reach an equilibrium during the given time intervals.

### Polar solvent

The polar solvent may enhance the decolorization process. According to a preferred embodiment the polar solvent may be liquid at about 23 °C and may comprises at least one polar solvent or a mixture of polar solvents, wherein the polar solvent is a solvent or solvent mixture having a dipole, and is preferably selected from the group comprising water, and/or at least one polar organic solvent; wherein further preferred the polar solvent is a mixture of liquids forming a homogeneous mixture when added together, for example water/ethanol, wherein also preferred the polar solvent is a mixture of liquids not forming a homogeneous mixture when added together, for example water/acidic acid - the coloring agent enriches in the water phase and can be separated therefrom by known techniques. Using a polar solvent that is liquid at about 23 °C in the decolorization process may facilitate decolorization since liquid solvents may be easy to handle. Preferably water may be used. Water may have the advantageous that it may be inexpensive and environmental friendly.

The polar solvent preferably has a dipole moment, more preferably an electric dipole moment. The dipole moments may be due to a non-uniform distribution of positive and negative charges on the various atoms. The polar solvent may have a permanent dipole, an instantaneous dipole and/or an induced dipole. More preferably it may have a permanent dipole.

It may be advantageous to use a mixture of polar solvents. It may be also possible to use different polar solvents including organic polar solvents that may not form a homogenous mixture. The mixture of solvents can be a homogenous mixture, an emulsion or showing phase separation.

According to the above and according to a preferred embodiment the polar organic solvent or polar organic solvent mixture may be selected from the group C₁ to C₆ - alcohol, preferably ethanol and isopropanol, glycols such as diethylene glycol and its oligomers and ethers, C₃ to C₆ - ketone, preferably acetone, C₂ to C₆ - aldehyde, C₁ to C₆ - carboxylic acid and their derivatives such as acid chlorides or acid amides, other polar aromatic solvents liquid at 23 °C, preferably dimethylsulfoxide DMSO, dimethylformamide (DMF), benzylic alcohol such as benzyl alcohol, linear or cyclic aliphatic ethers, preferably diethyl ether, tetrahydrofuran, esters such as methyl acetate, ethyl acetate, benzyl benzoate, halogenated solvents such as dichloromethane or trichloromethane.

### pH

To enhance the decolorization process the polar organic solvent may be adjusted to a pH in the range of about ≥ 2 to about ≤ 13, preferably about ≥ 4 to about ≤ 10, about ≥ 6 to about ≤ 8, or 7 ± 0.5, wherein the pH is adjusted preferably by adding an acid or basic agent. The pH can be also selected in the range of about ≥ 2.5 to about ≤ 11.5, preferably about ≥ 2.9 to about ≤ 11, about ≥ 3 to about ≤ 9, or about ≥ 5 to about ≤ 10.5. For example the pH may be adjusted by adding acetic acid as acid agent or sodium hydroxide as basic agent.

### Aromatic coloring agent

In order to facilitate the migration of the organic aromatic coloring agent out of the colored synthetic and/or not-synthetic polar-polymer material it may be advantageous that the organic aromatic coloring agent has a specific molecular weight. Concerning the organic aromatic coloring agent and according to a preferred embodiment the organic aromatic coloring agent may have a molecular weight Mw in the range of ≥ 250 g/mol to ≤ 550 g/mol, preferably the organic aromatic coloring agent has a molecular weight Mw in the range of ≥ 270 g/mol to ≤ 450 g/mol, and more preferably the organic aromatic coloring agent has a molecular weight Mw in the range of ≥ 285 g/mol to ≤ 400 g/mol.

Furthermore, the solubility of the organic aromatic coloring agent in water may be low. According to a preferred embodiment the organic aromatic coloring agent may have a solubility in water at 23 °C of ≤ 0.1 g/l and > 0 g/l, preferably ≤ 0.01 g/l and > 0 g/l, more preferably ≤ 0.001 g/l and > 0 g/l.

The organic aromatic coloring agent may comprise at least 2 to 6 aromatic six-membered rings, or at least 3 to 5 aromatic six-membered rings and at least 1 to 4 five-membered rings. Furthermore, the aromatic coloring agent may have at least 2 to 6 aromatic six-membered rings and/or the organic aromatic coloring agent may comprises at least on heteroatom selected from N, O, S, Br.

Preferably the organic aromatic coloring agent is selected from the group comprising the following chemical formulas A1 to A10 according to table 1:

**Table 1**

| | |
|---|---|
| Chemical formula A1 | 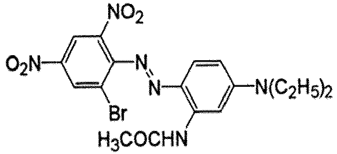 |
| Chemical formula A2 | 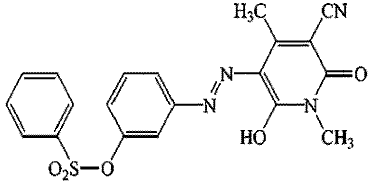 |
| Chemical formula A3 | 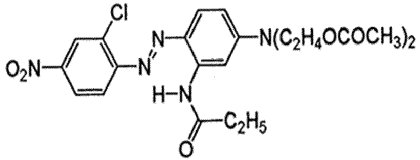 |
| Chemical formula A4 | 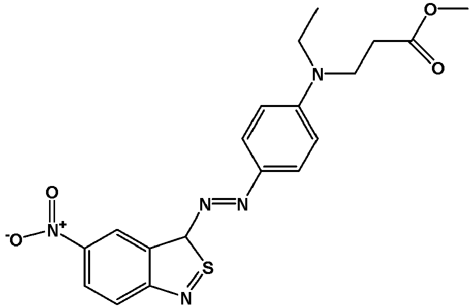 |
| Chemical formula A5 | 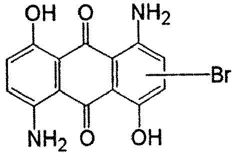 |
| Chemical formula A6 | 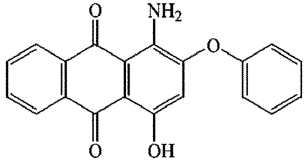 |
| Chemical formula A7 | 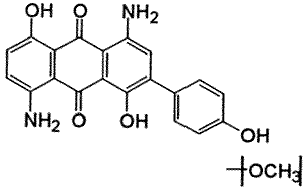 |
| Chemical formula A8 | 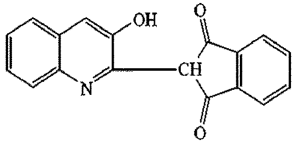 |
| Chemical formula A9 | 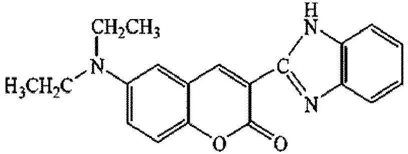 |
| Chemical formula A10 | 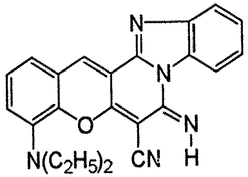 |

Regarding the chemical formula A7, the methoxy group -[OCH₃] may be an alternative for the hydroxyl group -[OH] on the aromatic moiety, that is not part of the anthraquinone ring system.

Preferably the organic aromatic coloring agent is selected from the group comprising the coloring agents known under the trademark BEMACRON S/SE/E from CHT Germany GmbH, or from Dystar Pte Ltd. Preferably the organic aromatic coloring agent is selected from the group comprising BEMACRON Yellow S-6GF, BEMACRON Yellow S-4g, BEMACRON Yellow Brown S-2RFl, BEMACRON Orange S-g, BEMACRON Scarlet S-gFl, BEMACRON Scarlet S-BWFl, BEMACRON Rubine S-2GFL, BEMACRON Violet S-3Rl, BEMACRON Violet S-BlF, BEMACRON Blue S-Bgl, BEMACRON Blue S-BB, BEMACRON Turquoise S-gF, BEMACRON Navy S-2gl, BEMACRON Navy S-3l, BEMACRON Black S-3l, BEMACRON Black S-T, BEMACRON Yellow SE-Rdl, BEMACRON Yellow SE-IF, BEMACRON Orange SE-Rdl, BEMACRON Red SE-4g, BEMACRON Pink SE-REl, BEMACRON Red SE-3B, BEMACRON Red SE-Rdl, BEMACRON Blue SE-lF, BEMACRON Blue SE-Rdl, BEMACRON Navy SE-RLX, BEMACRON Black SE-R1X, BEMACRON Black SE-Rd2R, BEMACRON Yellow E-3gl, BEMACRON Red E-FBl, BEMACRON Blue E-FBl, and BEMACRON Black E-R.

More preferably the organic aromatic coloring agent is selected from the group comprising BEMACRON Black E-R, BEMACRON Yellow S-6GF, BEMACRON Rubine S-2GFL, BEMACRON Blue RS, BEMACRON Blue E-FBL 150, BEMACRON Red E-FBL, BEMACRON Blue S-BGL, BEMACRON Yellow E-3gl, BEMACRON Lumin. Yellow SEL-8G, and BEMACRON Lumin. Red SEL-G.

Preferably the aromatic coloring agent may not comprise a phthalocyanine.

### Colored synthetic and/or not-synthetic polar-polymer material

The colored synthetic and/or not-synthetic polar-polymer material may have a density that is lower or greater than the density of the polar solvent. However the density of the colored synthetic and/or not-synthetic polar-polymer material may decrease by decoloring the colored synthetic and/or not-synthetic polar-polymer material below the density of the polar solvent. Therefore, the colored synthetic and/or not-synthetic polar-polymer material and/or the decolored synthetic and/or not-synthetic polar-polymer material floats on top of the polar solvent.

As already explained above the decolorization process is based on the migration of the organic aromatic coloring agent out of the colored synthetic and/or not-synthetic polar-polymer material, and based on the absorption and/or adsorption of the organic aromatic coloring agent to the polar decoloring agent. The decolorization of the colored synthetic and/or not-synthetic polar-polymer material may be based on a shift of the dynamic equilibrium, due to a higher concentration of synthetic and/or not-synthetic polar-polymer, synthetic and/or not-synthetic polar-oligomer, and/or synthetic and/or not-synthetic polar-additive in the polar decoloring agent than in the colored synthetic and/or not-synthetic polar-polymer material. In order to further shift the equilibrium toward a decolorized synthetic and/or not-synthetic polar-polymer material and to enhance the migration of the organic aromatic coloring agent out of the colored synthetic and/or not-synthetic polar-polymer material it may be advantageous to replace the polar decoloring agent after it has absorbed and/or adsorbed the organic aromatic coloring agent by polar decoloring agent that is free of a dye or comprises traces of a dye. After absorption and/or adsorption of the organic aromatic coloring agent the polar decoloring agent may be colored. According to the above and according to a preferred embodiment the colored polar decoloring agent that may be separated from the polar solvent may be replaced with polar decoloring agent that is free of the organic aromatic coloring agent having a molecular weight Mw in the range of about ≥ 250 g/mol to about ≤ 550 g/mol. The polar decoloring agent that is free of the organic aromatic coloring agent may also be free of a dye or only comprises traces of a dye.

According to one embodiment the colored synthetic and/or not-synthetic polar-polymer material may be first sorted by color and thereafter the colored synthetic and/or not-synthetic polar-polymer material sorted by color are each decolorized by the process according to the present invention. This may enables the reuse of different colored polar decoloring agents to be added to polymer material intended to be colorized.

The polar decoloring agent adsorb and/or adsorb the organic aromatic coloring agent during the decolorization of the colored synthetic and/or not-synthetic polar-polymer material. The than colored polar decoloring agents can be separated. According to a preferred embodiment the separated colored polar decoloring agent can be used to color synthetic and/or not-synthetic polar-polymer material by adding the colored polar decoloring agent to a synthetic and/or not-synthetic polar-polymer mixture or to a synthetic and/or not-synthetic non-polar-polymer mixture.

The separated colored polar decoloring agent may be added to non-colored synthetic and/or not-synthetic polar-polymer material in an amount of about ≥ 0.1 wt.-% to about ≤ 50 wt.-%, preferably of about ≥ 5 wt.-% to about ≤ 30 wt.-% or of about ≥ 10 wt.-% to about ≤ 25 wt.-%, wherein the weight of the separated colored polar decoloring agent is based on the non-colored synthetic and/or not-synthetic polar-polymer material.

The separated colored polar decoloring agent may be added to non-colored synthetic and/or not-synthetic non-polar-polymer material in an amount of about ≥ 0.1 wt.-% to about ≤ 50 wt.-%, preferably of about ≥ 10 wt.-% to about ≤ 40 wt.-% or of about ≥ 15 wt.-% to about ≤ 30 wt.-%. A synthetic and/or not-synthetic non-polar-polymer material comprising of about ≥ 0.5 wt.-% to about ≤ 50 wt.-% of a colored polar decoloring agent is referred to as synthetic and/or not-synthetic polar-polymer material due to his increased amount of polar components, wherein the weight of the separated colored polar decoloring agent is based on the non-colored synthetic and/or not-synthetic polar-polymer material.

According to an embodiment, the dye of the colored synthetic and/or not-synthetic polar-polymer material that dissolve in the polar solvent can in addition be destroyed by a chemical oxidation or reduction reaction. This shifts the equilibrium by destroying the dyes from the colored synthetic and/or not-synthetic polar-polymer material. Small amounts of the dye dissolve again in the polar solvent, which is then destroyed so that additional dye dissociate from the colored synthetic and/or not-synthetic polar-polymer material into the polar solvent.

In order to remove the residual dye content in the "polar-polymer materials" or in the "polar-polymer / oligomer / additive-component" which may cannot remove by the method according to the invention it is possible to further reduce the residual dye content of << 3%.

According to a preferred embodiment the separated colored polar decoloring agent can be decolored, for example by a oxidizing reaction or reducing reaction. This would make the reuse of the polar decoloring agent possible.

According to a preferred embodiment the separated colored polar decoloring agent may be decolorized by:
- an oxidation process, preferably by exposing to at least one oxidation agent select from the group comprising of peroxide, peroxyacetic acid, hydrogen peroxide, ozone, sodium percarbonate, sodium perborate, sodium percarbonate, m-nitrobenzolsulfonat, H₂SO₄, HNO₃, oxygen-containing anions (oxo anions) of transition metals in high oxidation states such as permanganate MnO₄⁻, KMnO₄, phosphate, oxygen difluoride fluorine, cryptone difluoride, dichromate Cr₂O₇²⁻, metal ions such as Ce₄⁺, noble metal ions such as those of silver and copper, anions of halo-oxygen acids such bromat BrOs', halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, S²⁻, Na₂S, sulfites, SO2⁻³, sodium sulfite, sulfurous acid, sulfur dioxide, thiosulphate, sodium dithionite, sodium bisulfite, NaHSO₃, formamidine sulfonic acid, sodium hydroxymethanesulfinate also known as rongalite, thiourea dioxide also knwon as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDLTLITE GIN; and/or
- adsorption and/or absorption process, preferably by exposing to carbon black, zeolites.

It may also be possible to destroy dye in a pre-step and/or subsequent step, preferably in a subsequent step traces of the color that has remain in decolorized former colored synthetic and/or not-synthetic polar polymer material may be treated by an oxidation process, a reduction process and/or an adsorption and/or absorption process. It may be an advantage that after exposing the colored synthetic and/or not-synthetic polar-polymer material to the polar solvent, the method for decolorizing the synthetic and/or not-synthetic polar-polymer material further comprises in a subsequent step additional decolorizing the colored synthetic and/or not-synthetic polar-polymer material by:
- an oxidation process, preferably by exposing to at least one oxidation agent select from the group comprising of peroxide, peroxyacetic acid, hydrogen peroxide, ozone, sodium percarbonate, sodium perborate, sodium percarbonate, m-nitrobenzolsulfonat, H₂SO₄, HNO₃, oxygen-containing anions (oxo anions) of transition metals in high oxidation states such as permanganate MnO₄⁻, KMnO₄, phosphate, oxygen difluoride fluorine, cryptone difluoride, dichromate Cr₂O₇²⁻, metal ions such as Ce₄⁺, noble metal ions such as those of silver and copper, anions of halo-oxygen acids such bromate BrO₃⁻, halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, S²⁻, Na₂S, sulfites, SO2⁻³, sodium sulfite, sulfurous acid, sulfur dioxide, thiosulphate, sodium dithionite, sodium bisulfite, NaHSO₃, formamidine sulfonic acid, sodium hydroxymethanesulfinate also known as rongalite, thiourea dioxide also knwon as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDLTLITE GIN; and/or
- adsorption and/or absorption process, preferably by exposing to carbon black, zeolites.

REDULIT GIN is a liquid reducing agent mixture for the subsequent cleaning of polyester dyeings. Sodium hydroxide: alkali, serves as a reactant with the reducing agent and converts the reduced dye in the Leukoküpenform. Soda: Especially for the hydrosulfite method, caustic soda is partially replaced by soda for better liquor stability.

Having such a subsequent additional step may increase the decolorization of the colored synthetic and/or not-synthetic polar-polymer material even further, if required.

After the decolorization process the amount of organic aromatic coloring agent in the formerly colored synthetic and/or not-synthetic polar-polymer material may be such low that the synthetic and/or not-synthetic polar-polymer material is considered colorless by visual inspection by a human eye.

According to a preferred embodiment the formerly colored synthetic and/or not-synthetic polar-polymer material after decolorization comprises about ≥ 0 wt.-% to about ≤ 10 wt.-%, preferably about ≥ 0.01 wt.-% to about ≤ 5 wt.-%, and further preferred about ≥ 0.1 wt.-% to about ≤ 1 wt.-% of organic aromatic coloring agent having a molecular weight Mw in the range of about ≥ 250 g/mol to about ≤ 550 g/mol, wherein the organic aromatic coloring agent is not a chemical reactive organic aromatic coloring agent that forms a chemical covalently bound, based on the total amount of said organic aromatic coloring agent in the colored synthetic and/or not-synthetic polar-polymer material before it is decolorized.

Before the decolorization process the colored synthetic and/or not-synthetic polar-polymer material may comprise the organic aromatic coloring agent which gives the synthetic and/or not-synthetic polar-polymer material its specific color. The amount of organic aromatic coloring agent in the colored synthetic and/or not-synthetic polar-polymer material before the decolorization process may be as high that the colored synthetic and/or not-synthetic polar-polymer material is considered colored by visual inspection.

According to a preferred embodiment the colored synthetic and/or not-synthetic polar-polymer material, before it is decolorized, comprises about 0.00001 wt.% to about ≤ 10 wt.%, preferably about 0.001 wt.% to about ≤ 5 wt.%, further preferred about 0.01 wt.% to about ≤ 3 wt.%, also preferred about 0.1 wt.% to about ≤ 2 wt.%, and in addition preferred about 0,5 wt.% to about ≤ 1 wt.%, and in addition preferred about 0.5 wt.% to about ≤ 1 wt.%, of an organic aromatic coloring agent, based on the total weight of the colored synthetic and/or not-synthetic polar-polymer material before it is decolorized.

### Design of colored synthetic and/or not-synthetic polar-polymer material

The colored synthetic and/or not-synthetic polar-polymer material that is decolorized may have any form. Preferably the colored synthetic and/or not-synthetic polar-polymer material that is exposed to the polar solvent for decolorization may have the form of an article, flakes, particles or granulates. The article may be selected from the group comprising a sheet, a foil, a tube, a container, a part, a bottle, a non-woven fabric, and preferably the article may be selected from the group comprising computer face-plates, keyboards, bezels and cellular phones, color coded packaging and containers of all types, including ones for industrial components, residential and commercial lighting fixtures and components therefor, such as sheets, used in building and in construction, tableware, including plates, cups and eating utensils, small appliances and their components, optical and sun-wear lenses, fibers, woven fabric, and/or knitted fabric.

The article may be exposed to the polar solvent for decolorization without shredding the article into small pieces. This may have the advantageous that the article, for example a bottle may be used for the same purpose as before. Alternatively the colored synthetic and/or not-synthetic polar-polymer material that is exposed to the polar solvent for decolorization may have the form of flakes, particles or granulates. In other words it may be advantageous to break and/or shredder the article into smaller pieces such as flakes, particles and/or granulates. Flakes, particles of granulates may have the advantages that the surface to volume ration may be higher. Therefore the decolorization process may be faster.

Furthermore, it may be easier to move and/or stir the flakes, particles and/or granulates in the polar solvent compared to the article.

In order to accelerate and/or improve the decolorization result it may be advantageous to use high pressure. Therefore according to a preferred embodiment the decolorization process of the colored synthetic and/or not-synthetic polar-polymer material may be carried out in a pressure vessel at a pressure above atmospheric pressure.

In this context the term atmospheric pressure may refer to the standard atmosphere defined as a pressure of 101325 Pa (1.01325 bar).

### Definitions of synthetic and/or not-synthetic polar-polymer/ synthetic and/or not-synthetic polar-oligomer/ synthetic and/or not-synthetic polar additive

According to a preferred embodiment the synthetic and/or not-synthetic polar-polymer may comprise at least ≥ 5 wt.-% of heteroatoms, based on the total weight of the synthetic and/or not-synthetic polar-polymer, wherein a heteroatom is any atom excluding C-atoms and H-atoms. This may lead to a polarity of the synthetic and/or not-synthetic polar-polymer that assists the migration of the organic aromatic coloring agent out of the colored synthetic and/or not-synthetic polar-polymer material and into the polar decoloring agent. Preferably the heteroatom is selected from the group comprising N, O, F, Cl, Br, I, S, and P. For example considering a polyethylene terephthalate as synthetic and/or not-synthetic polar-polymer, the only heteroatom is oxygen. The wt.-% of oxygen in polyethylene terephthalate is around 33 wt.-%, which is above ≥ 5 wt.-%.

According to another preferred embodiment the synthetic and/or not-synthetic polar-oligomer may comprise at least ≥ 5 wt.-% of heteroatoms, based on the total weight of the synthetic and/or not-synthetic polar-oligomer, wherein a heteroatom is any atom excluding C-atoms and H-atoms. This may lead to a polarity of the synthetic and/or not-synthetic polar-oligomer that assists the migration of the organic aromatic coloring agent out of the colored synthetic and/or not-synthetic polar-polymer material and into the polar decoloring agent. Preferably the heteroatom is selected from the group comprising N, O, F, Cl, Br, I, S, and P. For example considering an oligo-methylmethacrylat as synthetic and/or not-synthetic polar-oligomer, the only heteroatom is oxygen. The wt.-% of oxygen in oligo-methylmethacrylat is around 31 wt.%, which is above ≥ 5 wt.-%.

According to another preferred embodiment the synthetic and/or not-synthetic polar additive may comprise at least ≥ 5 wt.-% of heteroatoms, based on the total weight of the synthetic and/or not-synthetic polar additive, wherein a heteroatom is any atom excluding C-atoms and H-atoms. This may lead to a polarity of the synthetic and/or not-synthetic polar additive that assists the migration of the organic aromatic coloring agent out of the colored synthetic and/or not-synthetic polar-polymer material and into the polar decoloring agent. Preferably the heteroatom is selected from the group comprising N, O, F, Cl, Br, I, S, and P. For example considering the amino acid histidine as synthetic and/or not-synthetic polar additive, Histidine has nitrogen and oxygen as heteroatoms. The wt.-% of oxygen is around 21 wt.-% the wt.-% of nitrogen is around 27 wt.-%. Together the wt.-% of heteroatoms is around 48 wt.%, which is above ≥ 5 wt.-%.

According to another preferred embodiment the polar decoloring agent may comprise at least ≥ 5 wt.-% of heteroatoms, based on the total weight of the polar decoloring agent, wherein a heteroatom is any atom excluding C-atoms and H-atoms. This may lead to a polarity of the polar decoloring agent that assists the migration of the organic aromatic coloring agent out of the colored synthetic and/or not-synthetic polar-polymer material and into the polar decoloring agent. Preferably the heteroatom is selected from the group comprising N, O, F, Cl, Br, I, S, and P.

As already mentioned above the polar decoloring agent may comprise the same substances as the colored synthetic and/or not-synthetic polar-polymer material, i.e. the synthetic and/or not-synthetic polar-polymer, the synthetic and/or not-synthetic polar-oligomer, and/or synthetic and/or not-synthetic polar-additive. According to a preferred embodiment the polar decoloring agent may be a synthetic and/or not-synthetic polar-polymer or mixture thereof, preferably the synthetic and/or not-synthetic polar-polymer or mixture thereof may be selected from the group comprising synthetic and/or not-synthetic polar-homo polymers, synthetic and/or not-synthetic polar-copolymers, and/or synthetic and/or not-synthetic polar-terpolymers.

A homopolymer may be a polymer that contains only a single type of repeat unit. A copolymer may be a polymer that contains two types of repeat units. A terpolymer may be a polymer that contains three types of repeat units. With regard to the copolymer and the terpolymer the different types of repeat units may be organized along the backbone in different ways. There may be a controlled arrangement of the different repeat units, a statistical distribution of the different repeat units, and/or a longer sequence of one specific repeat unit alternating a longer sequence of a different specific repeat unit.

Preferably the two different types of repeat units in the copolymer or the cooligomer are organized in blocks such that the copolymer or the cooligomer is a block copolymer or block cooligomer. More preferably the first type of repeat unit is non-polar and preferably comprises only C and H atoms. Preferably the second type of repeat unit is polar and comprises more than 5 wt.-% of heteroatoms based on the total weight of the repeat unit, wherein a heteroatom is any atom excluding C and H. These block copolymers and block oligomers may have the advantage that the migration of the organic aromatic coloring agent out of the synthetic and/or not-synthetic polar-polymer material is enhanced due to the formation of channels in the synthetic and/or not-synthetic polar-polymer material. Therefore, using these block copolymers and/or block cooligomers may lead to a faster decoloring of the colored synthetic and/or not-synthetic polar-polymer material if contained in an non-polar matrix of PE or PP. These block copolymers and block oligomers may be produced by radical polymerization and or radical oligomerization and/or by using coordinative polymerization methods with metal complex catalysts. However polymethylmethacrylates shows a much more increased migration of the organic aromatic coloring agent than the above described block copolymers and block oligomers if contained in a non-polar matrix of PE or PP.

### Synthetic and/or not-synthetic polar-polymer or mixture

The synthetic and/or not-synthetic polar-polymer or mixture thereof may be selected from the group comprising:
- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, tert-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl( meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably α-methylstyrene and α-ethylstyrene, substituted styrenes polymers with an alkyl substituent on the ring, preferably vinyl toluene, and p-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferabl, hydroxyl-functional dendritic polyesters, polycaprolactone, polyethylenterephthalate (PET), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diol-terephthalate, polypentaspiroglycol-terephthalate (PSG), polycyclohexylenedimethylene-terephthalate (PCT), polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)-acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such NH₂-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other synthetic and/or not-synthetic polar-polymer of amorphous copolyester that can be used are known under the tradename Akestra 90. The above named synthetic and/or not-synthetic polar-polymers may be used alone or in an admixture of two or more.

With regard to hydroxyl-functional dendritic polyesters that can be suitable used as a polar polymers, these molecules may be produced using polyalcohol cores, hydroxy acids and technology based on captive materials. The dendritic structures may be formed by polymerization of the particular core and 2,2-dimethylol propionic acid (Bis-MPA). The base products that may be obtained are hydroxyl-functional dendritic polyesters. They may be fully aliphatic and may consist only of tertiary ester bonds. They may provide excellent thermal and chemical resistance. Extensive branching also improves reactivity, lowers viscosity and results in balanced mechanical properties. The hydroxyl-functional dendritic polyesters may be known under the trade name Boltorn^{®}. The following dendritic polymers may be used as non-limiting examples: Boltorn^{®} H20 16 terminal hydroxyl groups, nominal molecular weight of 1750 g/mol, Boltorn^{®} H2004 6 terminal hydroxyl groups, nominal molecular weight of 3100 g/mol, Boltorn^{®} H311 23 terminal hydroxyl groups, nominal molecular weight of 5300 g/mol, Boltorn^{®} P500 Formulated bimodal product with terminal hydroxyl groups, nominal molecular weight 1800 g/mol, Boltorn^{®} P1000 formulated bimodal product with terminal hydroxyl groups, nominal molecular weight 1500 g/mol, Boltorn^{®} U3000 modified with unsaturated fatty acid, nominal molecular weight 6500 g/mol, Boltorn^{®} W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

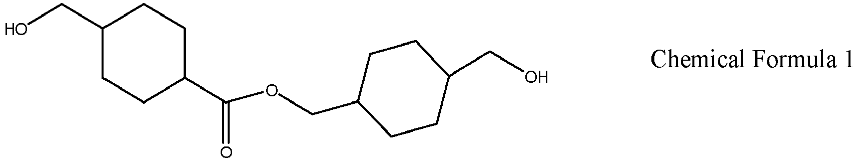

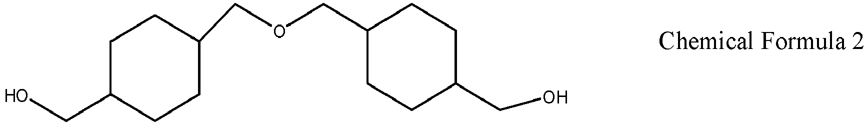

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid comonomer.

The synthetic and/or not-synthetic polar-polymer may also comprise the polyester based copolymers used in a mixture with polyethylene terephthalate (PET). The mixture may consist of 1 to 99 wt.% of PET and 1 to 99 wt.% of the polyester based copolymers, in order that both components add up to 100 wt.%. Additionally or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as poar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

### Synthetic and/or not-synthetic polar-oligomer and mixtures thereof

With respect to the synthetic and/or not-synthetic polar-oligomer and according to another embodiment the synthetic and/or not-synthetic polar-oligomer or mixture thereof may be selected from the group comprising:
- oligoacrylate with methyl (oligomethylacrylate), ethyl (oligoethylacrylate), propyl (oligopropylacrylate), or butyl (oligobutylacrylate),
- oligomethacrylate with methyl (oligomethylmathacrylate), ethyl (oligoethylmethacrylate), propyl (oligopropylmethacrylate), or butyl (oligobutylmethacrylate),
- cooligomers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates oligomers, preferably benzyl(meth)acrylate oligomers or phenyl(meth)acrylate oligomers, the aryl radicals each being unsubstituted or up to four times substituted;
- cycloalkyl(meth)acrylates oligomers, preferably 3-vinylcyclohexyl(meth)acrylate oligomers, bornyl (meth)acrylate oligomers;
- hydroxylalkyl (meth)acrylates oligomers, preferably 3- hydroxypropyl (meth)acrylate oligomers, 3,4- dihydroxybutyl(meth)acrylate oligomers, 2-hydroxyethyl(meth)acrylate oligomers, 2-hydroxypropyl(meth)acrylate oligomers;
- glycol di(meth)acrylates oligomers, preferably 1,4-butanediol (meth)acrylate oligomers;
- (meth)acrylates of ether alcohols oligomers, preferably tetrahydrofurfuryl (meth)acrylate oligomers, vinyloxyethoxyethyl(meth)acrylate oligomers;
- oligomers of amides and nitriles of the (meth)acrylic acid, preferably N-(3-dimethylaminopropyl)(meth)acrylamide oligomers, N-(diethylphosphono)(meth)acrylamide oligomers, 1-methacryloylamido-2-methyl-2-propanol oligomers;
- oligomers of sulfur-containing methacrylates, preferably ethylsulfinylethyl( meth)acrylate, 4-thiocyanatobutyl(meth)acrylate oligomers, ethylsulfonylethyl(meth)acrylate oligomers, thiocyanatomethyl(meth)acrylate oligomers, methylsulfinylmethyl(meth)acrylate oligomers, bis((meth)acryloyloxyethyl)sulfide oligomers;
- oligohydric (meth)acrylates, preferably trimethyloylpropanetri(meth)acrylate oligomers;
- acrylonitrile oligomers;
- vinyl ester oligomers, preferably vinyl acetate oligomers;
- styrene oligomers, substituted styrenes oligomers with an alkyl substituent in the side chain, preferably α-methylstyrene and α -ethylstyrene, substituted styrenes oligomers with an alkyl substituent on the ring, preferably vinyl toluene, and p-methylstyrene, halogenated styrene oligomers, preferably monochlorostyrene oligomers, dichlorostyrene oligomers, tribromostyrene oligomers and tetrabromostyrene oligomers;
- heterocyclic vinyl oligomers, preferably 2-vinylpyridine oligomers, 3-vinylpyridine oligomers, 2-methyl-5-vinylpyridine oligomers, 3-ethyl-4-vinylpyridine oligomers, 2,3-dimethyl-5-vinylpyridine oligomers, vinylpyrimidine oligomers, vinyl piperidine oligomers, 9-vinylcarbazole oligomers, 3-vinylcarbazole oligomers, 4-vinylcarbazole oligomers, 1-vinylimidazole oligomers, 2-methyl-1-vinylimidazole oligomers, N-vinylpyrrolidone oligomers, 2-vinylpyrrolidone oligomers, N-vinylpyrrolidine oligomers, 3-vinylpyrrolidine oligomers, N-vinylcaprolactam oligomers, N-vinylbutyrolactam oligomers, vinyl oxolane oligomers, vinyl furan oligomers, vinyl thiophene oligomers, vinylthiolane oligomers, vinylthiazoles and hydrogenated vinylthiazoles oligomers, vinyloxazoles and hydrogenated vinyloxazoles;
- oligomers of vinyl and isoprenyl ethers;
- maleic acid oligomers, preferably maleic anhydride oligomers, methyl maleic anhydride oligomers, maleimide oligomers, methyl maleimide; and
- cooligomers of ethylene and propylene with acrylic esters, preferably oligoethylen-block-co-oligomethylmethacrylat, oligopropylen-block-co-oligomethylmethacrylat;
- aliphatic and/or aromatic oligoesters, preferably oligocaprolactone, oligoethylen-terephthalate (PET), oligotrimethylenterephthalat (PTT), oligobutylenterephthalat (PBT), glycolized oligoglycolterephthaltat (G-PET), amorphes oligoethylenterephthalat (A-PET), oligoesters of terephthalic acid, oligospiro-diol-terephthalate, oligopentaspiroglycol-terephthalate (PSG), polycyclohexylenedimethylene-terephthalate, oligoester based cooligomer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, oligester based cooligomer including a dicarboxylic acid-derived residue including a residue derived from an aromatic dicarboxylic acid and a diol-derived residue including a residue derived from 4,4-(oxybis(methylene)bis) cyclohexane methanol;
- oligocarbonate (PC), 2,2-Bis-(4-hydroxyphenyl)-propan (Bisphenol A) oligocarbonate, 2,2-Bis-(4-hydroxyphenyl)-butan (Bisphenol B) oligocarbonate, 1,1-Bis(4-hydroxyphenyl)cyclohexan (Bisphenol C) oligocarbonate, 2,2'-Methylendiphenol (Bisphenol F) oligocarbonate, 2,2-Bis(3,5-dibrom-4-hydroxyphenyl)propan (Tetrabrombisphenol A) oligocarbonate und 2,2-Bis(3,5-dimethyl-4-hydroxyphenyl)propan (Tetramethylbisphenol A) oligocarbonate, bisphenol S oligocarbonate, dihydroxydiphenylsulfid oligocarbonate, tetramethylbisphenol A oligocarbonate, 1,1-Bis(4-hydroxyphenyl)-3,3,5-trimethylcyclohexane (BPTMC) oligocarbonate, 1,1,1-Tris(4-hydroxyphenyl)-ethane (THPE) oligocarbonate;
- aliphatic oligoamide (PA), preferably PA 6 based on oligocaprolactam, PA 6.6 based on 6,6-hexamethylendiamin and adipic acid, PA 6.66 based on caprolactam, co-poymer of hexamethylendiamin and adipic acid, PA 66.610 based on hexamethylenediamine, cooligomer of adipic acid and sebaic acid, PA 4.6, PA10, PA 12 and PA cooligomers;
- oligourethane (PU),
- polar-cooligomere, maleic anhydride-olefin cooligomer;
- oligoalkylenoxide, oligoalkylene block cooligomer, propylenoxide-ethylenoxide cooligomer, (m)ethylene acrylate-maleic anhydride cooligomer;
- polar-teroligomere, preferably reactive teroligomers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)-acrylate), propyl (propyl(meth)acrylate), or butyl (butyl(meth)acrylate), oligoamide, oligoester-oligoamides, or butyl (butyl(meth)acrylate), oligoether-oligoamide cooligomers;
- polar oligomer blends, preferably oligocarbonate/oligoethylenterephthalat blends (PC/PET blends), oligocarbonate/oligobutyleneterephthalate blends (PC/PBT blends), blends of oligocyclohexylene dimethylene terephthalate cooligomer, blends of oligo(butylene-adipate-terephthalate);
- oligoacrylnitril and oligoacrylnitril-cooligomers, preferably oligo acrylonitrile butadiene styrene (ABS), oligo styrene-acrylonitrile;
- oligostyrene and oligostyrene cooligomers, preferably styrene/butadiene co-oligomer (SBR), oligo styrene-isoprene-styrene (SIS), oligo(glycidyl methacrylate) grafted sulfonamide based oligostyrene resin with tertiary amine;
- ethylene-vinyl acetate;
- oligoether, preferably oligoethyleneglycol, oligoethyleneglycol with at least one fatty acid coupled to the oligoethyleneglycol, oligoether with terminating functional groups, preferbyl NH₂-terminated oligoethers,
- functionalized oligoacrylamide oligomers, cooligomers and teroligomers, preferably oligo(2-acrylamido-2-aminopropionicacid) (oligoAMPA), oligo(2-acrylamido-2-amino propane sulfonic acid), oligo(N-isopropylacylamide (oligoPNIPAM); oligo (amidoamine-co-acrylic acid) co-oligomer, oligo(N,N-dimethylacrylamide-co-sodium acrylate), oligo(acrylamide-co-sodium acrylate)/oligo(ethylene glycol) semi-IPN, oligo(acrylamide-co-sodium 4-styrenesulfonate), oligo(acrylamide-co-sodium 4-styrenesulfonate)/oligo(ethylene glycol) semi-IPN, oligo(acrylamide-co-sodium methacrylate), oligo(acrylamide-co-sodium methacrylate)/oligo(ethylene glycol) semi-IPN, and/or oligo(N-isopropylacrylamide-co-acrylic acid) andoligo(acrylamide-co-acrylic acid;
- oligo(ether sulfones)/oligo(ethyleneimine) (PES/PEI);
- oligovinylpyrrolidone, preferably oligo(N-vinyl-2-pyrrolidone), oligo(N-vinyl-2-pyrrolidone-co-acrylonitrile) treated with hydroxylamine-hydrochloride
- oligovinyl alcohol;
- oligo(1-naphthylamine)-camphorsulphonic acid; and mixtures thereof.

With regard to the oligester based cooligomers that can be suitable used as a polar oligomers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

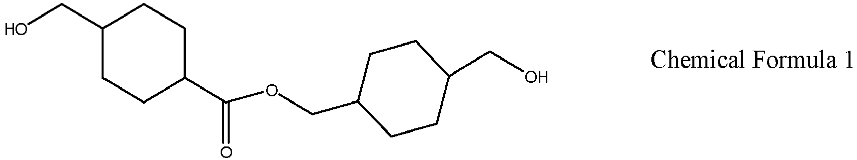

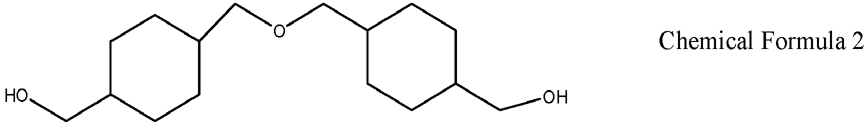

The compounds of chemical formula 1 and 2 can be cooligomerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the cooligomers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid comonomer.

The synthetic and/or not-synthetic polar-oligomer may also comprise the oligoester based cooligomers used in a mixture with oligoethylene terephthalate (PET). The mixture may consist of 1 to 99 wt.% of PET and 1 to 99 wt.% of the oligoester based cooligomers, in order that both components add up to 100 wt.%. Additionally or alternatively the compounds according to chemical formulas 1 and 2 may be used as co-monomers together with a further diol-component, e.g. ethylene glycol, in the preparation of the oligoester based cooligomers.

The oligoester based cooligomer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a oligocondensation reaction. In this case, other diols such as 1,4-cyclohexane dimethanol, ethylene glycol, diethylene glycol, or the like, as described above may be further reacted, such that a oligoester based cooligomer further including other diol-derived residues may be prepared.

With regard to the oligoether these may comprise but not limited to compounds that contains at least one oligoethyleneglycol moiety and at least one fatty acid moiety coupled to the oligoethyleneglycol moiety. The oligoethyleneglycol moiety may contain 8 or 9 ethyleneglycol repeating units.

The fatty acid moieties may be saturated or unsaturated and may contain 10 to 30 carbon atoms, preferably 16 to 22 carbon atoms.

Examples of these fatty acid moieties are oleate, laureate, stearate, palmitate and ricinoleate. Examples of compound that contain at least one polyethyleneglycol moiety and at least one fatty acid moiety coupled to the polyethyleneglycol moiety include PEG 300 di-oleate, PEG 300-distearate, PEG 400 dioleate, PEG 400 distearate, PEG 400 monooleate, PEG 400 monoricinoleate, PEG 400 monostearate.

A specific preferred example may be ethoxylated sorbitan oligoester. The ethoxylated sorbitan oligoester comprises a sorbitan group which is substituted by four oligoethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four oligoethylene glycol substituents and wherein the ester comprises between 18 and 22 ethylene glycol repeating units and wherein three of the ethylene glycol substituents are connected to oleate, laurate or stearate groups.

### Polar-additive and mixtures thereof

The polar additive may be solid at 23 °C. The polar additive may be not a dye. The polar additive may be solid at 23 °C and is not a dye. The polar additive may be solid at 23 °C and is not a dye, is selected different from the organic aromatic coloring agent.

According to one embodiment the polar additive may be added to the polar polymer material for decolorization therewith in a weight ratio of about 0.1:1 to 100:1, preferably of about 0.5:1 to 80:1, further preferred about 1:1 to 60:1, also preferred 2:1 to 50:1, in addition preferred of about 2.5:1 to 25:1, more preferred of about 3:1 to 10:1 and furthermore preferred 3.3: 1 to 5:1.

In connection to the polar-additive and according to an another embodiment the polar-additive having a Mw about ≥ 70 and < 600 g/mol may be selected from the group comprising aliphatic acids CH₃-[CH₂]ₙ-COOH acids (n about ≥ 3), amino acids, carboxylic acid amide, hydroxyl acids, fatty acids, aliphatic or aliphatic/aromatic aldehydes and ketones, esters, pentaerythritol, pentaerythritol ester preferably carboxylic acid ester, benzoic acid esters comprising benzylbenzoate or phenylbenzoate, phenylether, alcohols and polyvalent alcohols, preferably glycerine, amines, wherein the polar-additive is selected different to the organic aromatic coloring agent having a molecular weight Mw in the range of about ≥ 250 g/mol to about ≤ 550 g/mol; and preferably the polar-additive having a Mw about ≥ 100 and < 600 g/mol is containing a heteroatom selected from N, O, S and/or halogen. Preferably, halogens may be selected from the group comprising Cl, Br and I.

The carboxylic acid amide may comprise a compound according to formula C₂H₄(NHC(O)R³)₂, wherein R³ is a fatty acid moiety comprising 10-17 carbon atoms. The fatty acid moieties may be saturated or unsaturated.

Pentaerythritol may comprise a compound according to formula C(CH₂OR)₄, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore the polar additive may be an ether. Ether these may comprise but not limited to compounds that contains at least one ethylene glycol moiety and at least one fatty acid moiety coupled to the ethylene glycol moiety.

Examples of compound that contains at least one ethylene glycol moiety and at least one fatty acid moiety coupled to the polyethylene glycol moiety include PEG 300-monostearate, PEG 400 monolaurate.

The carboxylic acid ester may comprise a compound according to the following chemical formula 3: 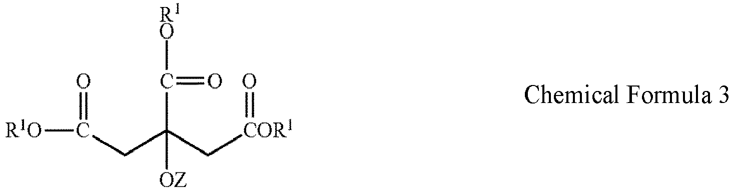 wherein R¹ is an alkyl group comprising 1-20 carbon atoms and Z is hydrogen or a group according to the formula C(O)R², wherein R² is an alkyl group comprising 1-20 carbon atoms. R¹ may be the same or different and is an alkyl group comprising 1-20 carbon atoms, preferably 1-15 carbon atoms, more preferably 1-10 carbon atoms. R² is an alkyl group comprising 1-20 carbon atoms, preferably 1-10 carbon atoms, more preferably 1-5 carbon atoms. Non-limiting examples of the carboxylic acid ester are triethylcitrate, tributyl citrate, trihexylcitrate, acetyltributylcitrate (ATBC; R¹ = C₄H₉, Z = CH₃CO), propanoyltributylcitrate, acetyltrihexylcitrate and butanoyltriethylcitrate.

Furthermore, as polar-additive 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

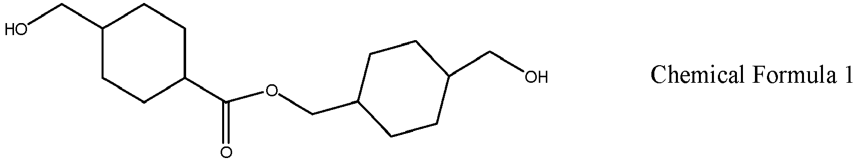

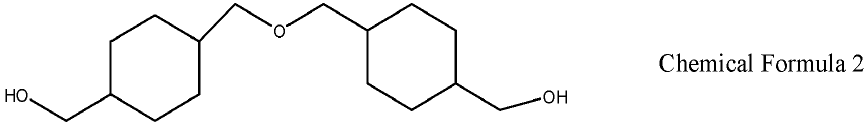

As already mentioned above, the colored synthetic and/or not-synthetic polar-polymer material that is decolored may comprise a synthetic and/or not-synthetic non-polar-polymer having a Mw about ≥ 1000 g/mol. In connection to this non-polar-polymer having a Mw about ≥ 1000 g/mol and according to an another embodiment the non-polar-polymer may be selected from the group of polyalkylene polymers, polyalkylene copolymers, polyakylene block copolymers. The non-polar-polymer may be preferably selected from of polymeric aliphatic or aromatic hydrocarbons, preferably polyalkylene polymers, polyalkylene co- and terpolymer with random or block-structure; and more preferred from polyethylen (PE), polypropylene (PP), polybutene (PB), polystyrene, polyisobutylene, polybutadiene, polyisoprene. Preferably the non-polar-polymer may have a wt.-% of heteroatoms below 5 wt.% with respect to the mass of the non-polar-polymer.

During the decoloring process it may be advantageous to enhance the movement of the colored synthetic and/or not-synthetic polar-polymer material in the polar solvent, and/or enhance the movement of the polar solvent. This may lead to a faster decoloring of the colored synthetic and/or not-synthetic polar-polymer material. According to a preferred embodiment of the method the step of exposing the colored synthetic and/or not-synthetic polar-polymer material to the polar solvent for decolorization may comprise,
- stirring the colored synthetic and/or not-synthetic polar-polymer material in the polar solvent while the outer surface of the colored synthetic and/or not-synthetic polar-polymer material is exposed to the polar solvent; and/or
- applying ultrasound to the polar solvent while the outer surface of the colored synthetic and/or not-synthetic polar-polymer material is exposed to the polar solvent; and/or
- exposing the polar solvent flow to the outer surface of the colored synthetic and/or not-synthetic polar-polymer material; and/or
- moving the colored synthetic and/or not-synthetic polar-polymer material through the polar solvent.
During the decoloring process the colored synthetic and/or not-synthetic polar-polymer material may have any form. The colored synthetic and/or not-synthetic polar-polymer material may have the form of an article, such as a bottle, a sheet, a foil, a tube, a container, a part, a non-woven fabric, and preferably the article may be selected from the group comprising computer face-plates, keyboards, bezels and cellular phones, color coded packaging and containers of all types, including ones for industrial components, residential and commercial lighting fixtures and components therefor, such as sheets, used in building and in construction, tableware, including plates, cups and eating utensils, small appliances and their components, optical and sun-wear lenses. It may be possible that the article is disintegrated in pieces or smaller parts. Furthermore, during the decoloring process the colored synthetic and/or not-synthetic polar-polymer material may have the form of flakes, particles and/or granulates.

With regard to further advantages and technical features of the decolorizing of an article it is an additional benefit that the decolorizing method allows a reversible and selective decolorizing of a colored synthetic and/or not-synthetic polar-polymer material.

To summarize the above, the present invention solves an important object how to design a decolorizing process to be environmentally friendly and energy saving.

Other example embodiments will be described in the following with reference to the examples 1 to 16. It has to be noted that the examples are only provided for illustration of the general concept by examples not defining the scope of protection of the invention. The examples are not drawn to scale. Features shall not be considered to be essential for the present invention because they are depicted in the examples.

### DETAILED DESCRIPTION OF THE EXAMPLES

The invention will be described in the following with reference to exemplary examples 1 to 16.

### Method for preparation of colored Article

### Example 1

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 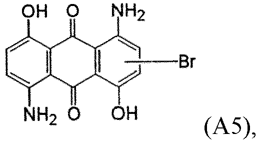 a dispersing agent of 3 g Efka^{®} 4300 (acrylic block-copolymer) obtainable by BASF SE and 200 ml of a polar solvent of ethanol, wherein the aqueous coloring solution contacting the polar polymer material has a temperature of 80° C. The polar polymer material layer is exposed to the aqueous coloring solution for about 8 minutes at a pH of 2.9. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 5 µm and the RGB: 98/145/220

### Example 2

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 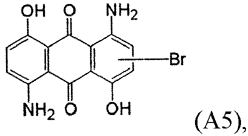 a dispersing agent of 2 g Efka^{®} 4300 (acrylic block-copolymer) obtainable by BASF SE and 200 ml of a polar solvent of 1-methoxy-2-propyl acetate, wherein the aqueous coloring solution contacting the polar polymer material has a temperature of 85° C at a pH of 3.2. The polar polymer material layer is exposed to the aqueous coloring solution for about 7 minutes. Thereafter the polar polymer material layer is removed from the aqueous coloring solution and the colored polar polymer material layer is rinsed with water of 30° C at least 3 times to remove color residuals.

The homogenous penetration dept. of the organic aromatic coloring agent (formula A5) in the polar polymer material layer is at least 6 µm and the RGB: 84/132/206

### Example 3

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 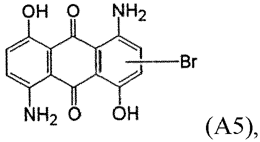 a dispersing agent of 2 g Efka^{®} PU 4050 (is a modified polyurethane) obtainable by BASF SE and 200 ml of a polar solvent of ethanol, wherein the aqueous coloring solution contacting the polar polymer material has a temperature of 90 C. The polar polymer material layer is exposed to the aqueous coloring solution for about 6 minutes at a pH of 3.9. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 8 µm and the RGB: 0/76/143.

### Example 4

A polar polymer material layer of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 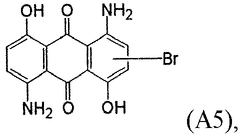 a dispersing agent of 2 g Efka^{®} PU 4050 (is a modified polyurethane) obtainable by BASF SE and 200 ml of a polar solvent of 1-methoxy-2-propyl acetate, wherein the aqueous coloring solution contacting the polar polymer material has a temperature of 95 C. The polar polymer material layer is exposed to the aqueous coloring solution for about 8minutes at a pH of 3.5. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 10 µm and the RGB: 0/30/87.

### Example 5

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A1: 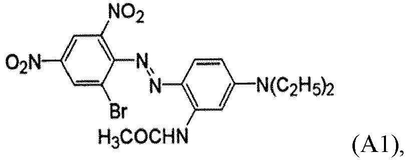 a dispersing agent of 3 g Efka^{®} 4300 (acrylic block-copolymer) obtainable by BASF SE and 200 ml of a polar solvent of ethanol, wherein the aqueous coloring solution contacting the polar polymer material has a temperature of 90° C. The polar polymer material layer is exposed to the aqueous coloring solution for about 5 minutes at a pH of 3.5. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A1) in the polar polymer material layer is at least 5 µm and the RGB: 157/174/182

### Example 6

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A2: 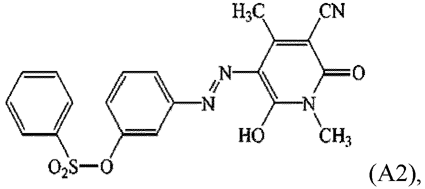 a dispersing agent of 2 g Efka^{®} 4300 (acrylic block-copolymer) obtainable by BASF SE and 200 ml of a polar solvent of 1-methoxy-2-propyl acetate, wherein the aqueous coloring solution contacting the polar polymer material has a temperature of 100° C at a pH of 4,2. The polar polymer material layer is exposed to the aqueous coloring solution for about 9 minutes. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A2) in the polar polymer material layer is at least 5 µm and the RGB: 255/254/0

### Example 7

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A3: 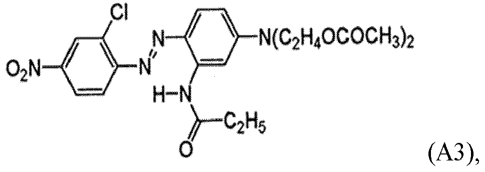 a dispersing agent of 2 g Efka^{®} PU 4050 (is a modified polyurethane) obtainable by BASF SE and 200 ml of a polar solvent of ethanol, wherein the aqueous coloring solution contacting the polar polymer material has a temperature of 80° C. The polar polymer material layer is exposed to the aqueous coloring solution for about 6 minutes at a pH of 3.8. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A3) in the polar polymer material layer is at least 3 µm and the RGB: 255/182/215

### Example 8

A polar polymer material layer of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A10: 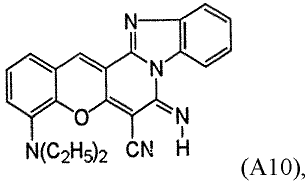 a dispersing agent of 2 g Efka^{®} PU 4050 (is a modified polyurethane) obtainable by BASF SE and 200 ml of a polar solvent of 1-methoxy-2-propyl acetate, wherein the aqueous coloring solution contacting the polar polymer material has a temperature of 80° C. The polar polymer material layer is exposed to the aqueous coloring solution for about 5 minutes at a pH of 6.5. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A10) in the polar polymer material layer is at least 10 µm and the RGB: 255/56/76

### Method for decolorizing colored articles according to examples 1 to 8

### Example 9

The colored polar polymer material layer obtained according to example 1 is shred to parts having a mean diameter of 3 mm to 5 mm. 10g of shred parts are placed in a pressure reactor containing polar solvent of 800 ml water and a polar solvent of 200 ml ethanol having a pH of 10 and a temperature of 100 °C. The pH 10 of the polar solvent was adjusted by adding NaOH before the shred parts are added to the polar solvent. 3 g of poly(amidoamine-co-acrylic acid)copolymer in form of particles having a mean particle size diameter of 1 mm to 2 mm was added to the polar solvent. The reaction mixture was stirred at 100 °C and under the pressure built up in the closed pressure reactor during the reaction time of 30 minutes. Thereafter the pressure inside the reactor was reduced to atmospheric pressure and the shredded polar polymer material was removed from the reactor. The remaining dye in the decolorized shredded polar polymer material was less than 5 wt.-%, based on 100 wt.-% of the dye of the colored polymer material before decolorization and colorless for the human eye.

### Example 10

The colored polar polymer material layer obtained according to example 2 is shred to parts having a mean diameter of 3 mm to 5 mm. 10g of shred parts are placed in a pressure reactor containing polar solvent of 800 ml water and a polar solvent of 200 ml dimethylformamide (DMF) having a pH of 9 and a temperature of 100 °C. The pH 9 of the polar solvent was adjusted by adding NaOH before the shred parts are added to the polar solvent. 3 g of poly(amidoamine-co-acrylic acid)copolymer in form of particles having a mean particle size diameter of 1 mm to 2 mm was added to the polar solvent. The reaction mixture was stirred at 100 °C and under the pressure built up in the closed pressure reactor during the reaction time of 45 minutes. Thereafter the pressure inside the reactor was reduced to atmospheric pressure and the shredded polar polymer material was removed from the reactor. The remaining dye in the decolorized shredded polar polymer material was less than 5 wt.-%, based on 100 wt.-% of the dye of the colored polymer material before decolorization and colorless for the human eye.

### Example 11

The colored polar polymer material layer obtained according to example 3 is shred to parts having a mean diameter of 3 mm to 5 mm. 10g of shred parts are placed in a pressure reactor containing polar solvent of 800 ml water and a polar solvent of 200 ml ethanol having a pH of 12 and a temperature of 110 °C. The pH 12 of the polar solvent was adjusted by adding NaOH before the shred parts are added to the polar solvent. 3 g of poly(amidoamine-co-acrylic acid)copolymer in form of particles having a mean particle size diameter of 1 mm to 2 mm was added to the polar solvent. The reaction mixture was stirred at 110 °C and under the pressure built up in the closed pressure reactor during the reaction time of 45 minutes. Thereafter the pressure inside the reactor was reduced to atmospheric pressure and the shredded polar polymer material was removed from the reactor. The shredded polar polymer material after decolorization is slightly bluish shimmering - RGB: 250/254/255. The remaining dye in the decolorized shredded polar polymer material was less than 5 wt.-%, based on 100 wt.-% of the dye of the colored polymer material before decolorization.

### Example 12

The colored polar polymer material layer obtained according to example 4 is shred to parts having a mean diameter of 3 mm to 5 mm. 10g of shred parts are placed in a pressure reactor containing polar solvent of 800 ml water and a polar solvent of 200 ml dimethylformamide (DMF) having a pH of 12 and a temperature of 120 °C. The pH 12 of the polar solvent was adjusted by adding NaOH before the shred parts are added to the polar solvent. 4 g of poly(amidoamine-co-acrylic acid)copolymer in form of particles having a mean particle size diameter of 1 mm to 2 mm was added to the polar solvent. The reaction mixture was stirred at 120 °C and under the pressure built up in the closed pressure reactor during the reaction time of 60 minutes. Thereafter the pressure inside the reactor was reduced to atmospheric pressure and the shredded polar polymer material was removed from the reactor. The shredded polar polymer material after decolorization is slightly bluish - RGB: 240/254/255. The remaining dye in the decolorized shredded polar polymer material was less than 5 wt.-%, based on 100 wt.-% of the dye of the colored polymer material before decolorization.

### Example 13

The colored polar polymer material layer obtained according to example 5 is shred to parts having a mean diameter of 3 mm to 5 mm. 10g of shred parts are placed in a pressure reactor containing polar solvent of 800 ml water and a polar solvent of 200 ml ethanol having a pH of 8 and a temperature of 120 °C. The pH 8 of the polar solvent was adjusted by adding NaOH before the shred parts are added to the polar solvent. 3 g of poly(acrylamide-co-sodium methacrylate) hydrogel in form of particles having a mean particle size diameter of 1 mm to 2 mm was added to the polar solvent. The reaction mixture was stirred at 120 °C and under the pressure built up in the closed pressure reactor during the reaction time of 30 minutes. Thereafter the pressure inside the reactor was reduced to atmospheric pressure and the shredded polar polymer material was removed from the reactor. The remaining dye in the decolorized shredded polar polymer material was less than 5 wt.%, based on 100 wt.-% of the dye of the colored polymer material before decolorization and colorless for the human eye.

### Example 14

The colored polar polymer material layer obtained according to example 6 is shred to parts having a mean diameter of 3 mm to 5 mm. 10g of shred parts are placed in a pressure reactor containing polar solvent of 800 ml water and a polar solvent of 200 ml dimethylformamide (DMF) having a pH of 5 and a temperature of 110 °C. The pH 5 of the polar solvent was adjusted by adding acidic acid before the shred parts are added to the polar solvent. 3 g of poly(acrylamide-co-sodium methacrylate)hydrogel in form of particles having a mean particle size diameter of 1 mm to 2 mm was added to the polar solvent. The reaction mixture was stirred at 110 °C and under the pressure built up in the closed pressure reactor during the reaction time of 15 minutes. Thereafter the pressure inside the reactor was reduced to atmospheric pressure and the shredded polar polymer material was removed from the reactor. The remaining dye in the decolorized shredded polar polymer material was less than 5 wt.-%, based on 100 wt.-% of the dye of the colored polymer material before decolorization and colorless for the human eye.

### Example 15

The colored polar polymer material layer obtained according to example 7 is shred to parts having a mean diameter of 3 mm to 5 mm. 10g of shred parts are placed in a pressure reactor containing polar solvent of 800 ml water and a polar solvent of 200 ml Ethanol having a pH of 8 and a temperature of 120 °C. The pH 8 of the polar solvent was adjusted by adding NaOH before the shred parts are added to the polar solvent. 2 g of poly(acrylamide-co-sodium methacrylate)hydrogel in form of particles having a mean particle size diameter of 1 mm to 2 mm was added to the polar solvent. The reaction mixture was stirred at 120 °C and under the pressure built up in the closed pressure reactor during the reaction time of 30 minutes. Thereafter the pressure inside the reactor was reduced to atmospheric pressure and the shredded polar polymer material was removed from the reactor. The remaining dye in the decolorized shredded polar polymer material was less than 5 wt.-%, based on 100 wt.-% of the dye of the colored polymer material before decolorization and colorless for the human eye.

### Example 16

The colored polar polymer material layer obtained according to example 8 is shred to parts having a mean diameter of 3 mm to 5 mm. 10g of shred parts are placed in a pressure reactor containing polar solvent of 800 ml water and a polar solvent of 200 ml dimethylformamide (DMF) having a pH of 10 and a temperature of 110 °C. The pH 10 of the polar solvent was adjusted by adding NaOH before the shred parts are added to the polar solvent. 3 g of poly(acrylamide-co-sodium methacrylate)hydrogel in form of particles having a mean particle size diameter of 1 mm to 2 mm was added to the polar solvent. The reaction mixture was stirred at 110 °C and under the pressure built up in the closed pressure reactor during the reaction time of 30 minutes. Thereafter the pressure inside the reactor was reduced to atmospheric pressure and the shredded polar polymer material was removed from the reactor. The shredded polar polymer material after decolorization is slightly reddish shimmering - RGB: 255/223/221. The remaining dye in the decolorized shredded polar polymer material was less than 5 wt.-%, based on 100 wt.-% of the dye of the colored polymer material before decolorization.

It can be taken from examples 9 to 16 that the process of the present invention is a very mild, efficient and environmental friendly method for decolorizing a colorized polar polymer material, wherein the dye is removed from the colorized polar-polymer material. Further the polar decoloring agent that absorbs/adsorbs the dye can be used to recoloring a polymer material by adding thereto.

Depicted or described connections between components are generally to be understood to be functional connections. They can be implemented as direct links or as indirect links via several other components. The order of presented actions is not mandatory; alternative orders are possible. Actions can be implemented in different ways. They could be implemented in software using program instructions; or they could be implemented in hardware; or they could be implemented making use of a combination of hardware and software. It is to be understood that the described embodiments are examples only, which may be modified and/or supplemented in many ways within the scope of the claims. In particular, any feature described for a particular embodiment can be used by itself or in combination with other features in any other embodiment. Each feature that has been described for an embodiment of a particular category can also be used in an equivalent manner in an embodiment of any other category.

## Claims

1. Method for decolorizing a colored synthetic and/or not-synthetic polar-polymer material, comprising the steps:
exposing the colored synthetic and/or not-synthetic polar-polymer material to a polar solvent at a temperature of ≥ 30°C to ≤ 200 °C,
wherein the colored synthetic and/or not-synthetic polar-polymer material is solid while being exposed to the polar solvent,
wherein the polar solvent comprises and/or is exposed to at least one polar decoloring agent for absorbing and/or adsorbing the color from the colored synthetic and/or not-synthetic polar-polymer material;
wherein the colored synthetic and/or not-synthetic polar-polymer material to be decolorized comprises:
- at least one organic aromatic coloring agent having a molecular weight Mw in the range of ≥ 250 g/mol to ≤ 550 g/mol, wherein the organic aromatic coloring agent is not a chemical reactive organic aromatic coloring agent that forms a chemical covalently bound;
i) at least one synthetic and/or not-synthetic polar-polymer having a Mw of ≥ 1000 g/mol, or
ii) at least one synthetic and/or not-synthetic non-polar-polymer having a Mw of ≥ 1000 g/mol;
wherein the synthetic and/or not-synthetic non-polar-polymer comprises in addition:
- at least one synthetic and/or not-synthetic polar-polymer having a Mw of ≥ 1000 g/mol, and/or
- at least one synthetic and/or not-synthetic polar-oligomer having a Mw of ≥ 600 g/mol and < 1000 g/mol, and/or
- at least one synthetic and/or not-synthetic polar-additive having a Mw of ≥ 70 and < 600 g/mol;
wherein the polar-additive is selected different to the organic aromatic coloring agent having a molecular weight Mw in the range of ≥ 250 g/mol to ≤ 550 g/mol;
wherein the polar decoloring agent is selected from the group comprising:
- at least one synthetic and/or not-synthetic polar-polymer having a Mw of ≥ 1000 g/mol, and/or
- at least one synthetic and/or not-synthetic polar-oligomer having a Mw of ≥ 600 g/mol and < 1000 g/mol, and/or
- at least one synthetic and/or not-synthetic polar-additive having a Mw of ≥ 70 and < 600 g/mol, wherein the synthetic and/or not-synthetic polar-additive is solid at 23 °C and selected different to the organic aromatic coloring agent having a molecular weight Mw in the range of ≥ 250 g/mol to ≤ 550 g/mol; and
wherein the polar decoloring agent before used in the decolorization process is preferably free of a dye; and
wherein the polar decoloring agent has a higher concentration of synthetic and/or not synthetic polar-polymer, synthetic and/or not-synthetic polar-oligomer, and/or synthetic and/or not-synthetic polar-additive than the colored synthetic and/or not-synthetic polar-polymer material.

2. The method according to claim 1, wherein the colored synthetic and/or not-synthetic polar-polymer material is decolorized by exposing the colored synthetic and/or not-synthetic polar-polymer material to the polar solvent at a temperature of ≥ 30°C to ≤ 200 °C, wherein the temperature of the polar solvent is selected ≥ the glass-transition temperature T_{g} and below the decomposition temperature of the colored synthetic and/or not-synthetic polar-polymer material, preferably the temperature of the polar solvent is selected > T_{g} and ≤ the melting temperature Tₘ of the colored synthetic and/or not-synthetic polar-polymer material wherein the glass transition temperature T_{g} and melting temperature Tₘ are determined according to DIN 51007, ASTM E 474, ASTM D 3418, DIN EN ISO 11357-1, ISO 11357-2, ISO / DIS 11357-3, and/or ISO 11357-4.

3. The method according to claim 1 or 2, wherein the colored synthetic and/or not-synthetic polar-polymer material is decolorized by exposing the colored synthetic and/or not-synthetic polar-polymer material to the polar solvent for ≥ 15 seconds to ≤ 240 minutes, preferably ≥ 1 minute to ≤ 180 minutes, further preferred for ≥ 5 minutes to ≤ 60 minutes, and also preferred for ≥ 10 minutes to ≤ 20 minutes.

4. The method according to any of claims 1 to 3, wherein the polar solvent is liquid at 23 °C and comprises at least one polar solvent or a mixture of polar solvents, wherein the polar solvent is a solvent or solvent mixture having a dipole, and is preferably selected from the group comprising water, and/or at least one polar organic solvent; wherein further preferred the polar solvent is a mixture of liquids not forming a homogeneous mixture when added together.

5. The method according to any of claims 1 to 4, wherein the polar organic solvent or polar organic solvent mixture is selected from the group C₁ to C₆ - alcohol, preferably ethanol and isopropanol, glycols such as diethylene glycol and its oligomers, C₃ to C₆ - ketone, preferably acetone, C₂ to C₆ - aldehyde, C₁ to C₆ - carboxylic acid and their derivatives such as acid chlorides or acid amides, other polar aromatic solvents liquid at 23 °C, preferably DMSO, DMF, benzylic alcohol, linear or cyclic aliphatic ethers, preferably diethyl ether or tetrahydrofuran, esters such as ethyl acetate, benzyl benzoate, halogenated solvents such as dichloromethane or trichloromethane.

6. The method according to any of claims 1 to 5, wherein the polar organic solvent is adjusted to a pH in the range of ≥ 2 to ≤ 13, preferably ≥ 4 to ≤ 10, ≥ 6 to ≤ 8, or 7 ± 0.5, wherein the pH is adjusted preferably by adding an acid or basic agent.

7. The method according to any of the preceding claims 1 to 6, wherein the organic aromatic coloring agent has a molecular weight Mw in the range of ≥ 250 g/mol to ≤ 550 g/mol, preferably the organic aromatic coloring agent has a molecular weight Mw in the range of ≥ 270 g/mol to ≤ 450 g/mol, and more preferably the organic aromatic coloring agent has a molecular weight Mw in the range of ≥ 285 g/mol to ≤ 400 g/mol.

8. The method according to any of the preceding claims 1 to 7, wherein the organic aromatic coloring agent has a solubility in water at 23 °C of ≤ 0.1 g/l and > 0 g/l, preferably ≤ 0.01 g/l and > 0 g/l, more preferably ≤ 0.001 g/l and > 0 g/l.

9. The method according to any of the preceding claims 1 to 8, wherein the organic aromatic coloring agent comprises at least 2 to 6 aromatic six-membered rings, at least 3 to 5 aromatic six-membered rings and at least 1 to 4 five-membered rings, or having at least 2 to 6 aromatic six-membered rings; and/or wherein the organic aromatic coloring agent comprises at least on heteroatom selected from N, O, S, Br.

10. The method according to any of claims 1 to 9, wherein polar decoloring agent comprises polar, acidic, and/or basic groups, wherein polar groups for electrostatic interaction are preferred.

11. The method according to any of claims 1 to 10, wherein the polar decoloring agent has the form of:
- thin foils, flakes, particles, granulates, preferably the particles, granulates of the polar decoloring agent may have a mean particle size diameter of 0.1 mm to 100 mm, further preferred 1 mm to 50 mm and also preferred 2 mm to 10 mm, more preferred the particles, granulates of the polar decoloring agent may have a round shape, and most preferred the shape of a thin foil, and/or
- thin foils, flakes, particles, granulates, preferably the particles, granulates of the polar decoloring agent may have a mean particle size diameter of 0.01 mm to 10 mm, further preferred 1 mm to 8 mm and also preferred 2 mm to 5 mm, and more preferred the particles, granulates of the polar decoloring agent may have a round shape, are arranged on or in the surface of a solid substrate, and/or
- nano-particles having a mean particle size diameter of ≥ 1 nm to ≤ 100 nm, preferably the nano-particles are arranged on the surface of a solid substrate

12. The method according to any of claims 1 to 11, wherein colored polar decoloring agent due to absorption and/or adsorption of the organic aromatic coloring agent, having a molecular weight Mw in the range of ≥ 250 g/mol to ≤ 550 g/mol, wherein the organic aromatic coloring agent is not a chemical reactive organic aromatic coloring agent that forms a chemical covalently bound, is separated from the polar solvent.

13. The method according to any of claims 1 to 12, wherein the colored polar decoloring agent that is separated from the polar solvent is replaced with polar decoloring agent that is free of the organic aromatic coloring agent having a molecular weight Mw in the range of ≥ 250 g/mol to ≤ 550 g/mol.

14. The method according to any of claims 1 to 13, wherein the separated colored polar decoloring agent is decolorized, preferably decolorized by:
- an oxidation process, preferably by exposing to at least one oxidation agent select from the group comprising of peroxide, peroxyacetic acid, hydrogen peroxide, ozone, sodium percarbonate, sodium perborate, sodium percarbonate, m-Nitrobenzolsulfonat, H₂SO₄, HNO₃, oxygen-containing anions (oxo anions) of transition metals in high oxidation states such as permanganate MnO₄⁻, KMnO₄, phosphate, oxygen difluoride fluorine, cryptone difluoride, dichromate Cr₂0₇²⁻, metal ions such as Ce₄⁺, noble metal ions such as those of silver and copper, anions of halo-oxygen acids such bromat BrO₃⁻, halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, S²⁻, Na₂S, sulfites, SO2⁻³, sodium sulfite, sulfurous acid, sulfur dioxide, thiosulphate, sodium dithionite, sodium bisulfite, NaHSO₃, formamidine sulfonic acid, sodium hydroxymethanesulfinate also known as rongalite, thiourea dioxide also knwon as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDLTLITE GIN; and/or
- adsorption and/or absorption process, preferably by exposing to carbon black, zeolites.

15. The method according to any of claims 1 to 14, wherein after exposing the colored synthetic and/or not-synthetic polar-polymer material to the polar solvent the method further comprises the step of further decolorizing the colored synthetic and/or not-synthetic polar-polymer material by:
- an oxidation process, preferably by exposing to at least one oxidation agent select from the group comprising of peroxide, peroxyacetic acid, hydrogen peroxide, ozone, sodium percarbonate, sodium perborate, sodium percarbonate, m-Nitrobenzolsulfonat, H₂SO₄, HNO₃, oxygen-containing anions (oxo anions) of transition metals in high oxidation states such as permanganate MnO₄⁻, KMnO₄, phosphate, oxygen difluoride fluorine, cryptone difluoride, dichromate Cr₂0₇²⁻, metal ions such as Ce₄⁺, noble metal ions such as those of silver and copper, anions of halo-oxygen acids such bromat BrO₃⁻, halogens, such as fluorine, chlorine, bromine and iodine, hypochlorite, sodium hypochlorite, and/or potassium hypochlorite;
- a reduction process, preferably by exposing to at least one reduction agent select from the group comprising hydrides, H-, NaH, lithium aluminum hydride, sodium hydride, hydrogen sulfide, sodium sulfide, S²⁻, Na₂S, sulfites, SO2⁻³, sodium sulfite, sulfurous acid, sulfur dioxide, thiosulphate, sodium dithionite, sodium bisulfite, NaHSO₃, formamidine sulfonic acid, sodium hydroxymethanesulfinate also known as rongalite, thiourea dioxide also knwon as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULITE GIN; and/or
- adsorption and/or absorption process, preferably by exposing to carbon black, zeolites.

16. The method according to any of claims 1 to 15, wherein the colored synthetic and/or not-synthetic polar-polymer material after decolorization comprises ≥ 0 wt.-% to ≤ 10 wt.-%, preferably ≥ 0.01 wt.-% to ≤ 5 wt.-%, and further preferred ≥ 0.1 wt.-% to ≤ 1 wt.-% of organic aromatic coloring agent having a molecular weight Mw in the range of ≥ 250 g/mol to ≤ 550 g/mol, wherein the organic aromatic coloring agent is not a chemical reactive organic aromatic coloring agent that forms a chemical covalently bound, based on the total amount of said organic aromatic coloring agent in the colored synthetic and/or not-synthetic polar-polymer material before it is decolorized.

17. The method according to any of claims 1 to 16, wherein the colored synthetic and/or not-synthetic polar-polymer material, before it is decolorized, comprises 0.00001 wt.% to ≤ 10 wt.%, preferably 0.001 wt.% to ≤ 5 wt.%, further preferred 0.01 wt.% to ≤ 3 wt.%, also preferred 0.1 wt.% to ≤ 2 wt.%, and in addition preferred 0.5 wt.% to ≤ 1 wt.%, organic aromatic coloring agent, based on the total weight of the colored synthetic and/or not-synthetic polar-polymer material before it is decolorized.

18. The method according to any of claims 1 to 17, wherein the colored synthetic and/or not-synthetic polar-polymer material that is exposed to the polar solvent for decolorization has the form of an article, flakes, particles or granulates.

19. The method according to any of claims 1 to 18, wherein the decolorization process of the colored synthetic and/or not-synthetic polar-polymer material is carried out in a pressure vessel at a pressure above atmospheric pressure.

20. The method according to any of claims 1 to 19, wherein
- the synthetic and/or not-synthetic polar-polymer comprise at least ≥ 5 wt.-% of heteroatoms, based on the total weight of the synthetic and/or not-synthetic polar-polymer, wherein a heteroatom is any atom excluding C-atoms and H-atoms; and/or
- the synthetic and/or not-synthetic polar-oligomer comprise at least ≥ 5 wt.-% of heteroatoms, based on the total weight of the synthetic and/or not-synthetic polar-oligomer, wherein a heteroatom is any atom excluding C-atoms and H-atoms; and/or
- the synthetic and/or not-synthetic polar additive comprise at least ≥ 5 wt.-% of heteroatoms, based on the total weight of the synthetic and/or not-synthetic polar additive, wherein a heteroatom is any atom excluding C-atoms and H-atoms; and/or
- the polar decoloring agent comprise at least ≥ 5 wt.-% of heteroatoms, based on the total weight of the polar decoloring agent, wherein a heteroatom is any atom excluding C-atoms and H-atoms.

21. The method according to any of claims 1 to 20, wherein the polar decoloring agent is a synthetic and/or not-synthetic polar-polymer or mixture thereof, preferably the synthetic and/or not-synthetic polar-polymer or mixture thereof is selected from the group comprising synthetic and/or not-synthetic polar-homo polymers, synthetic and/or not-synthetic polar-copolymers, and/or synthetic and/or not-synthetic polar-terpolymers, further preferred the synthetic and/or not-synthetic polar-polymer or mixture thereof is selected from the group:
- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl( meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably α-methylstyrene and α -ethylstyrene, substituted styrenes polymers with an alkyl substituent on the ring, preferably vinyl toluene, and p-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide; and
- dienes polymers, preferably divinylbenzene polymers;
- copolymers of ethylene and propylene with acrylic esters, preferably polyethylenblock-co-polymethylmethacrylat, polypropylen-block-co-polymethylmethacrylat;
- aliphatic and/or aromatic polyesters, preferabl, hydroxyl-functional dendritic polyesters, polycaprolactone, polyethylenterephthalate (PET), polytrimethylenterephthalat (PTT), polybutylenterephthalat (PBT), glycolized polyglycolterephthaltat (G-PET), amorphes polyethylenterephthalat (A-PET), polyesters of terephthalic acid, polyspiro-diol-terephthalate, polypentaspiroglycol-terephthalate (PSG), polycyclohexylenedimethylene-terephthalate, polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate- terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such NH₂-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol;
- poly(1-naphthylamine)-camphorsulphonic acid.

22. The method according to any of claims 1 to 21, wherein the polar decoloring agent is a synthetic and/or not-synthetic polar-oligomer or mixture thereof, preferably the synthetic and/or not-synthetic polar-oligomer or mixture thereof is selected from the group comprising of synthetic and/or not-synthetic polar-homo oligomers, synthetic and/or not-synthetic polar-cooligomers, and/or synthetic and/or not-synthetic polar-teroligomers, further preferred the synthetic and/or not-synthetic polar-oligomer is selected from the group comprising:
- oligoacrylate with methyl (oligomethylacrylate), ethyl (oligoethylacrylate), propyl (oligopropylacrylate), or butyl (oligobutylacrylate),
- oligomethacrylate with methyl (oligomethylmathacrylate), ethyl (oligoethylmethacrylate), propyl (oligopropylmethacrylate), or butyl (oligobutylmethacrylate),
- cooligomers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates oligomers, preferably benzyl(meth)acrylate oligomers or phenyl(meth)acrylate oligomers, the aryl radicals each being unsubstituted or up to four times substituted;
- cycloalkyl(meth)acrylates oligomers, preferably 3-vinylcyclohexyl(meth)acrylate oligomers, bornyl (meth)acrylate oligomers;
- hydroxylalkyl (meth)acrylates oligomers, preferably 3- hydroxypropyl (meth)acrylate oligomers, 3,4- dihydroxybutyl(meth)acrylate oligomers, 2-hydroxyethyl(meth)acrylate oligomers, 2-hydroxypropyl(meth)acrylate oligomers;
- glycol di(meth)acrylates oligomers, preferably 1,4-butanediol (meth)acrylate oligomers;
- (meth)acrylates of ether alcohols oligomers, preferably tetrahydrofurfuryl (meth)acrylate oligomers, vinyloxyethoxyethyl(meth)acrylate oligomers;
- oligomers of amides and nitriles of the (meth)acrylic acid, preferably N-(3-dimethylaminopropyl)(meth)acrylamide oligomers, N-(diethylphosphono)(meth)acrylamide oligomers, 1-methacryloylamido-2-methyl-2-propanol oligomers;
- oligomers of sulfur-containing methacrylates, preferably ethylsulfinylethyl( meth)acrylate, 4-thiocyanatobutyl(meth)acrylate oligomers, ethylsulfonylethyl(meth)acrylate oligomers, thiocyanatomethyl(meth)acrylate oligomers, methylsulfinylmethyl(meth)acrylate oligomers, bis((meth)acryloyloxyethyl)sulfide oligomers;
- oligohydric (meth)acrylates, preferably trimethyloylpropanetri(meth)acrylate oligomers;
- acrylonitrile oligomers;
- vinyl ester oligomers, preferably vinyl acetate oligomers;
- styrene oligomers, substituted styrenes oligomers with an alkyl substituent in the side chain, preferably α-methylstyrene and α -ethylstyrene, substituted styrenes oligomers with an alkyl substituent on the ring, preferably vinyl toluene, and p-methylstyrene, halogenated styrene oligomers, preferably monochlorostyrene oligomers, dichlorostyrene oligomers, tribromostyrene oligomers and tetrabromostyrene oligomers;
- heterocyclic vinyl oligomers, preferably 2-vinylpyridine oligomers, 3-vinylpyridine oligomers, 2-methyl-5-vinylpyridine oligomers, 3-ethyl-4-vinylpyridine oligomers, 2,3-dimethyl-5-vinylpyridine oligomers, vinylpyrimidine oligomers, vinylpiperidine oligomers, 9-vinylcarbazole oligomers, 3-vinylcarbazole oligomers, 4-vinylcarbazole oligomers, 1-vinylimidazole oligomers, 2-methyl-1-vinylimidazole oligomers, N-vinylpyrrolidone oligomers, 2-vinylpyrrolidone oligomers, N-vinylpyrrolidine oligomers, 3-vinylpyrrolidine oligomers, N-vinylcaprolactam oligomers, N-vinylbutyrolactam oligomers, vinyl oxolane oligomers, vinyl furan oligomers, vinyl thiophene oligomers, vinylthiolane oligomers, vinylthiazoles and hydrogenated vinylthiazoles oligomers, vinyloxazoles and hydrogenated vinyloxazoles;
- oligomers of vinyl and isoprenyl ethers;
- maleic acid oligomers, preferably maleic anhydride oligomers, methyl maleic anhydride oligomers, maleimide oligomers, methyl maleimide; and
- dienes oligomers, preferably divinylbenzene oligomers;
- cooligomers of ethylene and propylene with acrylic esters, preferably oligoethylenblock-co-oligomethylmethacrylat, oligopropylen-block-co-oligomethylmethacrylat;
- aliphatic and/or aromatic oligoesters, preferabl, hydroxyl-functional dendritic oligoesters, preferably oligocaprolactone, oligoethylenterephthalate (PET), oligotrimethylenterephthalat (PTT), oligobutylenterephthalat (PBT), glycolized oligoglycolterephthaltat (G-PET), amorphes oligoethylenterephthalat (A-PET), oligoesters of terephthalic acid, oligospiro-diol-terephthalate, oligopentaspiroglycol-terephthalate (PSG), polycyclohexylenedimethylene-terephthalate, oligoester based cooligomer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, oligester based cooligomer including a dicarboxylic acid-derived residue including a residue derived from an aromatic dicarboxylic acid and a diol-derived residue including a residue derived from 4,4-(oxybis(methylene)bis) cyclohexane methanol;
- oligocarbonate (PC), 2,2-Bis-(4-hydroxyphenyl)-propan (Bisphenol A) oligocarbonate, 2,2-Bis-(4-hydroxyphenyl)-butan (Bisphenol B) oligocarbonate, 1,1-Bis(4-hydroxyphenyl)cyclohexan (Bisphenol C) oligocarbonate, 2,2'-Methylendiphenol (Bisphenol F) oligocarbonate, 2,2-Bis(3,5-dibrom-4-hydroxyphenyl)propan (Tetrabrombisphenol A) oligocarbonate und 2,2-Bis(3,5-dimethyl-4-hydroxyphenyl)propan (Tetramethylbisphenol A) oligocarbonate, bisphenol S oligocarbonate, dihydroxydiphenylsulfid oligocarbonate, tetramethylbisphenol A oligocarbonate, 1,1-Bis(4-hydroxyphenyl)-3,3,5-trimethyl-cyclohexane (BPTMC) oligocarbonate, 1,1,1-Tris(4-hydroxyphenyl)-ethane (THPE) oligocarbonate;
- aliphatic oligoamide (PA), preferably PA 6 based on oligocaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, cooligomer of adipic acid and sebaic acid, PA 4.6, PA10, PA 12 and PA cooligomers;
- oligourethane (PU),
- polar-cooligomere, maleic anhydride-olefin cooligomer;
- oligoalkylenoxide, oligoalkylene block cooligomer, propylenoxide-ethylenoxide cooligomer, (m)ethylene acrylate-maleic anhydride cooligomer;
- polar-teroligomere, preferably reactive teroligomers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), oligoamide, oligoester-oligoamides, or butyl (butyl(meth)acrylate), oligoether-oligoamide cooligomers;
- polar oligomer blends, preferably oligocarbonate/oligoethylenterephthalat blends (PC/PET blends), oligocarbonate/oligobutyleneterephthalate blends (PC/PBT blends), blends of oligocyclohexylene dimethylene terephthalate cooligomer, blends of oligo(butylene-adipate- terephthalate);
- oligoacrylnitril and oligoacrylnitril-cooligomers, preferably oligo acrylonitrile butadiene styrene (ABS), oligo styrene-acrylonitrile;
- oligostyrene and oligostyrene cooligomers, preferably styrene/butadiene co-oligomer (SBR), oligo styrene-isoprene-styrene (SIS), oligo(glycidyl methacrylate) grafted sulfonamide based oligostyrene resin with tertiary amine;
- ethylene-vinyl acetate;
- oligoether, preferably oligoethyleneglycol, oligoethyleneglycol with at least one fatty acid coupled to the oligoethyleneglycol, oligoether with terminating functional groups, preferbyl NH₂-terminated oligoethers,
- functionalized oligoacrylamide oligomers, cooligomers and teroligomers, preferably oligo(2-acrylamido-2-aminopropionicacid) (oligoAMPA), oligo(2-acrylamido-2-amino propane sulfonic acid), oligo(N-isopropylacylamide (oligoPNIPAM); oligo (amidoamine-co-acrylic acid) co-oligomer, oligo(N,N-dimethylacrylamide-co-sodium acrylate), oligo(acrylamide-co-sodium acrylate)/oligo(ethylene glycol) semi-IPN, oligo(acrylamide-co-sodium 4-styrenesulfonate), oligo(acrylamide-co-sodium 4-styrenesulfonate)/oligo(ethylene glycol) semi-IPN, oligo(acrylamide-co-sodium methacrylate), oligo(acrylamide-co-sodium methacrylate)/oligo(ethylene glycol) semi-IPN, and/or oligo(N-isopropylacrylamide-co-acrylic acid) andoligo(acrylamide-co-acrylic acid;
- oligo(ether sulfones)/oligo(ethyleneimine) (PES/PEI);
- oligovinylpyrrolidone, preferably oligo(N-vinyl-2-pyrrolidone), oligo(N-vinyl-2-pyrrolidone-co-acrylonitrile) treated with hydroxylamine-hydrochloride
- oligovinyl alcohol;
- oligo(1-naphthylamine)-camphorsulphonic acid.

23. The method according to any of claims 1 to 22, wherein the polar decoloring agent is a synthetic and/or not-synthetic polar-additive having a Mw ≥ 70 and < 600 g/mol, preferably the synthetic and/or not-synthetic polar-additive having a Mw ≥ 70 and < 600 g/mol is selected from the group comprising aliphatic acids CH₃-[CH₂]ₙ-COOH acids (n ≥ 3), amino acids, carboxylic acid amide, hydroxyl acids, fatty acids, aliphatic or aliphatic/aromatic aldehydes and ketones, esters, pentaerythritol, pentaerythritol ester preferably carboxylic acid ester, benzoic acid esters comprising benzylbenzoat or phenylbenzoat, phenylether, alcohols and polyvalent alcohols, preferably glycerine, amines and/or mixtures thereof; and
wherein the synthetic and/or not-synthetic polar-additive is selected different to the organic aromatic coloring agent having a molecular weight Mw in the range of ≥ 250 g/mol to ≤ 550 g/mol and is solid at 23° C and is preferably free of a dye .

24. The method according to any of claims 1 to 23, wherein the polar decoloring agent is added to the colorized polymer material for decolorization in a weight ratio of 0.1:1 to 100:1, preferably of 0.5:1 to 80:1, further preferred 1:1 to 60:1, also preferred 2:1 to 50:1, in addition preferred of 2.5:1 to 25:1, more preferred of 3:1 to 10:1 and furthermore preferred 3.3: 1 to 5:1.

25. The method according to any of claims 1 to 24,wherein the non-polar-polymer is selected from the group of polyalkylene polymers, polyalkylene copolymers, polyakylene block copolymers; the non-polar-polymer is preferably selected from of polymeric aliphatic or aromatic hydrocarbons, preferably polyalkylene polymers, polyalkylene co- and terpolymer with random or block-structure; and more preferred from polyethylen (PE), polypropylene (PP), polybutene (PB), polystyrene, polyisobutylene, polybutadiene, polyisoprene.

26. The method according to any of the previous claims 1 to 25, wherein the step of exposing the colored synthetic and/or not-synthetic polar-polymer material to the polar solvent for decolorization comprises,
- stirring the colored synthetic and/or not-synthetic polar-polymer material in the polar solvent while the outer surface of the colored synthetic and/or not-synthetic polar-polymer material is exposed to the polar solvent; and/or
- applying ultrasound to the polar solvent while the outer surface of the colored synthetic and/or not-synthetic polar-polymer material is exposed to the polar solvent; and/or
- exposing the polar solvent flow to the outer surface of the colored synthetic and/or not-synthetic polar-polymer material; and/or
- moving the colored synthetic and/or not-synthetic polar-polymer material through the polar solvent.

## Patentansprüche

1. Verfahren zum Entfärben eines gefärbten synthetischen und/oder nicht-synthetischen polaren Polymermaterials, mit den Schritten:
Aussetzen des gefärbten synthetischen und/oder nicht-synthetischen polaren Polymermaterials gegenüber einem polaren Lösungsmittel bei einer Temperatur von ≥ 30°C bis ≤ 200°C, wobei
das gefärbte synthetische und/oder nicht-synthetische polare Polymermaterial fest ist, während es dem polaren Lösungsmittel ausgesetzt ist,
wobei das polare Lösungsmittel mindestens ein polares Entfärbungsmittel zum Absorbieren und/oder Adsorbieren der Farbe von dem gefärbten synthetischen und/oder nicht-synthetischen polaren Polymermaterial aufweist und/oder diesem ausgesetzt wird,
wobei das zu entfärbende gefärbte synthetische und/oder nicht-synthetische polare Polymermaterial aufweist:
mindestens ein organisches aromatisches Färbemittel mit einem Molekulargewicht Mw im Bereich von ≥ 250 g/mol bis ≤ 550 g/mol, wobei das organische aromatische Färbemittel kein chemisch reaktives organisches aromatisches Färbemittel ist, das eine chemische kovalente Bindung bildet,
i) mindestens ein synthetisches und/oder nicht-synthetisches polares Polymer mit einem Mw von ≥ 1000 g/mol, oder
ii) mindestens ein synthetisches und/oder nicht-synthetisches unpolares Polymer mit einem Mw von ≥ 1000 g/mol,
wobei das synthetische und/oder nicht-synthetische unpolare Polymer zusätzlich aufweist:
- mindestens ein synthetisches und/oder nicht-synthetisches polares Polymer mit einem Mw von ≥ 1000 g/mol, und/oder
- mindestens ein synthetisches und/oder nicht-synthetisches polares Oligomer mit einem Mw von ≥ 600 g/mol und < 1000 g/mol, und/oder
- mindestens ein synthetisches und/oder nicht-synthetisches polares Additiv mit einem Mw von ≥ 70 und < 600 g/mol,
wobei das polare Additiv vom organischen aromatischen Färbemittel mit einem Molekulargewicht Mw im Bereich von ≥ 250 g/mol bis ≤ 550 g/mol verschieden ist,
wobei das polare Entfärbungsmittel ausgewählt ist aus der Gruppe, die aufweist:
- mindestens ein synthetisches und/oder nicht-synthetisches polares Polymer mit einem Mw von ≥ 1000 g/mol, und/oder
- mindestens ein synthetisches und/oder nicht-synthetisches polares Oligomer mit einem Mw von ≥ 600 g/mol und < 1000 g/mol, und/oder
- mindestens ein synthetisches und/oder nicht-synthetisches polares Additiv mit einem Mw von ≥ 70 und < 600 g/mol, wobei das synthetische und/oder nicht-synthetische polare Additiv bei 23°C fest ist und vom organischen aromatischen Färbemittel mit einem Molekulargewicht Mw im Bereich von ≥ 250 g/mol bis ≤ 550 g/mol verschieden ist, und
wobei das polare Entfärbungsmittel vor der Verwendung in dem Entfärbungsverfahren vorzugsweise frei von einem Farbstoff ist, und
wobei das polare Entfärbungsmittel eine höhere Konzentration an synthetischem und/oder nicht-synthetischem polarem Polymer, synthetischem und/oder nicht-synthetischem polarem Oligomer und/oder synthetischem und/oder nicht-synthetischem polarem Additiv aufweist als das gefärbte synthetische und/oder nicht-synthetische polare Polymermaterial.

2. Verfahren nach Anspruch 1, wobei das gefärbte synthetische und/oder nicht-synthetische polare Polymermaterial entfärbt wird, indem das gefärbte synthetische und/oder nicht-synthetische polare Polymermaterial dem polaren Lösungsmittel bei einer Temperatur von ≥ 30°C bis ≤ 200°C ausgesetzt wird, wobei die Temperatur des polaren Lösungsmittels ≥ die Glasübergangstemperatur T_{g} und unterhalb der Zersetzungstemperatur des gefärbten synthetischen und/oder nicht-synthetischen polaren Polymermaterials gewählt ist, vorzugsweise wird die Temperatur des polaren Lösungsmittels > T_{g} und ≤ die Schmelztemperatur Tₘ des gefärbten synthetischen und/oder nicht-synthetischen polaren Polymermaterials gewählt, wobei die Glasübergangstemperatur T_{g} und die Schmelztemperatur Tₘ gemäß DIN 51007, ASTM E 474, ASTM D 3418, DIN EN ISO 11357-1, ISO 11357-2, ISO / DIS 11357-3 und/oder ISO 11357-4 bestimmt werden.

3. Verfahren nach Anspruch 1 oder 2, wobei das gefärbte synthetische und/oder nicht-synthetische polare Polymermaterial entfärbt wird, indem das gefärbte synthetische und/oder nicht-synthetische polare Polymermaterial dem polaren Lösungsmittel für ≥ 15 Sekunden bis ≤ 240 Minuten, vorzugsweise ≥ 1 Minute bis ≤ 180 Minuten, bevorzugter ≥ 5 Minuten bis ≤ 60 Minuten und ebenfalls bevorzugt ≥ 10 Minuten bis ≤ 20 Minuten ausgesetzt wird.

4. Verfahren nach einem der Ansprüche 1 bis 3, wobei das polare Lösungsmittel bei 23°C flüssig ist und mindestens ein polares Lösungsmittel oder ein Gemisch von polaren Lösungsmitteln enthält, wobei das polare Lösungsmittel ein Lösungsmittel oder Lösungsmittelgemisch mit einem Dipol ist und vorzugsweise aus der Gruppe ausgewählt ist, die Wasser und/oder mindestens ein polares organisches Lösungsmittel aufweist, wobei bevorzugter das polare Lösungsmittel eine Mischung von Flüssigkeiten ist, die keine homogene Mischung bilden, wenn sie zusammengegeben werden.

5. Verfahren nach einem der Ansprüche 1 bis 4, wobei das polare organische Lösungsmittel oder das polare organische Lösungsmittelgemisch ausgewählt ist aus der Gruppe C₁- bis C₆-Alkohol, vorzugsweise Ethanol und Isopropanol, Glykole wie Diethylenglykol und seine Oligomere, C₃- bis C₆-Keton, vorzugsweise Aceton, C₂- bis C₆-Aldehyd, C₁- bis C₆-Carbonsäure und ihre Derivate wie Säurechloride oder Säureamide, andere polare aromatische Lösungsmittel, die bei 23°C flüssig sind, vorzugsweise DMSO, DMF, Benzylalkohol, lineare oder cyclische aliphatische Ether, vorzugsweise Diethylether oder Tetrahydrofuran, Ester wie Ethylacetat, Benzylbenzoat, halogenierte Lösungsmittel wie Dichlormethan oder Trichlormethan.

6. Verfahren nach einem der Ansprüche 1 bis 5, wobei das polare organische Lösungsmittel auf einen pH-Wert im Bereich von ≥ 2 bis ≤ 13, vorzugsweise ≥ 4 bis ≤ 10, ≥ 6 bis ≤ 8 oder 7 ± 0,5 eingestellt wird, wobei der pH-Wert vorzugsweise durch Zugabe einer Säure oder eines basischen Mittels eingestellt wird.

7. Verfahren nach einem der vorhergehenden Ansprüche 1 bis 6, wobei das organische aromatische Färbemittel ein Molekulargewicht Mw im Bereich von ≥ 250 g/mol bis ≤ 550 g/mol hat, vorzugsweise hat das organische aromatische Färbemittel ein Molekulargewicht Mw im Bereich von ≥ 270 g/mol bis ≤ 450 g/mol, und noch bevorzugter hat das organische aromatische Färbemittel ein Molekulargewicht Mw im Bereich von ≥ 285 g/mol bis ≤ 400 g/mol.

8. Verfahren nach einem der vorhergehenden Ansprüche 1 bis 7, wobei das organische aromatische Färbemittel eine Löslichkeit in Wasser bei 23°C von ≤ 0,1 g/l und > 0 g/l, vorzugsweise ≤ 0,01 g/l und > 0 g/l, bevorzugter ≤ 0,001 g/l und > 0 g/l, aufweist.

9. Verfahren nach einem der vorhergehenden Ansprüche 1 bis 8, wobei das organische aromatische Färbemittel mindestens 2 bis 6 aromatische sechsgliedrige Ringe, mindestens 3 bis 5 aromatische sechsgliedrige Ringe und mindestens 1 bis 4 fünfgliedrige Ringe oder mindestens 2 bis 6 aromatische sechsgliedrige Ringe aufweist, und/oder wobei das organische aromatische Färbemittel mindestens ein aus N, O, S, Br ausgewähltes Heteroatom aufweist.

10. Verfahren nach einem der Ansprüche 1 bis 9, wobei das polare Entfärbungsmittel polare, saure und/oder basische Gruppen enthält, wobei polare Gruppen für eine elektrostatische Wechselwirkung bevorzugt sind.

11. Verfahren nach einem der Ansprüche 1 bis 10, wobei das polare Entfärbungsmittel die Form hat von:
- dünnen Folien, Flocken, Partikeln, Granulat, wobei bevorzugt die Partikel oder das Granulat des polaren Entfärbungsmittels einen mittleren Partikeldurchmesser von 0,1 mm bis 100 mm, bevorzugter 1 mm bis 50 mm und ebenfalls bevorzugt 2 mm bis 10 mm haben können, wobei bevorzugter die Partikel oder das Granulat des polaren Entfärbungsmittels eine runde Form haben können, und am bevorzugtesten die Form einer dünnen Folie, und/oder
- dünnen Folien, Flocken, Partikeln, Granulat, wobei vorzugsweise die Partikel oder das Granulat des polaren Entfärbungsmittels einen mittleren Partikeldurchmesser von 0,01 mm bis 10 mm, bevorzugter 1 mm bis 8 mm und ebenfalls bevorzugt 2 mm bis 5 mm haben können, und wobei noch bevorzugter die Partikel oder das Granulat des polaren Entfärbungsmittels eine runde Form haben können und auf oder in der Oberfläche eines festen Substrats angeordnet sind, und/oder
- Nanopartikeln mit einem mittleren Partikeldurchmesser von ≥ 1 nm bis ≤ 100 nm, wobei vorzugsweise die Nanopartikel auf der Oberfläche eines festen Substrats angeordnet sind.

12. Verfahren nach einem der Ansprüche 1 bis 11, wobei das gefärbte polare Entfärbungsmittel aufgrund von Absorption und/oder Adsorption des organischen aromatischen Färbemittels mit einem Molekulargewicht Mw im Bereich von ≥ 250 g/mol bis ≤ 550 g/mol, wobei das organische aromatische Färbemittel kein chemisch reaktives organisches aromatisches Färbemittel ist, das eine chemische kovalente Bindung bildet, vom polaren Lösungsmittel getrennt wird.

13. Verfahren nach einem der Ansprüche 1 bis 12, wobei das gefärbte polare Entfärbungsmittel, das von dem polaren Lösungsmittel getrennt wird, durch ein polares Entfärbungsmittel ersetzt wird, das frei vom organischen aromatischen Färbemittel ist und ein Molekulargewicht Mw im Bereich von ≥ 250 g/mol bis ≤ 550 g/mol aufweist.

14. Verfahren nach einem der Ansprüche 1 bis 13, wobei das getrennte gefärbte polare Entfärbungsmittel entfärbt wird, vorzugsweise entfärbt wird durch:
- ein Oxidationsverfahren, vorzugsweise durch Aussetzen gegenüber mindestens einem Oxidationsmittel, das ausgewählt ist aus der Gruppe, die Peroxid, Peroxyessigsäure, Wasserstoffperoxid, Ozon, Natriumpercarbonat, Natriumperborat, Natriumpercarbonat, m-Nitrobenzolsulfonat, H₂SO₄, HNO₃, sauerstoffhaltige Anionen (Oxoanionen) von Übergangsmetallen in hohen Oxidationsstufen wie Permanganat MnO₄⁻, KMnO₄, Phosphat, Sauerstoffdifluorid, Kryptondifluorid, Dichromat Cr₂O₇²⁻, Metallionen wie Ce₄⁺, Edelmetallionen wie die von Silber und Kupfer, Anionen von Halogensauerstoffsäuren wie Bromat BrO₃⁻, Halogene wie Fluor, Chlor, Brom und Jod, Hypochlorit, Natriumhypochlorit und/oder Kaliumhypochlorit aufweist;
- ein Reduktionsverfahren, vorzugsweise durch Aussetzen gegenüber mindestens einem Reduktionsmittel, das ausgewählt ist aus der Gruppe, die Hydride, H-, NaH, Lithiumaluminiumhydrid, Natriumhydrid, Schwefelwasserstoff, Natriumsulfid, S²⁻, Na₂S, Sulfite, SO2⁻³, Natriumsulfit, schweflige Säure, Schwefeldioxid, Thiosulfat, Natriumdithionit, Natriumbisulfit, NaHSO₃, Formamidinsulfonsäure, Natriumhydroxymethansulfinat, auch bekannt als Rongalit, Thioharnstoffdioxid, auch bekannt als Thiox, Sulfonsäure und ihre Derivate, Borhydridsalze, Natriumhydroxid, Natriumcarbonat, Natriumbicarbonat, Natriumoxid und Mischungen von Natriumhydroxid und Calciumoxid, Sulfinsäurederivate, Borhydride und/oder REDULITE GIN aufweist; und/oder
- Adsorptions- und/oder Absorptionsverfahren, vorzugsweise durch Aussetzen gegenüber Ruß, Zeolithen.

15. Verfahren nach einem der Ansprüche 1 bis 14, wobei nach dem Aussetzen des gefärbten synthetischen und/oder nicht-synthetischen polaren Polymermaterigegenüber dem polaren Lösungsmittel das Verfahren ferner den Schritt zum weiteren Entfärben des gefärbten synthetischen und/oder nicht-synthetischen polaren Polymermaterials aufweist durch:
- ein Oxidationsverfahren, vorzugsweise durch Aussetzen gegenüber mindestens einem Oxidationsmittel, das ausgewählt ist aus der Gruppe, die Peroxid, Peroxyessigsäure, Wasserstoffperoxid, Ozon, Natriumpercarbonat, Natriumperborat, Natriumpercarbonat, m-Nitrobenzolsulfonat, H₂SO₄, HNO₃, sauerstoffhaltige Anionen (Oxoanionen) von Übergangsmetallen in hohen Oxidationsstufen wie Permanganat MnO₄⁻, KMnO₄, Phosphat, Sauerstoffdifluorid, Kryptondifluorid, Dichromat Cr₂O₇²⁻, Metallionen wie Ce₄⁺, Edelmetallionen wie die von Silber und Kupfer, Anionen von Halogensauerstoffsäuren wie Bromat BrO₃⁻, Halogene wie Fluor, Chlor, Brom und Jod, Hypochlorit, Natriumhypochlorit und/oder Kaliumhypochlorit aufweist;
- ein Reduktionsverfahren, vorzugsweise durch Aussetzen gegenüber mindestens einem Reduktionsmittel, das ausgewählt ist aus der Gruppe, die Hydride, H-, NaH, Lithiumaluminiumhydrid, Natriumhydrid, Schwefelwasserstoff, Natriumsulfid, S²⁻, Na₂S, Sulfite, SO2⁻³, Natriumsulfit, schweflige Säure, Schwefeldioxid, Thiosulfat, Natriumdithionit, Natriumbisulfit, NaHSO₃, Formamidinsulfonsäure, Natriumhydroxymethansulfinat, auch bekannt als Rongalit, Thioharnstoffdioxid, auch bekannt als Thiox, Sulfonsäure und ihre Derivate, Borhydridsalze, Natriumhydroxid, Natriumcarbonat, Natriumbicarbonat, Natriumoxid und Mischungen von Natriumhydroxid und Calciumoxid, Sulfinsäurederivate, Borhydride und/oder REDULITE GIN aufweist; und/oder
- Adsorptions- und/oder Absorptionsverfahren, vorzugsweise durch Aussetzen gegenüber Ruß, Zeolithen.

16. Verfahren nach einem der Ansprüche 1 bis 15, wobei das gefärbte synthetische und/oder nicht-synthetische polare Polymermaterial nach dem Entfärben ≥ 0 Gew.-% bis ≤ 10 Gew.-%, vorzugsweise ≥ 0,01 Gew.-% bis ≤ 5 Gew.-%, und bevorzugter ≥ 0,1 Gew.-% bis ≤ 1 Gew.-% organisches aromatisches Färbemittel mit einem Molekulargewicht Mw im Bereich von ≥ 250 g/mol bis ≤ 550 g/mol aufweist, bezogen auf die Gesamtmenge des organischen aromatischen Färbemittels in dem gefärbten synthetischen und/oder nicht-synthetischen polaren Polymermaterial, bevor es entfärbt wird, wobei das organische aromatische Färbemittel kein chemisch reaktives organisches aromatisches Färbemittel ist, das eine chemische kovalente Bindung bildet.

17. Verfahren nach einem der Ansprüche 1 bis 16, wobei das gefärbte synthetische und/oder nicht-synthetische polare Polymermaterial, bevor es entfärbt wird, 0,00001 Gew.-% bis ≤ 10 Gew.-%, vorzugsweise 0,001 Gew.-% bis ≤ 5 Gew.-%, bevorzugter 0,01 Gew.-% bis ≤ 3 Gew.-%, ebenfalls bevorzugt 0,1 Gew.-% bis ≤ 2 Gew.-% und weiter bevorzugt 0,5 Gew.-% bis ≤ 1 Gew.-% organisches aromatisches Färbemittel enthält, bezogen auf das Gesamtgewicht des gefärbten synthetischen und/oder nicht-synthetischen polaren Polymermaterials vor dem Entfärben.

18. Verfahren nach einem der Ansprüche 1 bis 17, wobei das gefärbte synthetische und/oder nicht-synthetische polare Polymermaterial, das dem polaren Lösungsmittel zum Entfärben ausgesetzt wird, die Form eines Artikels, von Flocken, Partikeln oder Granulat hat.

19. Verfahren nach einem der Ansprüche 1 bis 18, wobei der Entfärbungsprozess des gefärbten synthetischen und/oder nicht-synthetischen polaren Polymermaterials in einem Druckbehälter bei einem Druck oberhalb des Atmosphärendrucks ausgeführt wird.

20. Verfahren nach einem der Ansprüche 1 bis 19, wobei
- das synthetische und/oder nicht-synthetische polare Polymer mindestens ≥ 5 Gew.-% Heteroatome, bezogen auf das Gesamtgewicht des synthetischen und/oder nicht-synthetischen polaren Polymers, aufweist, wobei ein Heteroatom ein beliebiges Atom mit Ausnahme von C-Atomen und H-Atomen ist, und/oder
- das synthetische und/oder nicht-synthetische polare Oligomer mindestens ≥ 5 Gew.-% Heteroatome, bezogen auf das Gesamtgewicht des synthetischen und/oder nicht-synthetischen polaren Oligomers, aufweist, wobei ein Heteroatom ein beliebiges Atom mit Ausnahme von C-Atomen und H-Atomen ist; und/oder
- das synthetische und/oder nicht-synthetische polare Additiv mindestens ≥ 5 Gew.-% Heteroatome, bezogen auf das Gesamtgewicht des synthetischen und/oder nicht-synthetischen polaren Additivs, aufweist, wobei ein Heteroatom ein beliebiges Atom mit Ausnahme von C-Atomen und H-Atomen ist; und/oder
- das polare Entfärbungsmittel mindestens ≥ 5 Gew.-% Heteroatome, bezogen auf das Gesamtgewicht des polaren Entfärbungsmittels, aufweist, wobei ein Heteroatom ein beliebiges Atom mit Ausnahme von C-Atomen und H-Atomen ist.

21. Verfahren nach einem der Ansprüche 1 bis 20, wobei das polare Entfärbungsmittel ein synthetisches und/oder nicht-synthetisches polares Polymer oder ein Gemisch davon ist, wobei das synthetische und/oder nicht-synthetische polare Polymer oder das Gemisch davon vorzugsweise aus der Gruppe ausgewählt ist, die synthetische und/oder nicht-synthetische polare Homopolymere, synthetische und/oder nicht-synthetische polare Copolymere und/oder synthetische und/oder nicht-synthetische polare Terpolymere aufweist, wobei das synthetische und/oder nicht-synthetische polare Polymer oder das Gemisch davon ferner vorzugsweise aus der Gruppe ausgewählt ist, die
- Polyacrylat mit Methyl (Polymethylacrylat), Ethyl (Polyethylacrylat), Propyl (Polypropylacrylat), oder Butyl (Polybutylacrylat),
- Polymethacrylat mit Methyl (Polymethylmathacrylat), Ethyl (Polyethylmethacrylat), Propyl (Polypropylmethacrylat) oder Butyl (Polybutylmethacrylat),
- Copolymere von Acryl- und Methacrylsäureestern, darunter u.a. tert-Butyl(meth)acrylat, Pentyl(meth)acrylat und 2-Ethylhexyl(meth)acrylat, von ungesättigten Alkoholen gewonnene (Meth)acrylate, vorzugsweise Oleyl(meth)acrylat, 2-Propynyl(meth)acrylat, Allyl(meth)acrylat, Vinyl(meth)acrylat;
- Aryl(meth)acrylatpolymere, vorzugsweise Benzyl(meth)acrylatpolymere oder Phenyl(meth)acrylatpolymere, wobei die Arylradikale jeweils unsubstituiert oder bis zu vierfach substituiert sind;
- Cycloalkyl(meth)acrylatpolymere, vorzugsweise 3-Vinylcyclohexyl(meth)acrylatpolymere, Bornyl(meth)acrylatpolymere;
- Hydroxylalkyl(meth)acrylatpolymere, vorzugsweise 3-Hydroxypropyl(meth)acrylatpolymere, 3,4-Dihydroxybutyl(meth)acrylatpolymere, 2-Hydroxyethyl(meth)acrylatpolymere, 2-Hydroxypropyl(meth)acrylatpolymere;
- Glykol-di(meth)acrylatpolymere, vorzugsweise 1,4-Butandiol(meth)acrylatpolymere;
- (Meth)acrylate von Etheralkoholpolymeren, vorzugsweise Tetrahydrofurfuryl(meth)acrylatpolymere, Vinyloxyethoxyethyl(meth)acrylatpolymere;
- Polymere von Amiden und Nitrilen der (Meth)acrylsäure, vorzugsweise N-(3-Dimethylaminopropyl)(meth)acrylamidpolymere, N-(Diethylphosphono)(meth)acrylamidpolymere, 1-Methacryloylamido-2-methyl-2-propanolpolymere;
- Polymere von schwefelhaltigen Methacrylaten, vorzugsweise Ethylsulfinylethyl(meth)acrylat, 4-Thiocyanatobutyl(meth)acrylatpolymere, Ethylsulfonylethyl(meth)acrylatpolymere, Thiocyanatomethyl(meth)acrylatpolymere, Methylsulfinylmethyl(meth)acrylatpolymere, Bis((meth)acryloyloxyethyl)sulfldpolymere;
- polyhydrische (Meth)acrylate, vorzugsweise Trimethyloylpropanetri(meth)acrylatpolymere;
- Acrylnitrilpolymere;
- Vinylesterpolymere, vorzugsweise Vinylacetatpolymere;
- Styrolpolymere, substituierte Styrolpolymere mit einem Alkylsubstituenten in der Seitenkette, vorzugsweise α-Methylstyrol und α-Ethylstyrol, substituierte Styrolpolymere mit einem Alkylsubstituenten auf dem Ring, vorzugsweise Vinyltoluol, und p-Methylstyrol, halogenierte Styrolpolymere, vorzugsweise Monochlorstyrolpolymere, Dichlorstyrolpolymere, Tribromstyrolpolymere und Tetrabromstyrolpolymere;
- heterocyclische Vinylpolymere, vorzugsweise 2-Vinylpyridinpolymere, 3-Vinylpyridinpolymere, 2-Methyl-5-vinylpyridinpolymere, 3-Ethyl-4-vinylpyridinpolymere, 2,3-Dimethyl-5-vinylpyridinpolymere, Vinylpyrimidinpolymere, Vinylpiperidinpolymere, 9-Vinylcarbazolpolymere, 3-Vinylcarbazolpolymere, 4-Vinylcarbazolpolymere, 1-Vinylimidazolpolymere, 2-Methyl-1-vinylimidazolpolymere, N-Vinylpyrrolidonpolymere, 2-Vinylpyrrolidonpolymere, N-Vinylpyrrolidinpolymere, 3-Vinylpyrrolidinpolymere, N-Vinylcaprolactampolymere, N-Vinylbutyrolactampolymere, Vinyloxolanpolymere, Vinylfuranpolymere, Vinylthiophenpolymere, Vinylthiolanpolymere, Vinylthiazole und hydrierte Vinylthiazolpolymere, Vinyloxazole und hydrierte Vinyloxazole;
- Polymere von Vinyl- und Isoprenylethern;
- Maleinsäurepolymere, vorzugsweise Maleinsäureanhydridpolymere, Methylmaleinsäureanhydridpolymere, Maleinimidpolymere, Methylmaleinimid; und
- Dienpolymere, vorzugsweise Divinylbenzolpolymere;
- Copolymere von Ethylen und Propylen mit Acrylestern, vorzugsweise Polyethylenblock-co-Polymethylmethacrylat, Polypropylenblock-co-Polymethylmethacrylat;
- aliphatische und/oder aromatische Polyester, vorzugsweise hydroxylfunktionelle dendritische Polyester, Polycaprolacton, Polyethylenterephthalat (PET), Polytrimethylenterephthalat (PTT), Polybutylenterephthalat (PBT), glykolisiertes Polyglykolterephthalat (G-PET), amorphes Polyethylenterephthalat (A-PET), Polyester der Terephthalsäure, Polyspirodiolterephthalat, Polypentaspiroglykolterephthalat (PSG), Polycyclohexylendimethylenterephthalat, Copolymer auf Polyesterbasis, das einen von einer Dicarbonsäure gewonnenen Rest, einschließlich eines von einer aromatischen Dicarbonsäure gewonnenen Rest, und einen von einem Diol gewonnenen Rest, einschließlich eines von 4-(Hydroxymethyl)cyclohexylmethyl-4'-(hydroxymethyl)cyclohexancarboxylat gewonnenen Rests, enthält, ein Copolymer auf Polyesterbasis, das einen von einer Dicarbonsäure gewonnenen Rest einschließlich eines von einer aromatischen Dicarbonsäure gewonnenen Rests, und einen von einem Diol gewonnenen Rest einschließlich eines von 4,4-(Oxy-bis(methylen)bis)cyclohexanmethanol gewonnenen Rests enthält;
- Polycarbonat (PC), 2,2-Bis-(4-hydroxyphenyl)-propan- (Bisphenol A) Polycarbonat, 2,2-Bis-(4-hydroxyphenyl)-butan- (Bisphenol B) Polycarbonat, 1,1-Bis(4-hydroxyphenyl)cyclohexan- (Bisphenol C) Polycarbonat, 2,2 '-Methylendiphenol- (Bisphenol F) Polycarbonat, 2,2-Bis(3,5-Dibrom-4-hydroxyphenyl)propan- (Tetrabrombisphenol A) Polycarbonat und 2,2-Bis(3,5-Dimethyl-4-hydroxyphenyl)propan- (Tetramethylbisphenol A) Polycarbonat, Bisphenol-S-Polycarbonat, Dihydroxydiphenylsulfid-Polycarbonat, Tetramethylbisphenol A-Polycarbonat, 1,1-Bis(4-hydroxyphenyl)-3,3,5-trimethylcyclohexan- (BPTMC) Polycarbonat, 1,1,1-Tris(4-hydroxyphenyl)-ethan- (THPE) Polycarbonat;
- aliphatisches Polyamid (PA), vorzugsweise PA 6 auf Basis von Polycaprolactam, PA 6.6 auf Basis von 6,6-Hexamethylendiamin und Adipinsäure, PA 6.66 auf Basis von Caprolactam, Copolymer von Hexamethylendiamin und Adipinsäure, PA 66.610 auf Basis von Hexamethylendiamin, Copolymer von Adipinsäure und Sebacinsäure, PA 4.6, PA 10, PA 12 und PA-Copolymere;
- Polyurethan (PU);
- polare Copolymere, Maleinsäureanhydrid-Olefin-Copolymere;
- Polyalkylenoxid, Polyalkylen-Blockcopolymer, Propylenoxid-Ethylenoxid-Copolymer, (m)Ethylenacrylat-Maleinsäureanhydrid-Copolymer;
- polare Terpolymere, vorzugsweise reaktive Terpolymere von Ethylen, Acrylester und Maleinsäureanhydrid oder Ethylen, Methacrylester und Maleinsäureanhydrid oder Ethylen, Acrylester und Glycidylmethacrylat oder Ethylen, Methacrylsäureester und Glycidylmethacrylat oder Ethylen, (Meth)acrylsäureester und Methyl (Methyl(meth)acrylat), Ethyl (Ethy(meth)acrylat), Propyl (Propyl(meth)acrylat) oder Butyl (Butyl(meth)acrylat), Polyamid, Polyester-Polyamide oder Butyl (Butyl(meth)acrylat), Polyether-Polyamid-Copolymere;
- polare Polymermischungen, vorzugsweise Polycarbonat/Polyethylenterephthalat-Mischungen (PC/PET-Mischungen), Polycarbonat/Polybutylenterephthalat-Mischungen (PC/PBT-Mischungen), Mischungen von Polycyclohexylendimethylenterephthalat-Copolymer, Mischungen von Poly(butylen-adipat-terephthalat);
- Polyacrylnitril und Polyacrylnitril-Copolymere, vorzugsweise Polyacrylnitril-Butadien-Styrol (ABS), Polystyrol-Acrylnitril;
- Polystyrol und Polystyrol-Copolymere, vorzugsweise Styrol/Butadien-Copolymer (SBR), Polystyrol-Isopren-Styrol (SIS), Polystyrolharz mit tertiärmen Amin auf der Basis von Poly(glycidylmethacrylat)-gepfropftem Sulfonamid;
- Ethylen-Vinylacetat;
- Polyether, vorzugsweise Polyethylenglykol, Polyethylenglykol mit mindestens einer an das Polyethylenglykol gekoppelten Fettsäure, endständige funktionelle Gruppen wie NH₂-terminierte Polyether;
- funktionalisierte Polyacrylamidpolymere, -copolymere und -terpolymere, vorzugsweise Poly(2-acrylamido-2-aminopropionsäure) (PolyAMPA), Poly(2-acrylamido-2-amino-propansulfonsäure), Poly(N-isopropylacylamid) (PolyPNIPAM); Poly(amidoamin-co-acrylsäure)-Copolymer, Poly(N,N-Dimethylacrylamid-co-natriumacrylat), Poly(acrylamid-co-natriumacrylat)/Poly(Ethylenglykol)-semi-IPN, Poly(acrylamid-co-natrium-4-styrolsulfonat), Poly(acrylamid-co-natrium-4-styrolsulfonat)/Poly(ethylenglykol)-semi-IPN, Poly(acrylamid-co-natriummethacrylat), Poly(acrylamid-co-natriummethacrylat)/Poly(ethylenglykol)-semi-IPN, und/oder Poly(N-isopropylacrylamid-co-acrylsäure) und Poly(acrylamid-co-acrylsäure);
- Poly(ethersulfone)/Poly(ethylenimin) (PES/PEI);
- Polyvinylpyrrolidon, vorzugsweise Poly(N-vinyl-2-pyrrolidon), Poly(N-vinyl-2-pyrrolidon-co-acrylnitril), behandelt mit Hydroxylamin-Hydrochlorid;
- Polyvinylalkohol;
- Poly(1-naphthylamin)-camphersulfonsäure.

22. Verfahren nach einem der Ansprüche 1 bis 21, wobei das polare Entfärbungsmittel ein synthetisches und/oder nicht-synthetisches polares Oligomer oder ein Gemisch davon ist, wobei das synthetische und/oder nicht-synthetische polare Oligomer oder das Gemisch davon vorzugsweise aus der Gruppe ausgewählt ist, die synthetische und/oder nicht-synthetische polare Homo-Oligomere, synthetische und/oder nicht-synthetische polare Cooligomere und/oder synthetische und/oder nicht-synthetische polare Teroligomere aufweist, wobei das synthetische und/oder nicht-synthetische polare Oligomer ferner vorzugsweise aus der Gruppe ausgewählt ist, die aufweist:
- Oligoacrylat mit Methyl (Oligomethylacrylat), Ethyl (Oligoethylacrylat), Propyl (Oligopropylacrylat), oder Butyl (Oligobutylacrylat);
- Oligomethacrylat mit Methyl (Oligomethylmathacrylat), Ethyl (Oligoethylmethacrylat), Propyl (Oligopropylmethacrylat) oder Butyl (Oligobutylmethacrylat);
- Cooligomere von Acryl- und Methacrylsäureestern, darunter u.a. tert-Butyl(meth)acrylat, Pentyl(meth)acrylat und 2-Ethylhexyl(meth)acrylat, von ungesättigten Alkoholen gewonnene (Meth)acrylate, vorzugsweise Oleyl(meth)acrylat, 2-Propinyl(meth)acrylat, Allyl(meth)acrylat, Vinyl(meth)acrylat;
- Aryl(meth)acrylat-Oligomere, vorzugsweise Benzyl(meth)acrylat-Oligomere oder Phenyl(meth)acrylat-Oligomere, wobei die Arylradikale jeweils unsubstituiert oder bis zu vierfach substituiert sind;
- Cycloalkyl(meth)acrylat-Oligomere, vorzugsweise 3-Vinylcyclohexyl(meth)acrylat-Oligomere, Bornyl(meth)acrylat-Oligomere;
- Hydroxylalkyl(meth)acrylat-Oligomere, vorzugsweise 3-Hydroxypropyl(meth)acrylat-Oligomere, 3,4-Dihydroxybutyl(meth)acrylat-Oligomere, 2-Hydroxyethyl(meth)acrylat-Oligomere, 2-Hydroxypropyl(meth)acrylat-Oligomere;
- Glykol-di(meth)acrylat-Oligomere, vorzugsweise 1,4-Butandiol(meth)acrylat-Oligomere;
- (Meth)acrylate von Etheralkohol-Oligomeren, vorzugsweise Tetrahydrofurfuryl(meth)acrylat-Oligomere, Vinyloxyethoxyethyl(meth)acrylat-Oligomere;
- Oligomere von Amiden und Nitrilen der (Meth)acrylsäure, vorzugsweise N-(3-Dimethylaminopropyl)(meth)acrylamid-Oligomere, N-(Diethylphosphono)(meth)acrylamid-Oligomere, 1-Methacryloylamido-2-methyl-2-propanol-Oligomere; - Oligomere schwefelhaltiger Methacrylate, vorzugsweise Ethylsulflnylethyl(meth)acrylat, 4-Thiocyanatobutyl(meth)acrylat-Oligomere, Ethylsulfonylethyl(meth)acrylat-Oligomere, Thiocyanatomethyl(meth)acrylat-Oligomere, Methylsulfinylmethyl(meth)acrylat-Oligomere, Bis((meth)acryloyloxyethyl)sulfid-Oligomere;
- oligohydrische (Meth)acrylate, vorzugsweise Trimethyloylpropanetri(meth)acrylat-Oligomere;
- Acrylnitril-Oligomere;
- Vinylester-Oligomere, vorzugsweise Vinylacetat-Oligomere;
- Styrol-Oligomere, substituierte Styrol-Oligomere mit einem Alkylsubstituenten in der Seitenkette, vorzugsweise α-Methylstyrol und α-Ethylstyrol, substituierte Styrol-Oligomere mit einem Alkylsubstituenten am Ring, vorzugsweise Vinyltoluol, und p-Methylstyrol, halogenierte Styrol-Oligomere, vorzugsweise Monochlorstyrol-Oligomere, Dichlorstyrololigomere, Tribromstyrol-Oligomere und Tetrabromstyrol-Oligomere;
- heterocyclische Vinyl-Oligomere, vorzugsweise 2-Vinylpyridin-Oligomere, 3-Vinylpyridin-Oligomere, 2-Methyl-5-vinylpyridin-Oligomere, 3-Ethyl-4-vinylpyridin-Oligomere, 2,3-Dimethyl-5-vinylpyridin-Oligomere, Vinylpyrimidin-Oligomere, Vinylpiperidin-Oligomere, 9-Vinylcarbazol-Oligomere, 3-Vinylcarbazol-Oligomere, 4-Vinylcarbazol-Oligomere, 1-Vinylimidazol-Oligomere, 2-Methyl-1-vinylimidazol-Oligomere, N-Vinylpyrrolidon-Oligomere, 2-Vinylpyrrolidon-Oligomere, N-Vinylpyrrolidin-Oligomere, 3-Vinylpyrrolidin-Oligomere, N-Vinylcaprolactam-Oligomere, N-Vinylbutyrolactam-Oligomere, Vinyloxolan-Oligomere, Vinylfuran-Oligomere, Vinylthiophen-Oligomere, Vinylthiolan-Oligomere, Vinylthiazole und hydrierte Vinylthiazol-Oligomere, Vinyloxazole und hydrierte Vinyloxazole;
- Oligomere von Vinyl- und Isoprenylethern;
- Maleinsäure-Oligomere, vorzugsweise Maleinsäureanhydrid-Oligomere, Methylmaleinsäureanhydrid-Oligomere, Maleinimid-Oligomere, Methylmaleinimid; und
- Dien-Oligomere, vorzugsweise Divinylbenzol-Oligomere;
- Cooligomere von Ethylen und Propylen mit Acrylestern, vorzugsweise Oligoethylenblock-co-oligomethylmethacrylat, Oligopropylenblock-co-oligomethylmethacrylat;
- aliphatische und/oder aromatische Oligoester, vorzugsweise hydroxylfunktionelle dendritische Oligoester, vorzugsweise Oligocaprolacton, Oligoethylenterephthalat (PET), Oligotrimethylenterephthalat (PTT), Oligobutylenterephthalat (PBT), glykolisiertes Oligoglykolterephthalat (G-PET), amorphes Oligoethylenterephthalat (A-PET), Oligoester von Terephthalsäure, Oligospirodiolterephthalat, Oligopentaspiroglykolterephthalat (PSG), Polycyclohexylendimethylenterephthalat, Cooligomer auf Oligoesterbasis, das einen von einer Dicarbonsäure gewonnenen Rest, einschließlich eines von einer aromatischen Dicarbonsäure gewonnenen Rests, und einen von einem Diol gewonnenen Rest, einschließlich eines von 4-(Hydroxymethyl)cyclohexylmethyl-4'-(hydroxymethyl)cyclohexancarboxylat gewonnenen Rests, enthält, Cooligomer auf Oligoesterbasis, das einen von einer Dicarbonsäure gewonnenen Rest, einschließlich eines von einer aromatischen Dicarbonsäure gewonnenen Rests, und einen von einem Diol gewonnenen Rest, einschließlich eines von 4,4-(Oxybis(methylene)bis)cyclohexanmethanol gewonnenen Rests enthält;
- Oligocarbonat (PC), 2,2-Bis-(4-hydroxyphenyl)-propan- (Bisphenol A) Oligocarbonat, 2,2-Bis-(4-hydroxyphenyl)-butan- (Bisphenol B) Oligocarbonat, 1,1-Bis(4-hydroxyphenyl)cyclohexan- (Bisphenol C) Oligocarbonat, 2,2'-Methylendiphenol- (Bisphenol F) Oligocarbonat, 2,2-Bis(3,5-dibrom-4-hydroxyphenyl)propan- (Tetrabrombisphenol A) Oligocarbonat und 2,2-Bis(3,5-dimethyl-4-hydroxyphenyl)propan- (Tetramethylbisphenol A) Oligocarbonat, Bisphenol-S-Oligocarbonat, Dihydroxydiphenylsulfid-Oligocarbonat, Tetramethylbisphenol-A-Oligocarbonat, 1,1-Bis(4-hydroxyphenyl)-3,3,5-trimethylcyclohexan- (BPTMC) Oligocarbonat, 1,1,1-Tris(4-hydroxyphenyl)-ethan- (THPE) Oligocarbonat;
- aliphatisches Oligoamid (PA), vorzugsweise PA 6 auf der Basis von Oligocaprolactam, PA 6.6 auf der Basis von 6,6-Hexamethylendiamin und Adipinsäure, PA 6.66 auf der Basis von Caprolactam, Copolymer von Hexamethylendiamin und Adipinsäure, PA 66.610 auf der Basis von Hexamethylendiamin, Cooligomer aus Adipinsäure und Sebacinsäure, PA 4.6, PA 10, PA 12 und PA-Cooligomere;
- Oligourethan (PU);
- polare Cooligomere, Maleinsäureanhydrid-Olefin-Cooligomere;
- Oligoalkylenoxid, Oligoalkylen-Block-Cooligomer, Propylenoxid-Ethylenoxid-Cooligomer, (m)Ethylenacrylat-Maleinsäureanhydrid-Cooligomer;
- polare Teroligomere, vorzugsweise reaktive Teroligomere von Ethylen, Acrylsäureester und Maleinsäureanhydrid, oder Ethylen, Methacrylester und Maleinsäureanhydrid, oder Ethylen, Acrylester und Glycidylmethacrylat, oder Ethylen, Methacrylsäureester und Glycidylmethacrylat oder Ethylen, (Meth)acrylsäureester und Methyl (Methyl(meth)acrylat), Ethyl (Ethy(meth)acrylat), Propyl (Propyl(meth)acrylat) oder Butyl (Butyl(meth)acrylat), Oligoamid, Oligoester-Oligoamide oder Butyl (Butyl(meth)acrylat), Oligoether-Oligoamid-Cooligomere;
- polare Oligomermischungen, vorzugsweise Oligocarbonat/Oligoethylenterephthalat-Mischungen (PC/PET-Mischungen), Oligocarbonat/Oligobutylenterephthalat-Mischungen (PC/PBT-Mischungen), Mischungen von Oligocyclohexylendimethylenterephthalat-Cooligomeren, Mischungen von Oligo(butylen-adipat-terephthalat);
- Oligoacrylnitril und Oligoacrylnitril-Cooligomere, vorzugsweise Oligoacrylnitril-Butadien-Styrol (ABS), Oligo-Styrol-Acrylnitril;
- Oligostyrol und Oligostyrol-Cooligomere, vorzugsweise Styrol/Butadien-Cooligomer (SBR), Oligo-Styrol-Isopren-Styrol (SIS), Oligostyrolharz auf der Basis von Oligo(glycidylmethacrylat)-gepfropftem Sulfonamid mit tertiärem Amin;
- Ethylen-Vinylacetat;
- Oligoether, vorzugsweise Oligoethylenglykol, Oligoethylenglykol mit mindestens einer an das Oligoethylenglykol gekoppelten Fettsäure, Oligoether mit endständigen funktionellen Gruppen, vorzugsweise NH₂-terminierte Oligoether,
- funktionalisierte Oligoacrylamid-Oligomere, Cooligomere und Teroligomere, vorzugsweise Oligo(2-acrylamido-2-aminopropionsäure) (OligoAWA), Oligo(2-acrylamido-2-amino-propansulfonsäure) (oligoAMPA), Oligo(2-acrylamido-2-aminopropansulfonsäure), Oligo(N-isopropylacylamid) (OligoPNIPAM); Oligo(amidoamin-co-acrylsäure)-Cooligomer, Oligo(N,N-Dimethylacrylamid-co-natriumacrylat), Oligo(acrylamid-co-natriumacrylat)/Oligo(ethylenglykol)-semi-IPN, Oligo(acrylamid-co-natrium-4-styrolsulfonat), Oligo(acrylamid-co-natrium-4-styrolsulfonat)/Oligo(ethylenglykol)-semi-IPN, Oligo(acrylamid-co-natriummethacrylat), Oligo(acrylamid-co-natriummethacrylat)/Oligo(ethylenglykol)-semi-IPN und/oder Oligo(N-isopropylacrylamid-co-acrylsäure) und Oligo(acrylamid-co-acrylsäure);
- Oligo(ethersulfone)/Oligo(ethylenimin) (PES/PEI);
- Oligovinylpyrrolidon, vorzugsweise Oligo(N-vinyl-2-pyrrolidon), Oligo(N-vinyl-2-pyrrolidon-co-acrylnitril), behandelt mit Hydroxylamin-Hydrochlorid;
- Oligovinylalkohol;
- Oligo(1-naphthylamin)-Camphersulfonsäure.

23. Verfahren nach einem der Ansprüche 1 bis 22, wobei das polare Entfärbungsmittel ein synthetisches und/oder nicht-synthetisches polares Additiv mit einem Mw ≥ 70 und < 600 g/mol ist, vorzugsweise ist das synthetische und/oder nicht-synthetische polare Additiv mit einem Mw ≥ 70 und < 600 g/mol ausgewählt aus der Gruppe, die aliphatische Säuren CH₃-[CH₂]ₙ,-COOH-Säuren (n ≥ 3), Aminosäuren, Carbonsäureamid, Hydroxylsäuren, Fettsäuren, aliphatische oder aliphatische/aromatische Aldehyde und Ketone, Ester, Pentaerythrit, Pentaerythritester, vorzugsweise Carbonsäureester, Benzoesäureester einschließlich Benzylbenzoat oder Phenylbenzoat, Phenylether, Alkohole und mehrwertige Alkohole, vorzugsweise Glycerin, Amine und/oder Mischungen davon aufweist, und
wobei das synthetische und/oder nicht-synthetische polare Additiv vom organischen aromatischen Färbemittel mit einem Molekulargewicht Mw im Bereich von ≥ 250 g/mol bis ≤ 550 g/mol verschieden und bei 23°C fest ist und vorzugsweise frei von einem Farbstoff ist.

24. Verfahren nach einem der Ansprüche 1 bis 23, wobei das polare Entfärbungsmittel dem gefärbten Polymermaterial zum Entfärben in einem Gewichtsverhältnis von 0,1:1 bis 100:1, vorzugsweise von 0,5:1 bis 80:1, bevorzugter 1:1 bis 60:1, ebenfalls bevorzugt 2:1 bis 50:1, weiter bevorzugt von 2,5:1 bis 25:1, noch bevorzugter von 3:1 bis 10:1 und weiter bevorzugt 3,3:1 bis 5:1 zugesetzt wird.

25. Verfahren nach einem der Ansprüche 1 bis 24, wobei das unpolare Polymer ausgewählt ist aus der Gruppe Polyalkylenpolymere, Polyalkylencopolymere, Polyalkylenblockcopolymere, das unpolare Polymer vorzugsweise ausgewählt ist aus polymeren aliphatischen oder aromatischen Kohlenwasserstoffen, vorzugsweise Polyalkylenpolymeren, Polyalkylen-Co- und Terpolymeren mit statistischer oder Blockstruktur, und noch bevorzugter aus Polyethylen (PE), Polypropylen (PP), Polybuten (PB), Polystyrol, Polyisobutylen, Polybutadien, Polyisopren.

26. Verfahren nach einem der vorhergehenden Ansprüche 1 bis 25, wobei der Schritt zum Aussetzen des gefärbten synthetischen und/oder nicht-synthetischen polaren Polymermaterials gegenüber dem polaren Lösungsmittel zum Entfärben aufweist:
- Rühren des gefärbten synthetischen und/oder nicht-synthetischen polaren Polymermaterials in dem polaren Lösungsmittel, während die Außenfläche des gefärbten synthetischen und/oder nicht-synthetischen polaren Polymermaterials dem polaren Lösungsmittel ausgesetzt ist; und/oder
- Zuführen von Ultraschall zum polaren Lösungsmittel, während die Außenfläche des gefärbten synthetischen und/oder nicht-synthetischen polaren Polymermaterials dem polaren Lösungsmittel ausgesetzt ist; und/oder
- Aussetzen des polaren Lösungsmittelflusses gegenüber der Außenfläche des gefärbten synthetischen und/oder nicht-synthetischen polaren Polymermaterials; und/oder
- Bewegen des gefärbten synthetischen und/oder nicht-synthetischen polaren Polymermaterials durch das polare Lösungsmittel.

## Revendications

1. Procédé de décoloration d'un matériau polymère polaire synthétique et/ou non synthétique coloré, comprenant les étapes suivantes :
l'exposition du matériau polymère polaire synthétique et/ou non synthétique coloré à un solvant polaire à une température de ≥ 30°C à ≤ 200 °C,
dans lequel le matériau polymère polaire synthétique et/ou non synthétique coloré est solide lors de l'exposition au solvant polaire,
dans lequel le solvant polaire comprend et/ou est exposé à au moins un agent de décoloration polaire pour absorber et/ou adsorber la couleur du matériau polymère polaire synthétique et/ou non synthétique coloré ;
dans lequel le matériau polymère polaire synthétique et/ou non synthétique coloré à décolorer comprend :
- au moins un agent de coloration aromatique organique ayant une masse moléculaire moyenne en poids Mw dans la plage de ≥ 250 g/mol à ≤ 550 g/mol, dans lequel l'agent de coloration aromatique organique n'est pas un agent de coloration aromatique organique réactif chimiquement qui forme une liaison covalente ;
i) au moins un polymère polaire synthétique et/ou non synthétique ayant une Mw de ≥ 1000 g/mol, ou
ii) au moins un polymère non polaire synthétique et/ou non synthétique ayant une Mw de ≥ 1000 g/mol ;
dans lequel le polymère non polaire synthétique et/ou non synthétique comprend additionnellement :
- au moins un polymère polaire synthétique et/ou non synthétique ayant une Mw de ≥ 1000 g/mol, et/ou
- au moins un oligomère polaire synthétique et/ou non synthétique ayant une Mw de ≥ 600 g/mol et < 1000 g/mol, et/ou
- au moins un additif polaire synthétique et/ou non synthétique ayant une Mw de ≥ 70 g/mol et < à 600 g/mol ;
dans lequel l'additif polaire est sélectionné différemment de l'agent de coloration aromatique organique ayant une masse moléculaire moyenne en poids Mw dans la plage de ≥ 250 g/mol à ≤ 550 g/mol ;
dans lequel l'agent de décoloration polaire est sélectionné dans le groupe comprenant :
- au moins un polymère polaire synthétique et/ou non synthétique ayant une Mw de ≥ 1000 g/mol, et/ou
- au moins un oligomère polaire synthétique et/ou non synthétique ayant une Mw de ≥ 600 g/mol et < 1000 g/mol, et/ou
- au moins un additif polaire synthétique et/ou non synthétique ayant une Mw de ≥ 70 g/mol et < à 600 g/mol, dans lequel l'additif polaire synthétique et/ou non synthétique est solide à 23°C et sélectionné différemment de l'agent de coloration aromatique organique ayant une masse moléculaire moyenne en poids Mw dans la plage de ≥ 250 g/mol à ≤ 550 g/mol ; et
dans lequel l'agent de décoloration polaire avant utilisation dans le procédé de décoloration est préférablement exempt de colorant ; et
dans lequel l'agent de décoloration a une concentration plus élevée de polymère polaire synthétique et/ou non synthétique, d'oligomère polaire synthétique et/ou non synthétique, et/ou d'additif polaire synthétique et/ou non synthétique que le matériau polymère polaire synthétique et/ou non synthétique coloré.

2. Procédé selon la revendication 1, dans lequel le matériau polymère polaire synthétique et/ou non synthétique coloré est décoloré par l'exposition du matériau polymère polaire synthétique et/ou non synthétique coloré au solvant polaire à une température de ≥ 30°C à ≤ 200 °C, dans lequel la température du solvant polaire est sélectionnée ≥ à la température de transition vitreuse T_{g} et inférieure à la température de décomposition du matériau polymère polaire synthétique et/ou non synthétique coloré, préférablement la température du solvant polaire est sélectionnée > T_{g} et ≤ à la température de fusion Tₘ du matériau polymère polaire synthétique et/ou non synthétique coloré dans lequel la température de transition vitreuse T_{g} et la température de fusion Tₘ sont déterminées selon DIN 51007, ASTM E 474, ASTM D 3418, DIN EN ISO 11357-1, ISO 11357-2, ISO / DIS 11357-3, et/ou ISO 11357-4.

3. Procédé selon la revendication 1 ou 2, dans lequel le matériau polymère polaire synthétique et/ou non synthétique coloré est décoloré par l'exposition du matériau polymère polaire synthétique et/ou non synthétique coloré au solvant polaire pendant ≥ 15 secondes à ≤ 240 minutes, préférablement ≥ 1 minute à ≤ 180 minutes, de préférence, en outre, pendant ≥ 5 minutes à ≤ 60 minutes, et également pendant ≥ 10 minutes à ≤ 20 minutes.

4. Procédé selon l'une quelconque des revendications 1 à 3, dans lequel le solvant polaire est liquide à 23 °C et comprend au moins un solvant polaire ou un mélange de solvants polaires, dans lequel le solvant polaire est un solvant ou un mélange de solvants ayant un dipôle, et est préférablement sélectionné dans le groupe comprenant de l'eau, et/ou une solvant organique polaire ; dans lequel en outre, de préférence, le solvant polaire est un mélange de liquides ne formant pas de mélange homogène lorsque mélangés ensemble.

5. Procédé selon l'une quelconque des revendications 1 à 4, dans lequel le solvant organique polaire ou le mélange de solvants organiques polaires est sélectionné dans le groupe comprenant les alcools en C₁ à C₆, préférablement l'éthanol et l'isopropanol, glycols tels que le diéthylène glycol et ses oligomères, cétones en C₃ à C₆, préférablement l'acétone, aldéhydes en C₂ à C₆, acides carboxyliques en C₁ à C₆ et leurs dérivés tels que les chlorure d'acyles ou amides acides, d'autres solvants aromatiques polaires liquides à 23 °C, préférablement DMSO, DMF, alcool benzylique, éthers aliphatiques linéaires ou cycliques, préférablement diéthyl éther ou tétrahydrofurane, esters tels que acétate d'éthyle, benzoate de benzyle, solvants halogénés tels que dichlorométhane ou trichlorométhane.

6. Procédé selon l'une quelconque des revendications 1 à 5, dans lequel le solvant organique polaire est ajusté à un pH dans la plage de ≥ 2 à ≤ 13, préférablement ≥ 4 à ≤ 10, ≥ 6 à ≤ 8, ou 7 ± 0,5, dans lequel le pH est ajusté préférablement en ajoutant un agent acide ou basique.

7. Procédé selon l'une quelconque des revendications 1 à 6, dans lequel l'agent de coloration aromatique organique a une masse moléculaire Mw dans la plage ≥ 250 g/mol à ≤ 550 g/mol, préférablement l'agent de coloration aromatique organique a une masse moléculaire Mw dans la plage de ≥ 270 g/mol à ≤ 450 g/mol, et plus préférablement l'agent de coloration aromatique organique a un poids moléculaire Mw dans la plage ≥ 285 g/mol à ≤ 400 g/mol.

8. Procédé selon l'une quelconque des revendications 1 à 7, dans lequel l'agent de coloration aromatique organique a une solubilité dans l'eau à 23 °C de ≤ 0,1 g/l et > 0 g/l, préférablement ≤ 0,01 g/l et > 0 g/l, plus préférablement ≤ 0,0001 g/l et > 0 g/l.

9. Procédé selon l'une quelconque des revendications 1 à 8, dans lequel l'agent de coloration aromatique organique comprend au moins 2 à 6 cycles aromatiques à 6 chaînons, au moins 3 à 5 cycles aromatiques à 6 chaînons, et au moins 1 à 4 cycles aromatiques à 5 chaînons, ou ayant au moins 2 à 6 cycles aromatiques à 6 chaînons ; et/ou dans lequel l'agent de coloration aromatique organique comprend au moins un hétéroatome sélectionné parmi N, O, S, Br.

10. Procédé selon l'une quelconque des revendications 1 à 9, dans lequel l'agent de décoloration polaire comprend des groupements polaires, acides et/ou basiques, dans lequel les groupements polaires pour interaction électrostatique sont préférés.

11. Procédé selon l'une quelconque des revendications 1 à 10, dans lequel l'agent de décoloration polaire a la forme de :
- feuilles minces, écailles, granulés, préférablement les particules, granulés de l'agent de décoloration polaire peuvent avoir un diamètre moyen de taille de particule de 0,1 mm à 100 mm, de préférence, en outre, de 1 mm à 50 mm et également de 2 mm à 10 mm, plus préférentiellement les particules, granulés de l'agent de décoloration polaire peuvent avoir une forme arrondie, et encore plus préférentiellement, la forme d'une feuille mince, et/ou
- feuilles minces, écailles, particules, granulés, préférablement les particules, granulés de l'agent de décoloration polaire peuvent avoir un diamètre moyen de taille de particule de 0,01 mm à 10 mm, de préférence, en outre, de 1 mm à 8 mm et également de 2 mm à 5 mm, et plus préférentiellement les particules, granulés de l'agent de décoloration polaire peuvent avoir une forme arrondie, sont disposées sur ou dans la surface d'un substrat solide, et/ou
- nanoparticules ayant un diamètre moyen de taille de particule de ≥ 1 nm à ≤ 100 nm, préférablement les nanoparticules sont disposées sur la surface d'un substrat solide.

12. Procédé selon l'une quelconque des revendications 1 à 11, dans lequel l'agent de décoloration polaire coloré du fait de l'absorption et/ou de l'adsorption de l'agent de coloration aromatique organique ayant une masse moléculaire moyenne en poids Mw dans la plage de ≥ 250 g/mol à ≤ 550 g/mol, dans lequel l'agent de coloration aromatique organique n'est pas un agent de coloration aromatique organique réactif chimiquement qui forme un produit chimique lié de façon covalente, est séparé du solvant polaire.

13. Procédé selon l'une quelconque des revendications 1 à 12, dans lequel l'agent de décoloration polaire coloré qui est séparé du solvant polaire est remplacé par de l'agent de décoloration polaire qui est exempt de l'agent de coloration aromatique organique ayant une masse moléculaire moyenne en poids Mw dans la plage de ≥ 250 g/mol à ≤ 550 g/mol.

14. Procédé selon l'une quelconque des revendications 1 à 13, dans lequel l'agent de décoloration coloré séparé est décoloré, préférablement décoloré par :
- un processus d'oxydation, préférablement par l'exposition à au moins un agent d'oxydation sélectionné dans le groupe comprenant peroxyde, acide peroxyacétique, peroxyde d'hydrogène, ozone, percarbonate de sodium, perborate de sodium, percarbonate de sodium, m-Nitrobenzènelsulfonate, H₂SO₄, HNO₃, anions contenant de l'oxygène (anions oxo) de métaux de transition dans des états d'oxydation élevés tels que le permanganate MnO₄⁻, KMnO₄, phosphate, difluorure d'oxygène fluor, difluorure de krypton, dichromate Cr₂O₇²⁻, ions métalliques tels que Ce₄⁺, ions de métaux nobles tels que ceux de l'argent et du cuivre, anions d'acides halo-oxygénés tels que le bromate BrO₃⁻, halogènes, tels que fluor, chlore, brome et iode, hypochlorite, hypochlorite de sodium et/ou hypochlorite de potassium ;
- un processus de réduction, de préférence par exposition à au moins un agent de réduction sélectionné dans le groupe comprenant les hydrures, H⁻, NaH, aluminohydrure de lithium, hydrure de sodium, sulfure d'hydrogène, sulfure de sodium, S²⁻, Na₂S, sulfites, SO₃²⁻, sulfite de sodium, acide sulfureux, dioxyde de soufre, thiosulfate, dithionite de sodium, bisulfite de sodium, NaHSO₃, formamidine d'acide sulfinique, hydroxyméthanesulfinate de sodium également connu sous le nom de rongalite, dioxyde de thiourée également connu sous le nom de thiox, acide sulfonique et ses dérivés, sels de borohydrure, hydroxyde de sodium, carbonate de sodium, bicarbonate de sodium, oxyde de sodium et mélanges d'hydroxyde de sodium et d'oxyde de calcium, dérivés de l'acide sulfinique, borohydrures et/ou REDLTLITE GIN ; et/ou
- procédé d'adsorption et/ou d'absorption, de préférence par exposition au noir de carbone, aux zéolites.

15. Procédé selon l'une quelconque des revendications 1 à 14, dans lequel après l'exposition du matériau polymère polaire synthétique et/ou non synthétique coloré au solvant, le procédé comprend en outre l'étape de décoloration ultérieure du matériau polymère polaire synthétique et/ou non synthétique coloré par :
- un processus d'oxydation, préférablement par l'exposition à au moins un agent d'oxydation sélectionné dans le groupe comprenant peroxyde, acide peroxyacétique, peroxyde d'hydrogène, ozone, percarbonate de sodium, perborate de sodium, percarbonate de sodium, m-Nitrobenzènelsulfonate, H₂SO₄, HNO₃, anions contenant de l'oxygène (anions oxo) de métaux de transition dans des états d'oxydation élevés tels que le permanganate MnO₄⁻, KMnO₄, phosphate, difluorure d'oxygène fluor, difluorure de krypton, dichromate Cr₂O₇²⁻, ions métalliques tels que Ce₄⁺, ions de métaux nobles tels que ceux de l'argent et du cuivre, anions d'acides halo-oxygénés tels que le bromate BrO₃⁻, halogènes, tels que fluor, chlore, brome et iode, hypochlorite, hypochlorite de sodium et/ou hypochlorite de potassium ;
- un processus de réduction, de préférence par exposition à au moins un agent de réduction sélectionné dans le groupe comprenant les hydrures, H⁻, NaH, aluminohydrure de lithium, hydrure de sodium, sulfure d'hydrogène, sulfure de sodium, S²⁻, Na₂S, sulfites, SO₃²⁻, sulfite de sodium, acide sulfureux, dioxyde de soufre, thiosulfate, dithionite de sodium, bisulfite de sodium, NaHSO₃, formamidine d'acide sulfinique, hydroxyméthanesulfinate de sodium également connu sous le nom de rongalite, dioxyde de thiourée également connu sous le nom de thiox, acide sulfonique et ses dérivés, sels de borohydrure, hydroxyde de sodium, carbonate de sodium, bicarbonate de sodium, oxyde de sodium et mélanges d'hydroxyde de sodium et d'oxyde de calcium, dérivés de l'acide sulfinique, borohydrures et/ou REDLTLITE GIN ; et/ou
- procédé d'adsorption et/ou d'absorption, de préférence par exposition au noir de carbone, aux zéolites.

16. Procédé selon l'une quelconque des revendications 1 à 15, dans lequel le matériau polymère polaire synthétique et/ou non synthétique coloré après décoloration comprend ≥ 0 %pds à ≤ 10 %pds, de préférence ≥ 0,01 %pds à ≤ 5 %pds, de préférence, en outre, ≥ 0,1 %pds à ≤ 1 %pds d'agent de coloration aromatique organique ayant une masse moléculaire moyenne en poids Mw dans la plage de ≥ 250 g/mol à ≤ 550 g/mol, dans lequel l'agent de coloration aromatique organique n'est pas un agent de coloration aromatique organique réactif chimiquement qui forme un produit chimique lié de façon covalente, sur la base de la quantité totale d'agent de coloration aromatique organique dans le matériau polymère polaire synthétique et/ou non synthétique coloré avant qu'il ne soit décoloré.

17. Procédé selon l'une quelconque des revendications 1 à 16, dans lequel le matériau polymère polaire synthétique et/ou non synthétique coloré, avant qu'il ne soit décoloré, comprend 0,00001 %pds à ≤ 10 %pds, de préférence 0,001 %pds à ≤ 5 %pds, de préférence, en outre, 0,01 %pds à ≤ 3 %pds, et également 0,1 %pds à ≤ 2 %pds, et additionnellement 0,5 %pds à ≤ 1 %pds d'agent de coloration aromatique organique, sur la base du poids total de matériau polymère polaire synthétique et/ou non synthétique coloré avant qu'il ne soit décoloré.

18. Procédé selon l'une quelconque des revendications 1 à 17, dans lequel le matériau polymère polaire synthétique et/ou non synthétique coloré qui est exposé au solvant polaire pour la décoloration est sous la forme d'un article, écailles, particules ou granulés.

19. Procédé selon l'une quelconque des revendications 1 à 18, dans lequel le processus de décoloration du matériau polymère polaire synthétique et/ou non synthétique coloré est mené dans un récipient sous pression à une pression supérieure à la pression atmosphérique.

20. Procédé selon l'une quelconque des revendications 1 à 19, dans lequel
- le polymère polaire synthétique et/ou non synthétique comprend au moins ≥ 5 %pds d'hétéroatomes, sur la base du poids total du polymère polaire synthétique et/ou non synthétique, dans lequel un hétéroatome est n'importe quel atome excepté les atomes H et C ; et/ou
- l'oligomère polaire synthétique et/ou non synthétique comprend au moins ≥ 5 %pds d'hétéroatomes, sur la base du poids total de l'oligomère polaire synthétique et/ou non synthétique, dans lequel un hétéroatome est n'importe quel atome excepté les atomes H et C ; et/ou
- l'additif polaire synthétique et/ou non synthétique comprend au moins ≥ 5 %pds d'hétéroatomes, sur la base du poids total de l'additif polaire synthétique et/ou non synthétique, dans lequel un hétéroatome est n'importe quel atome excepté les atomes H et C ; et/ou
- l'agent de décoloration polaire comprend au moins ≥ 5 %pds d'hétéroatomes, sur la base du poids total de l'agent de décoloration polaire, dans lequel un hétéroatome est n'importe quel atome excepté les atomes H et C.

21. Procédé selon l'une quelconque des revendications 1 à 20, dans lequel l'agent de décoloration polaire est un polymère polaire synthétique et/ou non synthétique ou un mélange de ceux-ci, de préférence le polymère polaire synthétique et/ou non synthétique ou mélange de ceux-ci est sélectionné dans le groupe comprenant les homopolymères polaires synthétiques et/ou non synthétiques, copolymères polaires synthétiques et/ou non synthétiques, terpolymères polaires synthétiques et/ou non synthétiques, de préférence, en outre, le polymère polaire synthétique et/ou non synthétique est sélectionné dans le groupe comprenant :
- polyacrylate avec méthyle (polyméthylacrylate), éthyle (polyéthylacrylate), propyle (polypropylacrylate), ou butyle (polybutylacrylate),
- polyméthacrylate avec méthyle (polyméthacrylate de méthyle), éthyle (polyméthacrylate d'éthyle), propyle (polyméthacrylate de propyle), ou butyle (polyméthacrylate de butyle),
- copolymères d'esters acryliques et méthacryliques incluant, entre autres, tert.-Butyl(méth)acrylate, pentyl(méth)acrylate et 2-éthylhexyl(méth)acrylate ; (Méth)acrylates dérivés d'alcools insaturés, de préférence oléyl(méth)acrylate, 2-propynyl(méth)acrylate, allyl(méth)acrylate, vinyl(méth)acrylate ;
- polymères d'aryl(méth)acrylates, de préférence polymères de benzyl(méth)acrylate ou polymères de phényl(méth)acrylate, les radicaux aryles étant chacun non substitués ou substitués jusqu'à quatre fois ;
- polymères de cycloalkyl(méth)acrylates, de préférence polymères de vinylcyclohexyl(méth)acrylate, polymères de bomyl(méth)acrylate;
- polymères d'hydroxyalkyl(méth)acrylates, de préférence polymères de 3-hydroxypropyl(méth)acrylate, polymères de 3,4-dihydroxybutyl(méth)acrylate, polymères de 2-hydroxyéthyl(méth)acrylate, polymères de 2-hydroxypropyl(méth)acrylate;
- polymères glycol di(méth)acrylates, de préférence polymères de 1,4-butanediol (méth)acrylate ;
- polymères (méth)acrylates d'éthers alcooliques, de préférence polymères de tétrahydrofurfuryl(méth)acrylate, polymères de vinyloxyéthoxyéthyl(méth)acrylate ;
- polymères d'amides et nitriles de l'acide (méth)acrylique, de préférence polymères de N-(3-diméthylaminopropyl)(méth)acrylamide, polymères de 1-méthacrylamido-2-méthyl-2-propanol;
- polymères de méthacylates contenant du soufre, de préférence polymères d'éthylsulfinyléthyl(méth)acrylate, 4-thiocyanatobutyl(méth)acrylate, polymères d'éthylsulfonyléthyl(méth)acrylate, polymères de thiocyanatométhyl(méth)acrylate, polymères de méthylsulfinylméthyl(méth)acrylate, polymères de bis((méth)acryloyloxyéthyl)sulfure;
- (méth)acrylates polyhydriques, de préférence polymères de triméthyloylpropanetri(méth)acrylate ;
- polymères d'acrylonitrile ;
- polymères d'esters vinyliques, de préférence les polymères d'acétate de vinyle ;
- polymères de styrène, polymères de styrènes substitués avec un substituant alkyle dans la chaîne latérale, de préférence α-méthylstyrène et α-éthylstyrène, polymères de styrènes substitués avec un substituant alkyle sur le cycle, de préférence vinyltoluène, et p-méthylstyrène, polymères de styrènes halogénés, de préférence polymères de monochlorostyrène, polymères de dichlorostyrène, polymères de triobromostyrène et tétrabromostyrène ;
- polymères vinyliques hétérocycliques, de préférence polymères de 2-vinylpyridine, polymères de 3-vinylpyridine, polymères de 2-méthyl-5-vinylpyridine, polymères de 3-éthyl-4-vinylpyridine, polymères de 2,3-diméthyl-5-vinylpyridine, polymères de vinylpyrimidine, polymères de vinylpiperidine, polymères de 9-vinylcarbazole, polymères de 3-vinylcarbazole, polymères de 4-vinylcarbazole, polymères de 1-vinylimidazole, polymères de 2-méthyl-1-vinylimidazole, polymères de N-vinylpyrrolidone, polymères de 2-vinylpyrrolidone, polymères de N-vinylpyrrolidine, polymères de 3-vinylpyrrolidine, polymères de N-vinylcaprolactame, polymères de N-vinylbutyrolactame, polymères de vinyloxolane, polymères de vinylfurane, polymères de vinylthophène, polymères de vinlythiolane, polymères de vinylthiazoles et de vinlylthiazoles hydrogénés, vinyloxazoles et vinlyoxazoles hydrogénés ;
- polymères d'éthers de vinyle et d'isoprényle ;
- polymères d'acide maléique, de préférence polymères d'anhydride maléique, polymères d'anhydride maléique méthylique, polymères de maléimide, méthylmalélimide ; et
- polymères de diènes, de préférence polymères de divinylbenzène ;
- copolymères d'éthylène et propylène avec des esters acryliques, de préférence polyéthylène-bloc-co-polyméthylméthacrylate, polypropylène-bloc-co-polyméthylméthacrylate ;
- polyesters aliphatiques et/ou aromatiques, de préférence polyesters dendritiques à fonctionnalité hydroxyle, polycaprolactone, polytéréphtalate d'éthylène (PET), polytéréphtalate de triméthylène (PTT), polytéréphtalate de butylène (PBT), polytéréphtalate de glycol glycolisé (G-PET), polytéréphtalates d'éthylène amorphes (A-PET), polyesters d'acide téréphtalique, polyspiro-diol-téréphtalate, polypentaspiroglycol-téréphtalate (PSG), polycyclohexylènediméthylène-téréphtalate, copolymère à base de polyester incluant un résidu dérivé d'acide dicarboxylique incluant un résidu dérivé d'un acide dicarboxylique aromatique et un résidu dérivé de diol incluant un résidu dérivé de 4-(hydroxymethyl)cyclohexylmethyl-4'-(hydroxymethyl)cyclohexane carboxylate, copolymère à base de polyester incluant un résidu dérivé d'acide dicarboxylique incluant un résidu dérivé d'un acide dicarboxylique aromatique et un résidu dérivé de diol incluant un résidu dérivé de 4,4-(oxybis(méthylène)bis)cyclohexane méthanol ;
- polycarbonate (PC), polycarbonate de 2,2-Bis-(4-hydroxyphényl)-propane (Bisphénol A), polycarbonate de 2,2-Bis-(4-hydroxyphényl)-butane (Bisphénol B), polycarbonate de 1,1-Bis(4-hydroxyphényl)cyclohexane (Bisphénol C), polycarbonate de 2, 2'-Méthylènediphénol (Bisphénol F), polycarbonate de 2,2-Bis(3,5-dibrom-4-hydroxyphényl)propane (Tétrabromobisphénol A) et polycarbonate de 2,2-Bis(3,5-diméthyl-4-hydroxyphényl)propane (Tétraméthylbisphénol A), polycarbonate de bisphénol S, polycarbonate de dihydroxydiphénylsulfure, polycarbonate de tétraméthylbisphénol A, polycarbonate de 1,1-Bis(4-hydroxyphényl)-3,3,5-triméthylcyclohexane (BPTMC), polycarbonate de 1,1,1-Tris(4-hydroxyphényl)-éthane (THPE) ;
- polyamide aliphatique (PA), de préférence PA 6 basée sur polycaprolactame, PA 6.6 basée sur 6,6-hexaméthylènediamine et acide adipique, PA 6.66 basé sur caprolactame, co-polymère d'hexaméthylènediamine et acide adipique, PA 66.610 basé sur hexaméthylènediamine, copolymère d'acide adipique et acide sébacique, copolymères PA 4.6, PA 10, PA 12 et PA ;
- polyuréthane (PU),
- copolymère polaire, copolymère oléfine-anhydride maléique,
- polyalkylènoxyde, copolymère à blocs de polyalkylène, copolymère propylèneoxyde-éthylènoxyde, copolymère d'acrylate de (m)éthylène-anhydride maléique ;
- terpolymère polaire, de préférence terpolymères réactifs d'éthylène, ester acrylique et anhydride maléique, ou éthylène ester méthacrylique et anhydride maléique, ou éthylène, esters acryliques et méthacrylate de glycidyle, ou éthylène, esters méthacryliques et méthacrylate de glycidyle, ou éthylène, esters (méth)acryliques et (méthyl(méth)acrylate) de méthyle, (éthyl(méth)acrylate) d'éthyle, (propyl(méth)acrylate) de propyle, ou (butyl(méth)acrylate) de butyle, polyamide, polyester-polyamides, ou (butyl(méth)acrylate) de butyle, copolymères polyéther-polyamide ;
- mélanges de polymères polaires, de préférence mélanges polycarbonate/polyéthylène téréphtalate (mélanges PC/PET), mélanges polycarbonate/polybutylène téréphtalate (mélanges PC/PBT), mélanges de polycyclohexylène copolymère diméthylène téréphtalate, mélanges de poly(butylène-adipate-téréphtalate) ;
- polyacrylonitrile et copolymères polyacrylonitrile, de préférence poly acrylonitrile butadiène styrène (ABS), poly styrène-acrylonitrile ;
- polystyrène et copolymères de polystyrène, de préférence copolymère styrène/butadiène (SBR), poly styrène-isporène-styrène (SIS), poly(méthacrylate de glycidyle) greffé sur une résine polystyrène à base de sulfonamide avec une amine tertiaire ;
- éthylène- acétate de vinyle ;
- polyéther, de préférence polyéthylèneglycol, polyéthylèneglycol avec au moins un acide gras couplé au polyéthylèneglycol, se terminant par des groupements fonctionnels tels que des polyéthers terminés par des -NH₂ ;
- polymères, copolymères et terpolymères polyacrylamides fonctionnalisés, de préférence poly(acide 2-acrylamido-2-aminopropionique) (poly AMPA), poly(acide 2-acrylamido-2-amino propane sulfonique), poly(N-isopropylacrylamide) (polyPNIPAM) ; copolymère poly(amidoamine-co- acide acrylique), poly(N,N-diméthylacrylamide-co-acrylate de sodium), poly(acrylamide-co-acrylate de sodium)/poly(ethylène glycol) semi-IPN, poly(acrylamide-co-4-styrènesulfonate de sodium), poly(acrylamide-co-méthacrylate de sodium)/poly(éthylène glycol) semi IPN, et/ou poly(N-isopropylacrylamide-co-acide acrylique) et poly(acrylamide-co-acide acrylique) ;
- poly(éther sulfones)/polyéthylèneimine (PES/PEI) ;
- polyvinylpyrrolidone, de préférence poly(N-vinyl-2-pyrrolidone), poly(N-vinyl-2-pyrrolidone-co-acrylonitrile) traité avec de l'hydroxylamine-hydrochlorure ;
- alcool polyvinylique ;
- poly(1-naphtylamine)-acide camphosulfonique.

22. Procédé selon l'une quelconque des revendications 1 à 21, dans lequel l'agent de décoloration polaire est un oligomère polaire synthétique et/ou non synthétique ou un mélange de ceux-ci, de préférence l'oligomère polaire synthétique et/ou non synthétique ou mélange de ceux-ci est sélectionné dans le groupe comprenant les homo-oligomères polaires synthétiques et/ou non synthétiques, co-oligomères polaires synthétiques et/ou non synthétiques, teroligomères polaires synthétiques et/ou non synthétiques, de préférence, en outre, l'oligomère polaire synthétique et/ou non synthétique est sélectionné dans le groupe comprenant :
- oligoacrylate avec méthyle (oligométhylacrylate), éthyle (oligoéthylacrylate), propyle (oligopropylacrylate), ou butyle (oligobutylacrylate),
- oligométhacrylate avec méthyle (oligométhacrylate de méthyle), éthyle (oligométhacrylate d'éthyle), propyle (oligométhacrylate de propyle), ou butyle (oligométhacrylate de butyle),
- co-oligomères d'esters acryliques et méthacryliques incluant, entre autres, tert.-Butyl(méth)acrylate, pentyl(méth)acrylate et 2-éthylhexyl(méth)acrylate ; (Méth)acrylates dérivés d'alcools insaturés, de préférence oléyl(méth)acrylate, 2-propynyl(méth)acrylate, allyl(méth)acrylate, vinyl(méth)acrylate ;
- polymères d'aryl(méth)acrylates, de préférence polymères de benzyl(méth)acrylate ou polymères de phényl(méth)acrylate, les radicaux aryles étant chacun non substitués ou substitués jusqu'à quatre fois ;
- oligomères de cycloalkyl(méth)acrylates, de préférence oligomères de vinylcyclohexyl(méth)acrylate, oligomères de bornyl(méth)acrylate;
- oligomères d'hydroxyalkyl(méth)acrylates, de préférence oligomères de 3-hydroxypropyl(méth)acrylate, oligomères de 3,4-dihydroxybutyl(méth)acrylate, oligomères de 2-hydroxyéthyl(méth)acrylate, oligomères de 2-hydroxypropyl(méth)acrylate;
- oligomères glycol di(méth)acrylates, de préférence oligomères de 1,4-butanediol (méth)acrylate ;
- oligomères (méth)acrylates d'éthers alcooliques, de préférence oligomères de tétrahydrofurfuryl(méth)acrylate, oligomères de vinyloxyéthoxyéthyl(méth)acrylate ;
- oligomères d'amides et nitriles de l'acide (méth)acrylique, de préférence oligomères de N-(3-diméthylaminopropyl)(méth)acrylamide, oligomères de 1-méthacrylamido-2-méthyl-2-propanol;
- oligomères de méthacylates contenant du soufre, de préférence oligomères d'éthylsulfinyléthyl(méth)acrylate, 4-thiocyanatobutyl(méth)acrylate, oligomères d'éthylsulfonyléthyl(méth)acrylate, oligomères de thiocyanatométhyl(méth)acrylate, oligomères de méthylsulfinylméthyl(méth)acrylate, oligomères de bis((méth)acryloyloxyéthyl)sulfure;
- (méth)acrylates oligohydriques, de préférence oligomères de triméthyloylpropanetri(méth)acrylate ;
- oligomères d'acrylonitrile ;
- oligomères d'esters vinyliques, de préférence les oligomères d'acétate de vinyle ;
- oligomères de styrène, oligomères de styrènes substitués avec un substituant alkyle dans la chaîne latérale, de préférence α-méthylstyrène et α-éthylstyrène, oligomères de styrènes substitués avec un substituant alkyle sur le cycle, de préférence vinyltoluène, et p-méthylstyrène, oligomères de styrènes halogénés, de préférence oligomères de monochlorostyrène, oligomères de dichlorostyrène, oligomères de triobromostyrène et tétrabromostyrène ;
- oligomères vinyliques hétérocycliques, de préférence oligomères de 2-vinylpyridine, oligomères de 3-vinylpyridine, oligomères de 2-méthyl-5-vinylpyridine, oligomères de 3-éthyl-4-vinylpyridine, oligomères de 2,3-diméthyl-5-vinylpyridine, oligomères de vinylpyrimidine, oligomères de vinylpiperidine, oligomères de 9-vinylcarbazole, oligomères de 3-vinylcarbazole, oligomères de 4-vinylcarbazole, oligomères de 1-vinylimidazole, oligomères de 2-méthyl-1-vinylimidazole, oligomères de N-vinylpyrrolidone, oligomères de 2-vinylpyrrolidone, oligomères de N-vinylpyrrolidine, oligomères de 3-vinylpyrrolidine, oligomères de N-vinylcaprolactame, oligomères de N-vinylbutyrolactame, oligomères de vinyloxolane, oligomères de vinylfurane, oligomères de vinylthophène, oligomères de vinlythiolane, oligomères de vinylthiazoles et de vinlylthiazoles hydrogénés, vinyloxazoles et vinlyoxazoles hydrogénés ;
- oligomères d'éthers de vinyle et d'isoprényle ;
- oligomères d'acide maléique, de préférence oligomères d'anhydride maléique, oligomères d'anhydride maléique méthylique, oligomères de maléimide, méthylmalélimide ; et
- oligomères de diènes, de préférence oligomères de divinylbenzène ;
- oligomères d'éthylène et propylène avec des esters acryliques, de préférence oligoéthylène-bloc-co-oligométhylméthacrylate, oligopropylène-bloc-co-oligométhylméthacrylate ;
- oligoesters aliphatiques et/ou aromatiques, de préférence oligoesters dendritiques à fonctionnalité hydroxyle, de préférence oligocaprolactone, oligotéréphtalate d'éthylène (PET), oligotéréphtalate de triméthylène (PTT), oligotéréphtalate de butylène (PBT), oligotéréphtalate de glycol glycolisé (G-PET), oligotéréphtalates d'éthylène amorphes (A-PET), oligoesters d'acide téréphtalique, oligospiro-diol-téréphtalate, oligopentaspiroglycol-téréphtalate (PSG), polycyclohexylènediméthylène-téréphtalate, co-oligomère à base d'oligolyester incluant un résidu dérivé d'acide dicarboxylique incluant un résidu dérivé d'un acide dicarboxylique aromatique et un résidu dérivé de diol incluant un résidu dérivé de 4-(hydroxymethyl)cyclohexylmethyl-4'-(hydroxymethyl)cyclohexane carboxylate, co-oligomère à base de polyester incluant un résidu dérivé d'acide dicarboxylique incluant un résidu dérivé d'un acide dicarboxylique aromatique et un résidu dérivé de diol incluant un résidu dérivé de 4,4-(oxybis(méthylène)bis)cyclohexane méthanol ;
- oligocarbonate (PC), oligocarbonate de 2,2-Bis-(4-hydroxyphényl)-propane (Bisphénol A), oligocarbonate de 2,2-Bis-(4-hydroxyphényl)-butane (Bisphénol B), oligocarbonate de 1,1-Bis(4-hydroxyphényl)cyclohexane (Bisphénol C), oligocarbonate de 2, 2'-Méthylènediphénol (Bisphénol F), oligocarbonate de 2,2-Bis(3,5-dibrom-4-hydroxyphényl)propane (Tétrabromobisphénol A) et oligocarbonate de 2,2-Bis(3,5-diméthyl-4-hydroxyphényl)propane (Tétraméthylbisphénol A), oligocarbonate de bisphénol S, oligocarbonate de dihydroxydiphénylsulfure, oligocarbonate de tétraméthylbisphénol A, oligocarbonate de 1,1-Bis(4-hydroxyphényl)-3,3,5-triméthylcyclohexane (BPTMC), oligocarbonate de 1,1,1-Tris(4-hydroxyphényl)-éthane (THPE) ;
- oligoamide aliphatique (PA), de préférence PA 6 basée sur oligocaprolactame, PA 6.6 basée sur 6,6-hexaméthylènediamine et acide adipique, PA 6.66 basé sur caprolactame, co-oligomère d'hexaméthylènediamine et acide adipique, PA 66.610 basé sur hexaméthylènediamine, co-oligomère d'acide adipique et acide sébacique, co-oligomères PA 4.6, PA 10, PA 12 et PA ;
- oligouréthane (PU),
- co-oligomère polaire, co-oligomère oléfine-anhydride maléique ;
- oligoalkylènoxyde, oligomère à blocs d'oligoalkylène, co-oligomère propylèneoxydeéthylènoxyde, co-oligomère d'acrylate de (m)éthylène-anhydride maléique ;
- teroligomère polaire, de préférence teroligomères réactifs d'éthylène, ester acrylique et anhydride maléique, ou éthylène ester méthacrylique et anhydride maléique, ou éthylène, esters acryliques et méthacrylate de glycidyle, ou éthylène, esters méthacryliques et méthacrylate de glycidyle, ou éthylène, esters (méth)acryliques et (méthyl(méth)acrylate) de méthyle, (éthyl(méth)acrylate) d'éthyle, (propyl(méth)acrylate) de propyle, ou (butyl(méth)acrylate) de butyle, oligoamide, oligoester-oligoamides, ou (butyl(méth)acrylate) de butyle, co-oligomères oligoéther-oligoamide ;
- mélanges de co-oligomères polaires, de préférence mélanges oligocarbonate/oligoéthylène téréphtalate (mélanges PC/PET), mélanges oligocarbonate/oligobutylène téréphtalate (mélanges PC/PBT), mélanges d'oligocyclohexylène co-oligomère diméthylène téréphtalate, mélanges d'oligo(butylène-adipate-téréphtalate) ;
- oligoacrylonitrile et copolymères oligoacrylonitrile, de préférence oligo acrylonitrile butadiène styrène (ABS), oligo styrène-acrylonitrile ;
- oligostyrène et co-oligomères de polystyrène, de préférence co-oligomère styrène/butadiène (SBR), oligo styrène-isporène-styrène (SIS), oligo(méthacrylate de glycidyle) greffé sur une résine oligostyrène à base de sulfonamide avec une amine tertiaire ;
- éthylène- acétate de vinyle ;
- oligoéther, de préférence oligoéthylèneglycol, oligoéthylèneglycol avec au moins un acide gras couplé à l'oligoéthylèneglycol, se terminant par des groupements fonctionnels tels que des oligoéthers terminés par des -NH₂ ;
- oligomères, co-oligomères et teroligomères oligoacrylamides fonctionnalisés, de préférence oligo(acide 2-acrylamido-2-aminopropionique) (oligo AMPA), oligo(acide 2-acrylamido-2-amino propane sulfonique), oligo(N-isopropylacrylamide) (oligoPNIPAM) ; co-oligomère oligo(amidoamine-co- acide acrylique), oligo(N,N-diméthylacrylamide-co-acrylate de sodium), oligo(acrylamide-co-acrylate de sodium)/ oligo(ethylène glycol) semi-IPN, oligo(acrylamide-co-4-styrènesulfonate de sodium), oligo(acrylamide-co-méthacrylate de sodium)/ oligo(éthylène glycol) semi IPN, et/ou oligo(N-isopropylacrylamide-co-acide acrylique) et oligo(acrylamide-co-acide acrylique) ;
- oligo(éther sulfones)/ oligoéthylèneimine (PES/PEI) ;
- oligovinylpyrrolidone, de préférence oligo(N-vinyl-2-pyrrolidone), oligo(N-vinyl-2-pyrrolidone-co-acrylonitrile) traité avec de l'hydroxylamine-hydrochlorure ;
- alcool oligovinylique ;
- oligo(1-naphtylamine)-acide camphosulfonique.

23. Procédé selon l'une quelconque des revendications 1 à 22, dans lequel l'agent de décoloration polaire est un additif polaire synthétique et/ou non synthétique ayant une Mw de ≥ 70 g/mol et < à 600 g/mol, de préférence l'additif polaire synthétique et/ou non synthétique ayant une Mw de ≥ 70 g/mol et < à 600 g/mol est sélectionné dans le groupe comprenant des acides aliphatiques, des acides CH₃-[CH₂]ₙ-COOH (n ≥ 3), acides aminés, amide d'acide carboxylique, acides hydroxyles, acides gras, aldéhydes et cétones aliphatiques ou aliphatiques/aromatiques, esters, pentaérythritol, ester pentaérythritol, de préférence ester d'acide carboxylique, esters d'acide benzoïque comprenant benzoate de benzyle ou benzoate de phényle, phényléther, alcools et alcools polyvalents, de préférence glycérine, amines et/ou mélange de ceux-ci ; et
dans lequel l'additif polaire synthétique et/ou non synthétique est sélectionné différemment de l'agent de coloration aromatique organique ayant une masse moléculaire moyenne en poids Mw dans la plage de ≥ 250 g/mol à < 550 g/mol et est solide à 23°C, et préférentiellement exempt de colorant.

24. Procédé selon l'une quelconque des revendications 1 à 23, dans lequel l'agent de décoloration polaire est ajouté au matériau coloré pour décoloration dans un ratio massique de 0,1:1 à 100:1, de préférence de 0,5:1 à 80:1, de préférence, en outre, de 1:1 à 60:1, et également de 2:1 à 50:1, de préférence, additionnellement, de 2,5:1 à 25:1, plus préférentiellement de 3:1 à 10:1 et préférentiellement, en outre, de 3,3:1 à 5:1.

25. Procédé selon l'une quelconque des revendications 1 à 24, dans lequel le polymère non-polaire est sélectionné dans le groupe des polymères de polyalkylène, copolymères de polyalkylène, copolymères à blocs de polyalkylène ; le polymère non-polaire est de préférence sélectionné dans le groupe des polymères aliphatiques ou hydrocarbures aromatiques, de préférence polymères de polyalkylène, co- et terpolymères de polyalkylène ayant une structure aléatoire ou à blocs ; et plus préférentiellement de polyéthylène (PE), polypropylène (PP), polybutène (PB), polystyrène, polyisobutylène, polybutadiène, polyisoprène.

26. Procédé selon l'une quelconque des revendications 1 à 25, dans lequel l'étape d'exposition du matériau polymère polaire synthétique et/ou non synthétique coloré au solvant polaire pour décoloration comprend,
- l'agitation du matériau polymère polaire synthétique et/ou non synthétique coloré dans le solvant polaire alors que la surface externe du matériau polymère polaire synthétique et/ou non synthétique coloré est exposée au solvant polaire ; et/ou
- l'exposition de l'écoulement de solvant polaire à la surface externe du matériau polymère polaire synthétique et/ou non synthétique coloré ; et/ou
- le déplacement du matériau polymère polaire synthétique et/ou non synthétique coloré à travers le solvant polaire.
